# EUROPEAN PATENT APPLICATION

(11) **EP 1 727 042 A1**
(43) Date of publication of application: **29.11.2006**
(21) Application number: 05720587.4
(22) Date of filing: 11.03.2005
(51) Int. Cl.: G06F 9/445, G06F 15/00, G06K 17/00

(54) **DATA PROCESSING DEVICE, DATA PROCESSING METHOD, AND DATA PROCESSING PROGRAM**

(30) Priority: 18.03.2004 JP 2004078942
(71) Applicant: NEC CORPORATION, Minato-ku, Tokyo 108-8001 (JP)
(72) Inventor: OCHIAI, Katsuhiro, c/o NEC CORPORATION, Tokyo 1088001 (JP); KOSEKI, Yoshiyuki, c/o NEC CORPORATION, Tokyo 1088001 (JP); TABUCHI, Masahiro, c/o NEC CORPORATION, Tokyo 1088001 (JP); SAKAGAMI, Hidekazu, c/o NEC CORPORATION, Tokyo 1088001 (JP); KOIKE, Yuichi, c/o NEC CORPORATION, Tokyo 1088001 (JP); NOBUTO, Rina, c/o NEC CORPORATION, Tokyo 1088001 (JP); SOGO, Takushi, c/o NEC CORPORATION, Tokyo 1088001 (JP)
(74) Representative: Betten & Resch
(86) International application number: PCT/JP2005/004316
(87) International publication number: WO 2005/091132

(57) **Abstract**

A data processing device includes means (103) for receiving a signal of an object identifier uniquely assigned to an object, and means (104) for executing a plurality of application programs corresponding to the received object identifier. A plurality of applications can be processed on the basis of an object identifier so that the operation can be simplified. When the device include a client terminal (105) and an application server (108), data processing is possible even when they are located in remote sites.

## Description

### Technical Field

The present invention relates to a data processing device, data processing method, and data processing program.

### Background Art

Regarding a conventional data processing system, Japanese Patent Laid-Open Nos. 2001-101773 (reference 1) and 2002-312269 (reference 2) describe, by different expressions, methods of referring to data existing on a server by using a unique object identifier (the information of an identifier that uniquely specifies a recording medium will be referred to as an object identifier hereinafter).

As described in references 1 and 2, the conventional techniques use a mechanism that enables to refer to unique data on a server in correspondence with a recording medium (e.g., a barcode or RFID (Radio Frequency IDentification) tag using wireless communication) that stores an object identifier. With this mechanism, a user holds an object with a recording medium storing an object identifier on a recording medium reading means (e.g., a barcode reader or RFID reader). When the object identifier stored in the recording medium is read, data on a server, which corresponds to the object identifier, can easily be referred to. In the methods described in references 1 and 2, a data entity is separated from a recording medium storing an object identifier and stored in a server, only the recording medium is distributed, thereby reducing the data distribution cost.

### Disclosure of Invention

### Problems to be Solved by the Invention

The methods described in references 1 and 2 however assume practice of a single-function service. For example, the arrangement described in reference 1 executes a single service "music data playback" to play back music on the basis of an object identifier corresponding to each music data. Alternatively, the arrangement executes a single service "download" to download music data corresponding to each object identifier. That is, this arrangement only makes an object identifier correspond to "data", i.e., music data. Reference 1 also mentions that "any information to specify a processing target can be used", and for example, "a desired operation can be executed by only reading a barcode" for an instruction manual of household electric appliances. The described arrangement assumes that each operation is regarded as "data", and the data is processed by a single service "instruction manual service" capable of interpreting the data.

Even in the method described in reference 2, data, i.e., an information page corresponding to each object identifier is processed on a single service "information providing service".

For this reason, it is impossible to assign arbitrary object identifiers independently of the contents of a service or data to a service that changes depending on the object identifier and cause each service to process data that changes depending on the object identifier. In addition, it is impossible to make one of arbitrary object identifiers independently of the contents of a service or data correspond to a plurality of services simultaneously and cause each corresponding service to process the data depending on the object identifier.

The above-described problems are posed because an object identifier independently of the contents of a service or data assumes use in a single service, and therefore, an object identifier and data or a limited function ("operation" in reference 1) in a service are made to correspond to each other so that the object identifier is valid only in that service.

For example, paragraphs [0017] to [0032] of reference 1 describe that a barcode (first information) corresponding to the object identifier of the present invention is assigned as an identifier of music data, and music data (second information) represented by a barcode is played back by reading the barcode (corresponding to the service of the present invention). Different music data can be made to correspond to barcodes so that different pieces of music can be played back. On the other hand, the function of "playing back" music data is provided in the second information processing unit itself. Hence, it is impossible to make music data correspond to each barcode and also arbitrarily make a music data processing method (e.g., "playback", "record", or "erase") correspond to each barcode. That is, it is impossible to realize a combination of "barcode 1", "music data 1", and "playback" or "barcode 2", "music data 2", and "erase".

In reference 1, arbitrary data and an arbitrary service cannot simultaneously be assigned to one object identifier. Hence, one object identifier cannot simultaneously be assigned to a plurality of combinations of services and data. For example, barcode 1 cannot be assigned to two different sets: "music data" and "music data playback", and "form communication message" and "e-mail send".

It is an object of the present invention to simplify an operation by processing a plurality of applications on the basis of an object identifier (data to specify an object) such as a barcode or RFID attached to an article.

It is another object of the present invention to process data even when a terminal and a main body are located at separate sites.

### Means of Solution to the Problems

A data processing device according to the present invention is characterized by comprising identifier reading means for receiving a signal of an object identifier uniquely assigned to an object, and application program execution means for executing a plurality of application programs corresponding to the received object identifier.

A data processing method according to the present invention is characterized by comprising the steps of receiving a signal of an object identifier uniquely assigned to an object, and executing a plurality of application programs corresponding to the received object identifier.

A data processing program according to the present invention is characterized by causing a computer to execute processing of receiving a signal of an object identifier uniquely assigned to an object, and executing a plurality of application programs corresponding to the received object identifier.

### Effect of the Invention

According to the present invention, a plurality of application programs correspond to an object identifier. A plurality of applications can be processed on the basis of an object identifier so that the operation can be simplified.

According to the present invention, since the device include a client terminal and an application server , data processing is possible even when they are located in remote sites.

### Brief Description of Drawings

Fig. 1 is a block diagram showing an arrangement example of the first embodiment of the present invention;
Fig. 2 is a flowchart for explaining the operation of the first embodiment of the present invention;
Fig. 3 is a block diagram for explaining the arrangement of a detailed example of the first embodiment of the present invention;
Fig. 4 is a flowchart for explaining the operation of a detailed example of the first embodiment of the present invention;
Fig. 5 is a block diagram for explaining the arrangement of another detailed example of the first embodiment of the present invention;
Fig. 6 is a flowchart for explaining the operation of another detailed example of the first embodiment of the present invention;
Fig. 7 is a block diagram showing an arrangement example of the second embodiment of the present invention;
Fig. 8 is a flowchart for explaining the operation of the second embodiment of the present invention;
Fig. 9 is a block diagram for explaining the arrangement of a detailed example of the second embodiment of the present invention;
Fig. 10 is a flowchart for explaining the operation of a detailed example of the second embodiment of the present invention;
Fig. 11 is a block diagram showing an arrangement example of the third embodiment of the present invention;
Fig. 12 is a flowchart for explaining the operation of the third embodiment of the present invention;
Fig. 13 is a block diagram for explaining the arrangement of a detailed example of the third embodiment of the present invention;
Fig. 14 is a flowchart for explaining the operation of a detailed example of the third embodiment of the present invention;
Fig. 15 is a block diagram showing an arrangement example of the fourth embodiment of the present invention;
Fig. 16 is a flowchart for explaining the operation of the fourth embodiment of the present invention;
Fig. 17 is a block diagram for explaining the arrangement of a detailed example of the fourth embodiment of the present invention;
Fig. 18 is a flowchart for explaining the operation of a detailed example of the fourth embodiment of the present invention;
Fig. 19 is a block diagram showing an arrangement example of the fifth embodiment of the present invention;
Fig. 20A is a flowchart for explaining the operation of the fifth embodiment of the present invention;
Fig. 20B is a flowchart for explaining the operation of the fifth embodiment of the present invention;
Fig. 21 is a block diagram for explaining the arrangement of a detailed example of the fifth embodiment of the present invention;
Fig. 22 is a flowchart for explaining the operation of a detailed example of the fifth embodiment of the present invention;
Fig. 23 is a block diagram showing an arrangement example of the sixth embodiment of the present invention;
Fig. 24A is a flowchart for explaining the operation of the sixth embodiment of the present invention;
Fig. 24B is a flowchart for explaining the operation of the sixth embodiment of the present invention;
Fig. 25 is a block diagram for explaining the arrangement of a detailed example of the sixth embodiment of the present invention;
Fig. 26 is a flowchart for explaining the operation of a detailed example of the sixth embodiment of the present invention;
Fig. 27 is a block diagram showing an arrangement example of the seventh embodiment of the present invention;
Fig. 28 is a flowchart for explaining the operation of the seventh embodiment of the present invention;
Fig. 29 is a block diagram showing another arrangement example of the seventh embodiment of the present invention;
Fig. 30 is a block diagram for explaining the arrangement of a detailed example of the seventh embodiment of the present invention;
Fig. 31 is an explanatory view showing an arrangement example of an electrophotographic selection album according to a detailed example of the seventh embodiment of the present invention;
Fig. 32 is a flowchart for explaining the operation of a detailed example of the seventh embodiment of the present invention;
Fig. 33 is a block diagram showing an arrangement example of the eighth embodiment of the present invention;
Fig. 34 is a flowchart for explaining the operation of the eighth embodiment of the present invention;
Fig. 35 is a block diagram showing another arrangement example of the eighth embodiment of the present invention;
Fig. 36 is a block diagram for explaining the arrangement of a detailed example of the eighth embodiment of the present invention;
Fig. 37 is an explanatory view showing an arrangement example of one page of a magazine according to a detailed example of the eighth embodiment of the present invention;
Fig. 38 is a flowchart for explaining the operation of a detailed example of the eighth embodiment of the present invention;
Fig. 39 is a block diagram showing an arrangement example of the ninth embodiment of the present invention;
Fig. 40 is a flowchart for explaining the operation of the ninth embodiment of the present invention;
Fig. 41 is a block diagram showing another arrangement example of the ninth embodiment of the present invention;
Fig. 42 is a block diagram for explaining the arrangement of a detailed example of the ninth embodiment of the present invention;
Fig. 43 is a flowchart for explaining the operation of a detailed example of the ninth embodiment of the present invention;
Fig. 44 is a block diagram showing an arrangement example of the 10th embodiment of the present invention;
Fig. 45 is a flowchart for explaining the operation of the 10th embodiment of the present invention;
Fig. 46 is a block diagram showing another arrangement example of the 10th embodiment of the present invention;
Fig. 47 is a block diagram for explaining the arrangement of a detailed example of the 10th embodiment of the present invention;
Fig. 48 is a flowchart for explaining the operation of a detailed example of the 10th embodiment of the present invention;
Fig. 49 is a block diagram showing an arrangement example of the 11th embodiment of the present invention;
Fig. 50 is a flowchart for explaining the operation of the 11th embodiment of the present invention;
Fig. 51 is a block diagram for explaining the arrangement of a detailed example of the 11th embodiment of the present invention;
Fig. 52 is a view showing a description example of URI information;
Fig. 53 is an explanatory view showing an example of a window displayed on the display unit of a customer's client terminal in a detailed example of the 11th embodiment of the present invention; and
Fig. 54 is a flowchart for explaining the operation of a detailed example of the 11th embodiment of the present invention.

### Best Mode for Carrying Out the Invention

### First Embodiment

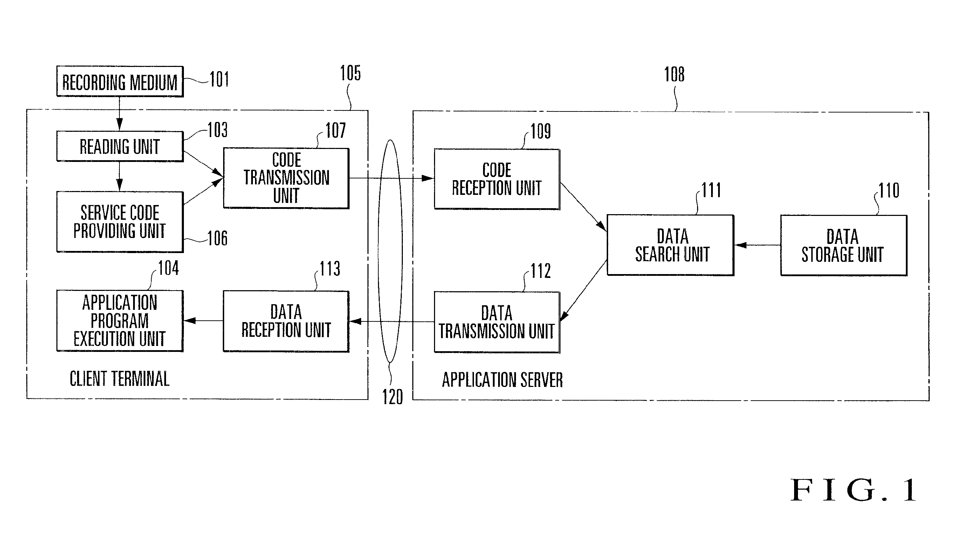

The first embodiment of the present invention will be described with reference to the accompanying drawings. Fig. 1 is a block diagram showing an arrangement example of the first embodiment of the present invention.

The first embodiment of the present invention includes a recording medium 101, client terminal 105, application server 108, and communication network 120.

The recording medium 101 stores a unique object identifier. The client terminal 105 includes a reading unit (identifier reading means) 103, service code providing unit (service code providing means) 106, code transmission unit (code transmission means) 107, data reception unit (data reception means) 113, and application program execution unit (application program execution means) 104. The reading unit 103 reads the object identifier stored in the recording medium 101. The service code providing unit 106 stores in advance a service code as information indicating an application program to implement a service provided by the data processing system according to the first embodiment of the present invention. The code transmission unit 107 transmits the object identifier and service code to the application server 108 through the communication network 120. The data reception unit 113 receives data from the application server 108 through the communication network 120. The application program execution unit 104 executes an application program installed in the client terminal 105.

The application server 108 includes a code reception unit (code reception means) 109, data storage unit (data storage means) 110, data search unit (data search means) 111, and data transmission unit (data transmission means) 112. The code reception unit 109 receives the object identifier and service code from the client terminal 105 through the communication network 120. The data storage unit 110 stores data in advance. The data search unit 111 searches for and extracts data stored in the data storage unit 110. The data transmission unit 112 transmits data to the client terminal 105 through the communication network 120.

When the recording medium 101 moves close to or contacts the reading unit 103, the reading unit 103 reads the object identifier stored in the recording medium 101. Upon reading the object identifier, the reading unit 103 notifies the service code providing unit 106 that the object identifier is read.

In the client terminal 105, the application program execution unit 104 is executing an application program to process data received from the application server 108. The service code providing unit 106 stores in advance a service code corresponding to the application program. More specifically, the service code providing unit 106 stores a service code corresponding to the application program at a predetermined position of the storage unit (not shown) of the client terminal 105.

Upon receiving the object identifier read by the reading unit 103 and the service code stored by the service code providing unit 106, the code transmission unit 107 transmits the received object identifier and service code to the code reception unit 109 of the application server 108 through the communication network 120.

The data storage unit 110 stores data to be input to the application program represented by the service code uniquely in correspondence with the set of the object identifier and service code.

The code reception unit 109 inputs the received object identifier and service code to the data search unit 111. The data search unit 111 searches for data corresponding to the received set of the object identifier and service code from the data stored in the data storage unit 110 and extracts the data. The data transmission unit 112 transmits the data received from the data search unit 111 to the data reception unit 113 of the client terminal 105 through the communication network 120.

The data reception unit 113 inputs the received data to the application program execution unit 104. The application program execution unit 104 manipulates the data received from the data reception unit 113 and displays it on the display unit (not shown) of the client terminal 105 or executes an operation instructed by the data on the basis of the running application program.

The reading unit 103 may be a part of the client terminal 105 or may be connected to the outside of the client terminal through a communication interface.

The data storage unit 110 and data search unit 111 may be included in another server connected to the application server 108 so as to operate through the application server 108.

The data transmission unit 112 may manipulate the transmission data by a predetermined manipulation method to transmit it through the communication network 120.

If the application program is not activated when the data from the application server 108 is received by the data reception unit 113, the application program execution unit 104 may activate the application program so that the data reception unit 113 can input the data to the application program execution unit 104 that is executing the application program.

The application program can form either one program file by itself or a partial function of a program file.

The data storage unit 110 can store data to be input to an application program represented by a service code uniquely in correspondence with a set of an object identifier and a service code either before or after the object identifier is stored in the recording medium 101. If data is stored after storing an object identifier in the recording medium 101, first, one service is made to correspond to a set of an object identifier and a service code. Then, the service can be made to correspond to a plurality of sets of object identifiers and service codes sequentially.

The service code providing unit 106 will be described. The service code providing unit 106 is included in the client terminal 105 and stores service codes that correspond to a plurality of application programs to be executed by the application program execution unit 104 and can uniquely identify application programs. When notified by the reading unit 103 that an object identifier is read, the service code providing unit 106 specifies a service code corresponding to an application program that is being executed by the application program execution unit 104 on the basis of the correspondence between the service code and the application program executed by the application program execution unit 104, and outputs the specified service code to the code transmission unit 107.

The service code providing unit 106 may be incorporated in the application program execution unit 104 and output, to the code transmission unit 107, a unique service code corresponding to the application program executed by the application program execution unit 104.

The application program execution unit 104 may input the service code of the running application program to the service code providing unit 106. The service code providing unit 106 may output the service code received from the application program execution unit 104 to the code transmission unit 107.

The service code providing unit 106 may store an object identifier stored in the recording medium 101 uniquely in correspondence with an application program. When the reading unit 103 reads an object identifier, the service code providing unit 106 may output, to the code transmission unit 107, a service code representing the application program corresponding to the object identifier read by the reading unit 103.

When the service code providing unit 106 makes an object identifier correspond to an application program or the service code of an application program, a plurality of object identifiers may be handled as a set so that an application program or the service code of an application program may be made to correspond to the set. Additionally, at this time, the set of object identifiers may specify the reading order of the reading unit 103.

The service code providing unit 106 may store a plurality of service codes in correspondence with one object identifier. Which one of the plurality of service codes corresponding to the object identifier read by the reading unit 103 should be output to the code transmission unit 107 may be decided by the user of the client terminal 105. The service code providing unit 106 may have a mechanism to promote the user of the client terminal 105 to decide the service code to be output to the code transmission unit 107 when the reading unit 103 reads an object identifier for the first time. If the reading unit 103 reads the object identifier for the second or subsequent time, the service code precedingly decided by the user of the client terminal 105 may automatically be output to the code transmission unit 107.

The service code providing unit 106 may acquire a service code from a recording medium different from the recording medium 101 storing the object identifier. In this case, the reading unit 103 reads the service code from the other recording medium before or after the object identifier acquisition timing. The other recording medium records a service code.

The client terminal 105 incorporates a data processing program that causes a computer to execute processing of reading an object identifier, processing of transmitting a service code and object identifier to the application server 108, processing of receiving data from the application server 108, and processing of inputting the received data to the application program represented by the service code.

The application server 108 incorporates a data processing program that causes a computer to execute processing of receiving an object identifier and service code from the client terminal 105 through the communication network 120, processing of extracting data corresponding to the received service code and object identifier from the data storage unit 110 that stores data in correspondence with sets of object identifiers and service codes, and processing of transmitting the extracted data to the client terminal 105 through the communication network 120.

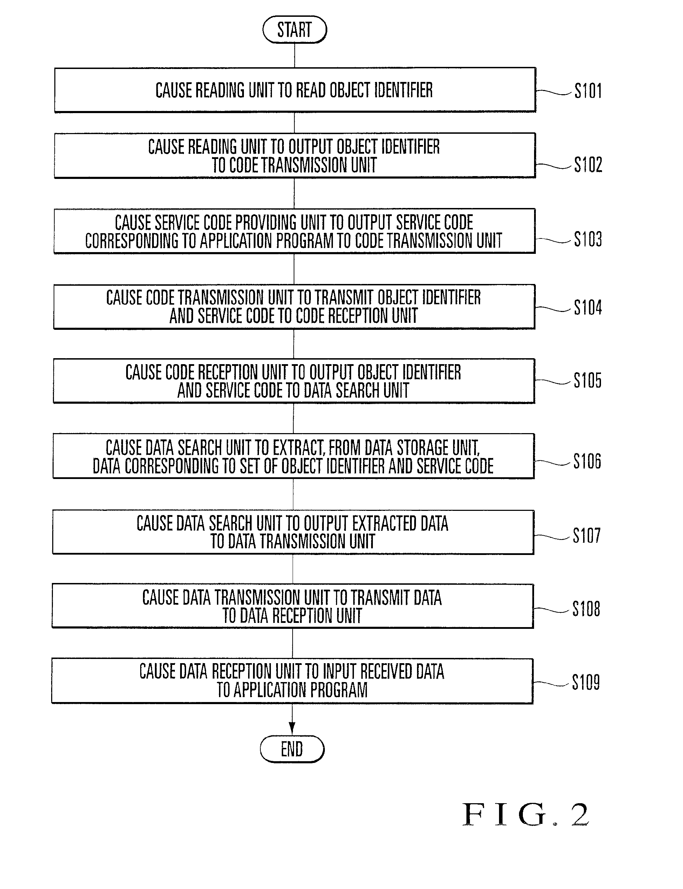

The operation of the first embodiment of the present invention will be described next with reference to the accompanying drawings. Fig. 2 is a flowchart for explaining the operation of the first embodiment of the present invention.

The reading unit 103 reads an object identifier stored in the recording medium 101 (step S101). The reading unit 103 outputs the read object identifier to the code transmission unit 107 (step S102). The reading unit 103 also notifies the service code providing unit 106 that the object identifier is read.

When notified by the reading unit 103 that the object identifier is read, the service code providing unit 106 outputs, to the code transmission unit 107, a service code corresponding to the application program that is being executed by the application program execution unit 104 (step S103).

The code transmission unit 107 transmits the object identifier and service code to the code reception unit 109 of the application server 108 through the communication network 120 (step S104). The code reception unit 109 outputs the received object identifier and service code to the data search unit 111 (step S105).

The data search unit 111 searches for data corresponding to set of the object identifier and service code from the data stored in the data storage unit 110 and extracts the data (step S106). The data search unit 111 outputs the extracted data to the data transmission unit 112 (step S107).

The data transmission unit 112 transmits the data to the data reception unit 113 of the client terminal 105 through the communication network 120 (step S108). The data reception unit 113 inputs the received data to the application program execution unit 104 that is executing the application program (step S109).

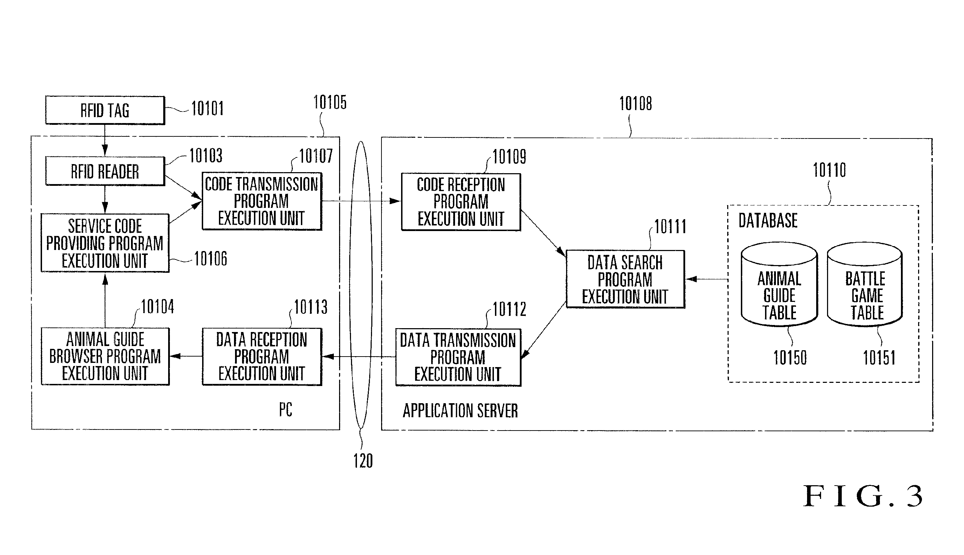

The first embodiment of the present invention will be described next by using a detailed example. Fig. 3 is a block diagram for explaining the arrangement of a detailed example of the first embodiment of the present invention.

A detailed example of the first embodiment of the present invention includes an RFID tag 10101, PC (Personal Computer) 10105, application server 10108, and communication network 120.

The RFID tag 10101 stores an object identifier. The PC 10105 includes an RFID reader 10103, service code providing program execution unit 10106, code transmission program execution unit 10107, data reception program execution unit 10113, and animal guide browser program execution unit 10104. The RFID reader 10103 reads the object identifier stored in the RFID tag 10101. The service code providing program execution unit 10106 implements the service code providing unit 106 and executes a service code providing program that causes the PC 10105 to read out, from a predetermined position of a storage unit (not shown) incorporated in the PC 10105, a service code serving as information representing the application program that is being executed by the application program execution unit 104 and output the service code. The code transmission program execution unit 10107 implements the code transmission unit 107 and executes a code transmission program that causes the PC 10105 to transmit the object identifier and service code to the application server 10108 through the communication network 120. The data reception program execution unit 10113 implements the data reception unit 113 and executes a data reception program that causes the PC 10105 to receive data from the application server 10108 through the communication network 120. The animal guide browser program execution unit 10104 implements the application program execution unit 104 and executes an animal guide browser program that displays animal guide data on the display unit (not shown) of the PC 10105.

RFID in the detailed example stands for Radio Rrequency IDentification that is a general term for individual recognition technologies by wireless communication. The RFID tag 10101 includes a storage unit (not shown) to store an identifier or data and a wireless communication device (not shown). The RFID reader 10103 includes a wireless communication device (not shown) to read the identifier or data from the RFID tag 10101. Assume that the RFID tag 10101 has a function of storing an object identifier as a read-only unique identifier and transmitting only the object identifier to the RFID reader 10103. The RFID tag 10101 stores an object identifier "A514CZ".

The application server 10108 includes a code reception program execution unit 10109, database 10110, data search program execution unit 10111, and data transmission program execution unit 10112. The code reception program execution unit 10109 implements the code reception unit 109 and executes a code reception program that causes the application server 10108 to receive the object identifier and service code from the PC 10105 through the communication network 120. The database 10110 implements the data storage unit 110 and stores data. The data search program execution unit 10111 implements the data search unit 111 and executes a data search program that causes the application server 10108 to search for and extract data stored in the database 10110. The data transmission program execution unit 10112 implements the data transmission unit 112 and executes a data transmission program that causes the application server 10108 to transmit the data to the PC 10105 through the communication network 120.

The database 10110 includes an animal guide table 10150 as a data table of an animal guide and a battle game table 10151 as a data table of a battle game.

The PC 10105 and application server 10108 are connected through the communication network 120. The communication network 120 is implemented by, e.g., the Internet.

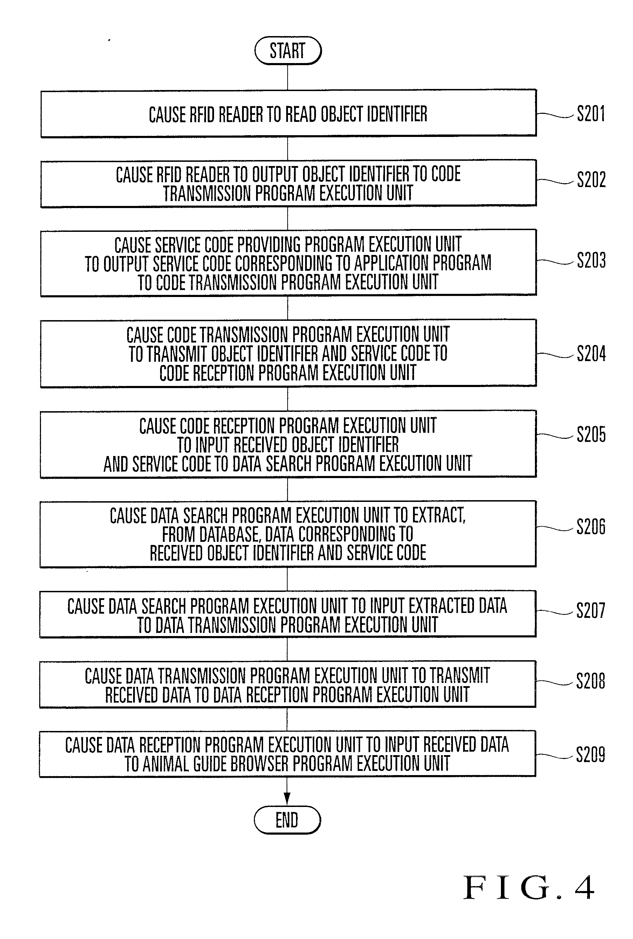

The operation of a detailed example of the first embodiment of the present invention will be described next with reference to the accompanying drawings. Fig. 4 is a flowchart for explaining the operation of a detailed example of the first embodiment of the present invention.

The user of the PC 10105 moves the RFID tag 10101 close to the RFID reader 10103 so that the RFID reader 10103 reads the object identifier stored in the RFID tag 10101 (step S201). The object identifier is "A514CZ". The RFID reader 10103 outputs the read object identifier "A514CZ" to the code transmission program execution unit 10107 (S202). The RFID reader 10103 also notifies the service code providing program execution unit 10106 that the object identifier is read.

At this time, the application program execution unit 104 of the PC 10105 is executing the animal guide browser program. When notified by the RFID reader 10103 that the object identifier is read, the service code providing program execution unit 10106 specifies the application program that is being executed by the PC 10105 by using the function of the OS (Operation System). The service code providing program execution unit 10106 specifies that the application program that is being executed by the PC 10105 is a known application program, i.e., the animal guide browser program. The service code providing program execution unit 10106 searches for a service code corresponding to the animal guide browser program, which is stored in the storage unit of the PC 10105, and specifies that the service code corresponding to the animal guide browser program is "S001". The service code providing program execution unit 10106 outputs the specific service code "S001" to the code transmission program execution unit 10107 (step S203).

The code transmission program execution unit 10107 transmits the object identifier "A514CZ" and service code "S001" to the code reception program execution unit 10109 of the application server 10108 through the communication network 120 (step S204).

Upon receiving the object identifier "A514CZ" and service code "S001", the code reception program execution unit 10109 outputs the received object identifier "A514CZ" and service code "S001" to the data search program execution unit 10111 (step S205).

The database 10110 of the application server 10108 has data tables corresponding to two application programs. The data table for the animal guide browser program is the animal guide table 10150. The data table for the battle game program (e.g., service code "002") is the battle game table 10151.

The data search program execution unit 10111 selects, from the database 10110, the table corresponding to the service code "S001" output from the code reception program execution unit 10109 and decides to search the animal guide table 10150 corresponding to the service code "S001". The data search program execution unit 10111 searches the animal guide table 10150 for data stored in correspondence with the object identifier "A514CZ" and extracts data "brown bear" corresponding to the object identifier "A514CZ" (step S206).

The data search program execution unit 10111 outputs the extracted data "brown bear" to the data transmission program execution unit 10112 (step S207). The data transmission program execution unit 10112 transmits the data "brown bear" to the data reception program execution unit 10113 of the PC 10105 through the communication network 120 (step S208).

Upon receiving the data "brown bear", the data reception program execution unit 10113 inputs the data "brown bear" to the animal guide browser program execution unit 10104. The animal guide browser program execution unit 10104 displays, e.g., a text "This is a brown bear" on the display unit of the PC 10105 on the basis of the received data "brown bear".

In the above-described way, when the RFID tag 10101 is moved close to the RFID reader 10103, the data "brown bear" corresponding to the object identifier "A514CZ" can be input to the running animal guide browser program so that the data stored in the database 10110 of the application server 10108 can be displayed on the display unit of the PC 10105.

The RFID tag 10101 may be implanted in an arbitrary object such as a figure of a brown bear or a paper sheet with a picture of a brown bear.

In this detailed example, the application program that is being executed by the PC 10105 when the RFID reader 10103 reads the object identifier "A514CZ" is the animal guide browser program. If the PC 10105 is executing another application program, i.e., battle game, the service code providing program execution unit 10106 outputs a service code "S002" to the code transmission program execution unit 10107. The code transmission program execution unit 10107 outputs the object identifier "A514CZ" and service code "S002" to the code reception program execution unit 10109 through the communication network 120. The code reception program execution unit 10109 outputs the object identifier "A514CZ" and service code "S002" to the data search program execution unit 10111. On the basis of the received object identifier "A514CZ" and service code "S002", the data search program execution unit 10111 searches the battle game table 10151, extracts data (e.g., data used in the battle game such as Attack "10" or Vitality "21"), and outputs the data to the data transmission program execution unit 10112. The data transmission program execution unit 10112 transmits the received data to the data reception program execution unit 10113 of the PC 10105 through the communication network 120. The data reception program execution unit 10113 inputs the received data to the application program execution unit 104 that is executing the battle game.

As described above, the application server 10108 can provide different data such as "brown bear" and "Attack 10 and Vitality 21" to the PC 10105 in correspondence with the single object identifier "A514CZ".

Another operation of the RFID reader 10103 and service code providing program execution unit 10106 will be described here.

The service code providing program execution unit 10106 stores in advance the animal guide browser program (service code "S001") and battle game program (service code "S002") at predetermined positions of the storage unit of the PC 10105 as known application programs.

The RFID reader 10103 outputs the read object identifier to the service code providing program execution unit 10106. Assume that the RFID tag 10101 is an RFID tag implanted in a figure that is newly bought by the user of the PC 10105, and the RFID reader 10103 reads the object identifier "A514CZ" for the first time.

The service code providing program execution unit 10106 displays, on the display unit of the PC 10105, a window to make the user to select one of the stored application programs to be made to correspond to the object identifier "A514CZ". The user selects, e.g., the "animal guide browser". The service code providing program execution unit 10106 stores the object identifier "A514CZ" at a predetermined position of the storage unit in correspondence with the service code "S001" corresponding to the "animal guide browser".

From this time, when the RFID reader 10103 reads the object identifier "A514CZ", the service code providing program execution unit 10106 automatically selects the service code "S001" corresponding to the object identifier "A514CZ" and outputs them to the code transmission program execution unit 10107. Hence, the PC 10105 can automatically obtain the data "brown bear" from the application server 10108.

If a specific application program is made to correspond to the object identifier, the PC 10105 need not always be executing the animal guide browser program when the RFID reader 10103 reads the object identifier "A514CZ". The service code providing program execution unit 10106 registers, in the storage unit of the PC 10105, how to activate the application program (e.g., in a normal OS, the file path of the program file of the application program and an activation option) in making the application program correspond to the service code. If the PC 10105 is not executing the animal guide browser program upon reading the object identifier "A514CZ", e.g., the service code providing program execution unit 10107 activates the animal guide browser program by the registered activation method.

In this arrangement, if the same animal guide browser program runs in another environment, i.e., in the PC 10105 with another capability (e.g., image display capability), the animal guide browser program runs in a different environment with, e.g., a different image display capability. There is no serious problem if the data to be displayed is descriptive text data of "brown bear". However, if the data stored in the animal guide table 10150 is image data or audio data of a brown bear, the reproducibility depends on the computer environment to reproduce the data. In this case, a service code is made to correspond to each of different computer environments, a table is created in the database 10110 for each service code corresponding to an environment, and data is stored in each table.

Another storage method of the animal guide table 10150 in the database 10110 will be described.

If the RFID reader 10103 has a function of continuously reading a plurality of object identifiers from the RFID tag 10101 and other RFID tags (assume that the object identifier is "A514QR"), the code transmission program execution unit 10107 transmits the plurality of object identifiers and the service code of the application program that is being executed by the PC 10105 to the application server 10108.

The animal guide table 10150 is designed to make one service code and one data correspond to a set of a plurality of object identifiers. In this case, data "brown bear" is stored in correspondence with a set of object identifiers "A514CZ" and "A514QR".

The code reception program execution unit 10109 outputs the received plurality of object identifiers and service code to the data search program execution unit 10111.

The data search program execution unit 10111 selects the animal guide table 10150 corresponding to the service code "S001" and extracts the data "brown bear" corresponding to the set of object identifiers "A514CZ" and "A514QR".

If the combination of object identifiers read by the RFID reader 10103 includes "A514CZ" and "A555TY", the data search program execution unit 10111 refers to a record different from the set of "A514CZ" and "A514QR" and extracts different data.

The combination may be based on a specific order. In this case, if the RFID reader 10103 reads the same set of object identifiers in a different order, order information representing the object identifier read order is output to the code transmission program execution unit 10107. The animal guide table 10150 stores data corresponding to the object identifier set and order information.

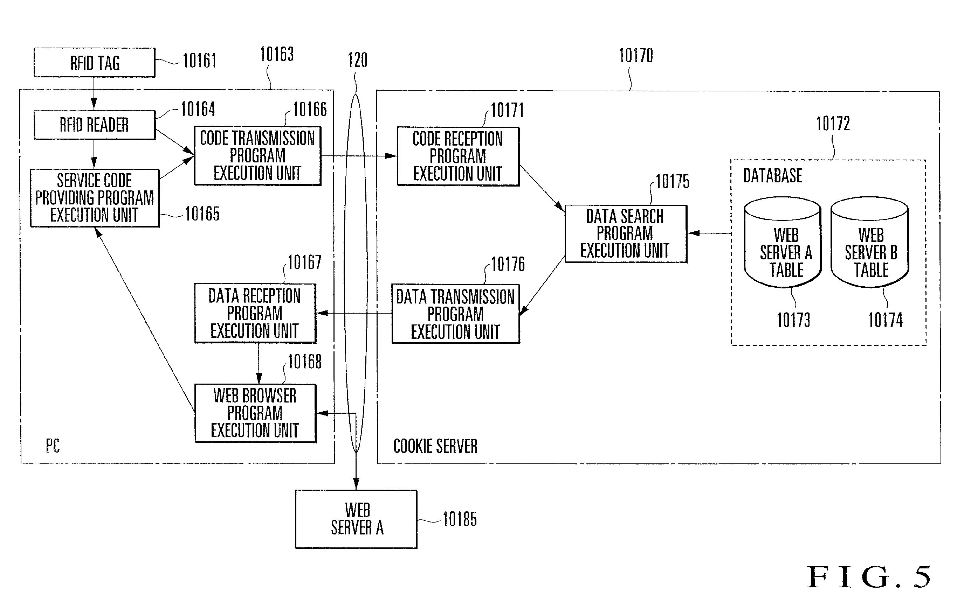

Another detailed example of the first embodiment of the present invention will be described below. Fig. 5 is a block diagram for explaining the arrangement of another detailed example of the first embodiment of the present invention.

Another detailed example of the first embodiment of the present invention includes an RFID tag 10161, PC 10163, cookie server 10170, Web server A 10185, and communication network 120.

The RFID tag 10161 stores an object identifier. The PC 10163 includes an RFID reader 10164, service code providing program execution unit 10165, code transmission program execution unit 10166, data reception program execution unit 10167, and Web browser program execution unit 10168. The RFID reader 10164 reads the object identifier stored in the RFID tag 10161. The service code providing program execution unit 10165 implements the service code providing unit 106 and executes a service code providing program that causes the PC 10163 to read out, from a predetermined position of a storage unit (not shown) incorporated in the PC 10163, a service code serving as information representing the application program that is being executed by the application program execution unit 104 and output the service code. The code transmission program execution unit 10166 implements the code transmission unit 107 and executes a code transmission program that causes the PC 10163 to transmit the object identifier and service code to the cookie server 10170 through the communication network 120. The data reception program execution unit 10167 implements the data reception unit 113 and executes a data reception program that causes the PC 10163 to receive data from the cookie server 10170 through the communication network 120. The Web browser program execution unit 10168 implements the application program execution unit 104 and executes a Web browser program that displays information received from the Web server A 10185 on the display unit (not shown) of the PC 10163.

The cookie server 10170 includes a code reception program execution unit 10171, database 10172, data search program execution unit 10175, and data transmission program execution unit 10176. The code reception program execution unit 10171 implements the code reception unit 109 and executes a code reception program that causes the cookie server 10170 to receive the object identifier and service code from the PC 10163 through the communication network 120. The database 10172 implements the data storage unit 110 and stores data. The data search program execution unit 10175 implements the data search unit 111 and executes a data search program that causes the cookie server 10170 to search for data stored in the database 10172. The data transmission program execution unit 10176 implements the data transmission unit 112 and executes a data transmission program that causes the cookie server 10170 to transmit the data to the PC 10163 through the communication network 120.

The database 10172 includes a Web server A table 10173 and a Web server B table 10174. The data search program execution unit 10175 can refer to each table in accordance with the URL (Uniform Resource Locators) of each Web server. More specifically, when the URL of the Web server A 10185 is input, the data search program execution unit 10175 searches the Web server A table 10173. When the URL of the Web server B (not shown) is input, the data search program execution unit 10175 searches the Web server B table 10174. Each table stores object identifiers and data in correspondence with each other. For example, the Web server A table 10173 stores cookie information used in the Web server A 10185 as data corresponding to an object identifier "A514CZ".

The Web server A 10185 is implemented by a normal Web server.

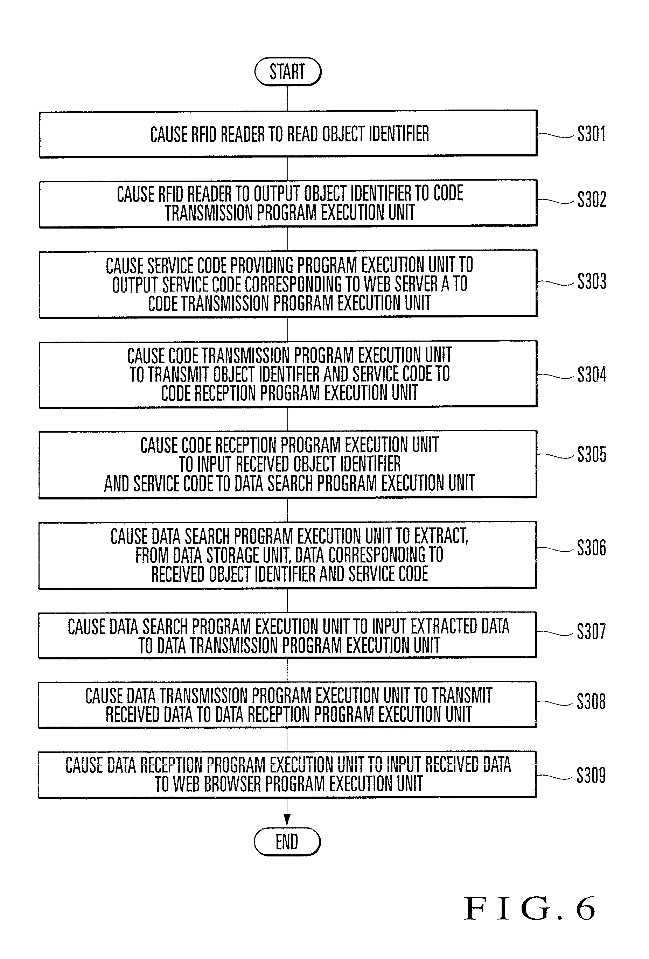

The operation of another detailed example of the first embodiment of the present invention will be described next with reference to the accompanying drawings. Fig. 6 is a flowchart for explaining the operation of another detailed example of the first embodiment of the present invention.

The user of the PC 10163 activates the Web browser program. The RFID reader 10164 reads the object identifier from the RFID tag 10161 (step S301) and outputs the read object identifier to the code transmission program execution unit 10166 (step S302). The user of the PC 10163 operates the Web browser program to instruct to display information in the Web server A 10185 on the display unit of the PC 10163. The object identifier read by the RFID reader 10164 is "A514CZ".

When the user operates the Web browser program to display information stored in the Web server A 10185 on the display unit of the PC 10163, the Web browser program execution unit 10168 causes the service code providing program execution unit 10165 to output the URL of the Web server A 10185 as a service code. The service code providing program execution unit 10165 outputs the URL of the Web server A 10185 to the code transmission program execution unit 10166 as a service code (step S303).

The code transmission program execution unit 10166 outputs the object identifier received from the RFID reader 10164 and the service code received from the service code providing program execution unit 10165 to the code reception program execution unit 10171 of the cookie server 10170 through the communication network 120 (step S304).

The code reception program execution unit 10171 outputs the object identifier and service code received from the code transmission program execution unit 10166 to the data search program execution unit 10175 (step S305).

On the basis of the service code received from the code reception program execution unit 10171, i.e., the URL of the Web server A 10185, the data search program execution unit 10175 decides the search destination of the database 10172 in the Web server A table 10173, searches for and extracts, on the basis of the object identifier "A514CZ" received from the code reception program execution unit 10171, cookie information corresponding to the object identifier "A514CZ" in the Web server A table 10173 as data (step S306), and outputs the extracted data to the data transmission program execution unit 10176 (step S307).

The data transmission program execution unit 10176 transmits the data received from the data search program execution unit 10175 to the data reception program execution unit 10167 of the PC 10163 through the communication network 120 (step S308).

The data reception program execution unit 10167 outputs the data received from the data transmission program execution unit 10176 to the Web browser program execution unit 10168 (step S309).

The Web browser program execution unit 10168 sets the data received from the data reception program execution unit 10167 to cookie information, accesses the Web server A 10185 through the communication network 120, receives information stored in the Web server A 10185, and displays the information on the display unit of the PC 10163.

The URL corresponding to each table in the database 10172 may correspond to either only the network address of the URL or a portion including the network address of the URL and the file path.

As described above, according to this embodiment, the client terminal 105 can acquire data from the application server 108 or the like on the basis of an object identifier stored in the recording medium 101.

### Second Embodiment

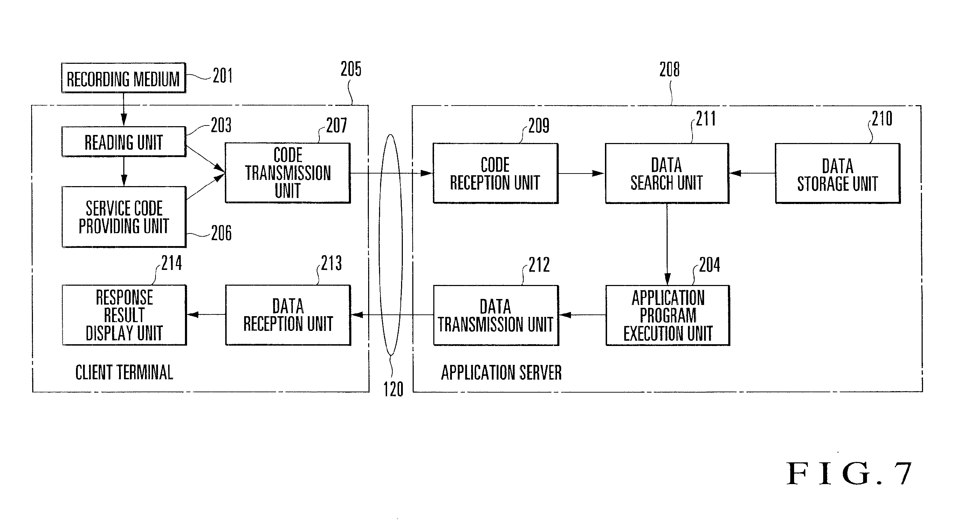

The second embodiment of the present invention will be described next with reference to the accompanying drawings. Fig. 7 is a block diagram showing an arrangement example of the second embodiment of the present invention.

The second embodiment of the present invention includes a recording medium 201, client terminal 205, application server 208, and communication network 120.

The recording medium 201 stores a unique object identifier. The client terminal 205 includes a reading unit (identifier reading means) 203, service code providing unit (service code providing means) 206, code transmission unit (code transmission means) 207, data reception unit (data reception means) 213, and response result display unit 214. The reading unit 203 reads the object identifier stored in the recording medium 201. The service code providing unit 206 stores in advance a service code as information indicating an application program to implement a service provided by the data processing system according to the second embodiment of the present invention. The code transmission unit 207 transmits the object identifier and service code to the application server 208 through the communication network 120. The data reception unit 213 receives data from the application server 208 through the communication network 120. The response result display unit 214 displays the data received by the data reception unit 213 on the display unit (not shown) of the client terminal 205.

The application server 208 includes a code reception unit (code reception means) 209, data storage unit (data storage means) 210, data search unit (data search means) 211, application program execution unit (application program execution means) 204, and data transmission unit (data transmission means) 212. The code reception unit 209 receives the object identifier and service code from the client terminal 205 through the communication network 120. The data storage unit 210 stores data in advance. The data search unit 211 searches for and extracts data stored in the data storage unit 210. The application program execution unit 204 executes an application program that processes the data extracted by the data search unit 211 in accordance with a predetermined algorithm. The data transmission unit 212 transmits the data processed by the application program execution unit 204 to the client terminal 205 through the communication network 120.

When the recording medium 201 moves close to or contacts the reading unit 203, the reading unit 203 reads the object identifier stored in the recording medium 201. The reading unit 203 outputs the read object identifier to the code transmission unit 207. Upon reading the object identifier, the reading unit 203 notifies the service code providing unit 206 that the object identifier is read.

In the application server 208, the application program execution unit 204 is executing an application program to process data extracted from the data storage unit 210 by the data search unit 211. The service code providing unit 206 stores in advance a service code corresponding to the application program. More specifically, the service code is stored at a predetermined position of the storage unit (not shown) of the client terminal 205.

Upon receiving the object identifier read by the reading unit 203 and the service code stored by the service code providing unit 206, the code transmission unit 207 transmits the received object identifier and service code to the code reception unit 209 of the application server 208 through the communication network 120.

The data storage unit 210 stores data to be input to the application program represented by the service code uniquely in correspondence with the set of the object identifier and service code.

The code reception unit 209 inputs the received object identifier and service code to the data search unit 211. The data search unit 211 searches for and extracts data corresponding to the received set of the object identifier and service code from the data stored in the data storage unit 210 and outputs the data to the application program execution unit 204.

The application program execution unit 204 processes the received data in accordance with a predetermined algorithm and outputs the data to the data transmission unit 212. The data transmission unit 212 transmits the data processed by the application program execution unit 204 to the data reception unit 213 of the client terminal 205 through the communication network 120.

The data reception unit 213 outputs the received data to the response result display unit 214. On the basis of the received data, the response result display unit 214 displays the processing result of the application program execution unit 204 on the display unit of the client terminal 205.

The reading unit 203 may be a part of the client terminal 205 or may be connected to the outside of the client terminal through a communication interface.

The data storage unit 210 and data search unit 211 may be included in another server connected to the application server 208 so as to operate through the application server 208.

The data storage unit 210 can store data to be input to an application program represented by a service code uniquely in correspondence with a set of an object identifier and a service code either before or after the object identifier is stored in the recording medium 201. If data is stored after storing an object identifier in the recording medium 201, first, one service is made to correspond to a set of an object identifier and a service code. Then, the service can be made to correspond to a plurality of sets of object identifiers and service codes sequentially.

If the application program is not activated when the data search unit 211 extracts data from the data storage unit 210 and outputs the data to the application program execution unit 204, the application program execution unit 204 may activate the application program so that the data search unit 211 can input the data to the application program execution unit 204 that is executing the application program.

The application program can form either one program file by itself or a partial function of a program file. In addition, the application program may has a communication function of exchanging data with an external information communication device by using a communication protocol such as TCP/IP (Transmission Control Protocol/Internet Protocol) or HTTP (HyperText Transfer Protocol).

The service code providing unit 206 will be described. The service code providing unit 206 is included in the client terminal 205 and stores service codes that correspond to a plurality of application programs to be executed by the application program execution unit 204 and can uniquely identify application programs. When notified by the reading unit 203 that an object identifier is read, the service code providing unit 206 specifies a service code corresponding to an application program that is being executed by the application program execution unit 204 on the basis of the correspondence between the service code and the application program executed by the application program execution unit 204, and outputs the specified service code to the code transmission unit 207.

The service code providing unit 206 may be included in the application server 208. In this case, the client terminal 205 need not include the service code providing unit 206. At this time, when the reading unit 203 reads the object identifier, the code transmission unit 207 transmits only the object identifier to the application server 208. In the application server 208, when the code reception unit 209 receives the object identifier, the service code providing unit 206 included in the application server 208 outputs the object identifier and service code to the data search unit 211. On the basis of this arrangement and operation, the service code providing unit 206 may be incorporated in the application program execution unit 204 and output a service code corresponding to an application program incorporated in the application program execution unit 204 directly to the data search unit 211.

The application program execution unit 204 may input the service code of the running application program to the service code providing unit 206 through the data transmission unit 212, communication network 120, and data reception unit 213. The service code providing unit 206 may input the service code received from the application program execution unit 204 to the application program execution unit 204 through the code transmission unit 207, communication network 120, code reception unit 209, and data search unit 211.

The service code providing unit 206 may store an object identifier stored in the recording medium 201 uniquely in correspondence with an application program. When the reading unit 203 reads an object identifier, the service code providing unit 206 may output, to the code transmission unit 207, a service code representing the application program corresponding to the object identifier read by the reading unit 203.

When the service code providing unit 206 makes an object identifier correspond to an application program or the service code of an application program, a plurality of object identifiers may be handled as a set so that an application program or the service code of an application program may be made to correspond to the set. Additionally, at this time, the set of object identifiers may specify the reading order of the reading unit 203.

The service code providing unit 206 may store a plurality of service codes in correspondence with one object identifier. Which one of the plurality of service codes corresponding to the object identifier read by the reading unit 203 should be output to the code transmission unit 207 may be decided by the user of the client terminal 205. The service code providing unit 206 may have a mechanism to promote the user of the client terminal 205 to decide the service code to be output to the code transmission unit 207 when the reading unit 203 reads an object identifier for the first time. If the reading unit 203 reads the object identifier for the second or subsequent time, the service code precedingly decided by the user of the client terminal 205 may automatically be output to the code transmission unit 207. When the service code providing unit 206 is included in the application server 208, the service code transmission destination may be set to the data search unit 211, and the service code output timing may be set to the timing when the code reception unit 209 receives the object identifier from the code reception unit 207 of the client terminal 205.

The service code providing unit 206 may acquire a service code from a recording medium different from the recording medium 201 storing the object identifier. In this case, the reading unit 203 reads the service code from the other recording medium before or after the object identifier acquisition timing. The other recording medium records a service code.

The client terminal 205 incorporates a data processing program that causes a computer to execute processing of reading an object identifier, processing of transmitting a service code and object identifier to the application server 208, processing of receiving information of a data processing result from the application server 208, and processing of displaying information of a reception result on the display unit of the client terminal 205.

The application server 208 incorporates a data processing program that causes a computer to execute processing of receiving an object identifier and service code from the client terminal 205, processing of extracting data corresponding to the received service code and object identifier from the data storage unit 210 that stores data in correspondence with sets of object identifiers and service codes, and processing of inputting the extracted data to the application program execution unit 204 indicated by the service code and transmitting information of a data processing result of the application program execution unit 204 to the client terminal 205.

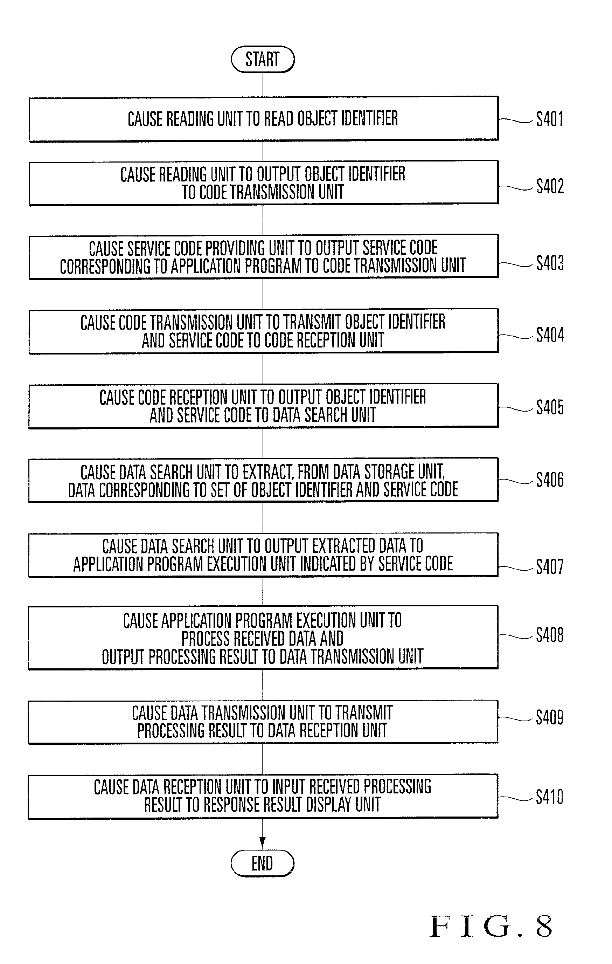

The operation of the second embodiment of the present invention will be described next with reference to the accompanying drawings. Fig. 8 is a flowchart for explaining the operation of the second embodiment of the present invention.

The reading unit 203 reads an object identifier stored in the recording medium 201 (step S401). The reading unit 403 outputs the read object identifier to the code transmission unit 207 (step S402). The reading unit 203 also notifies the service code providing unit 206 that the object identifier is read.

When notified by the reading unit 203 that the object identifier is read, the service code providing unit 206 outputs, to the code transmission unit 207, a service code corresponding to the application program that is being executed by the application program execution unit 204 (step S403).

The code transmission unit 207 transmits the object identifier and service code to the code reception unit 209 of the application server 208 through the communication network 120 (step S404). The code reception unit 209 outputs the received object identifier and service code to the data search unit 211 (step S405).

The data search unit 211 searches for data corresponding to set of the object identifier and service code from the data stored in the data storage unit 210 and extracts the data (step S406). The data search unit 211 outputs the extracted data to the data transmission unit 212 (step S407).

The application program execution unit 204 executes the application program to process the data received from the data search unit 211 in accordance with a predetermined algorithm and outputs the processing result to the data transmission unit 212 (step S408).

The data transmission unit 212 transmits the processing result to the data reception unit 213 of the client terminal 205 through the communication network 120 (step S409). The data reception unit 213 inputs the received processing result to the response result display unit 214 (step S410). The response result display unit 214 displays the processing result received from the data reception unit 213 on the display unit of the client terminal 205.

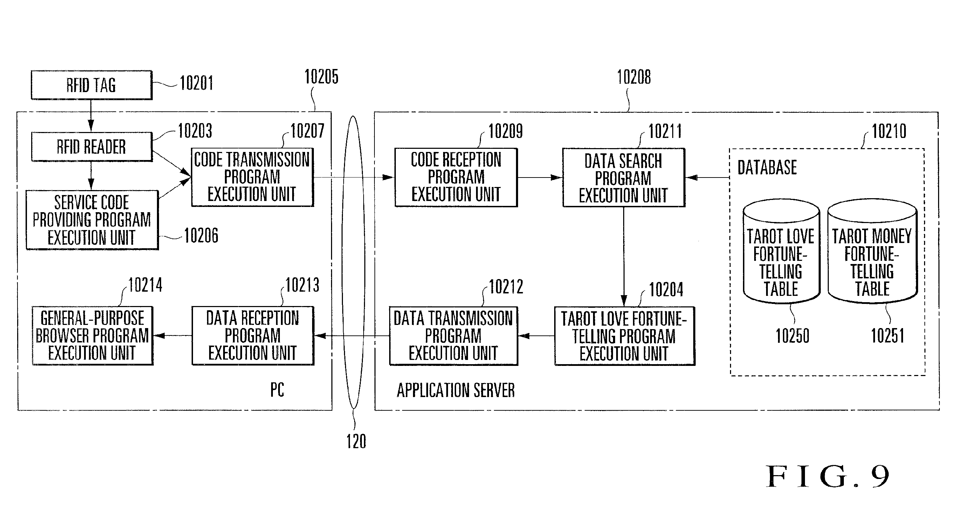

The second embodiment of the present invention will be described next by using a detailed example. Fig. 9 is a block diagram for explaining the arrangement of a detailed example of the second embodiment of the present invention.

A detailed example of the second embodiment of the present invention includes an RFID tag 10201, PC 10205, application server 10208, and communication network 120.

The RFID tag 10201 stores an object identifier. The PC 10205 includes an RFID reader 10203, service code providing program execution unit 10206, code transmission program execution unit 10207, data reception program execution unit 10213, and general-purpose browser program execution unit 10214. The RFID reader 10203 reads the object identifier stored in the RFID tag 10201. The service code providing program execution unit 10206 implements the service code providing unit 206 and executes a service code providing program that causes the PC 10205 to read out, from a predetermined position of a storage unit (not shown) incorporated in the PC 10205, a service code serving as information representing the application program that is being executed by the application program execution unit 204 and output the service code. The code transmission program execution unit 10207 implements the code transmission unit 207 and executes a code transmission program that causes the PC 10205 to transmit the object identifier and service code to the application server 10208 through the communication network 120. The data reception program execution unit 10213 implements the data reception unit 213 and executes a data reception program that causes the PC 10205 to receive a processing result from the application server 10208 through the communication network 120. The general-purpose browser program execution unit 10214 implements the response result display unit 214 and executes a general-purpose browser program to display a processing result on the display unit (not shown) of the PC 10205.

The RFID tag 10201 includes a storage unit (not shown) to store an identifier or data and a wireless communication device (not shown). The RFID reader 10203 includes a wireless communication device (not shown) to read the identifier or data from the RFID tag 10201. Assume that the RFID tag 10201 has a function of storing an object identifier as a read-only unique identifier and transmitting only the object identifier to the RFID reader 10203. The RFID tag 10201 is implanted in a real tarot card. Similarly, an RFID tag storing another object identifier is implanted in each of the remaining cards of a deck of tarot cards. The RFID tag 10201 is assumed to be implanted in one tarot card selected by the user from a deck of tarot cards. The RFID tag 10201 stores an object identifier "A514CZ".

The application server 10208 includes a code reception program execution unit 10209, database 10210, data search program execution unit 10211, tarot love fortune-telling program execution unit 10204, and data transmission program execution unit 10212. The code reception program execution unit 10209 implements the code reception unit 209 and executes a code reception program that causes the application server 10208 to receive the object identifier and service code from the PC 10205 through the communication network 120. The database 10210 implements the data storage unit 210 and stores data. The data search program execution unit 10211 implements the data search unit 211 and executes a data search program that causes the application server 10208 to search for and extract data stored in the database 10210. The tarot love fortune-telling program execution unit 10204 implements the application program execution unit 204 and executes a tarot love fortune-telling program serving as an application program to process the data extracted by the data search program execution unit 10211 in accordance with a predetermined algorithm and generate a processing result. The data transmission program execution unit 10212 implements the data transmission unit 212 and executes a data transmission program that causes the application server 10108 to transmit the processing result to the PC 10205 through the communication network 120.

The database 10210 includes a tarot love fortune-telling table 10250 as a data table of tarot love fortune-telling and a tarot money fortune-telling table 10251 as a data table of tarot money fortune-telling.

The PC 10205 and application server 10208 are connected through the communication network 120.

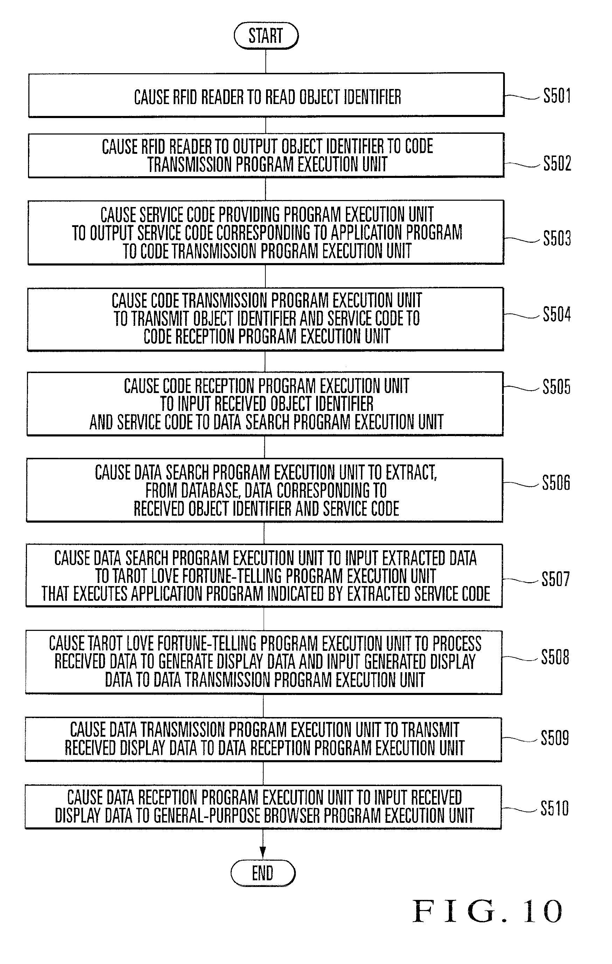

The operation of a detailed example of the second embodiment of the present invention will be described next with reference to the accompanying drawings. Fig. 10 is a flowchart for explaining the operation of a detailed example of the second embodiment of the present invention.

The user of the PC 10205 moves the tarot card with the RFID tag 10201 close to the RFID reader 10203 so that the RFID reader 10203 reads the object identifier stored in the RFID tag 10201 (step S501). The object identifier is "A514CZ". The RFID reader 10103 outputs the read object identifier "A514CZ" to the code transmission program execution unit 10107 (step S502). The RFID reader 10103 also notifies the service code providing program execution unit 10106 that the object identifier is read. Note that the object identifier "A514CZ" is registered in advance in the tarot love fortune-telling table 10250 and tarot money fortune-telling table 10251 in the database 10210 of the application server 10108 so as to indicate the meaning of "The Hermit".

When notified by the RFID reader 10203 that the object identifier is read, the service code providing program execution unit 10106 displays, on the display unit of the PC 10205, a window to make the user select one of the "tarot love fortune-telling program" and "tarot money fortune-telling program". The service code of the "tarot love fortune-telling program" is "S001", and the service code of the "tarot money fortune-telling program" is "S002".

When the user selects, e.g., "tarot love fortune-telling", the service code providing program execution unit 10206 specifies the service code as "S001" and outputs the specified service code "S001" to the code transmission program execution unit 10107 (step S503).

The code transmission program execution unit 10207 transmits the object identifier "A514CZ" and service code "S001" to the code reception program execution unit 10209 of the application server 10208 through the communication network 120 (step S504).

Upon receiving the object identifier "A514CZ" and service code "S001", the code reception program execution unit 10209 outputs the received object identifier "A514CZ" and service code "S001" to the data search program execution unit 10211 (step S505).

The database 10210 of the application server 10208 stores data tables corresponding to two application programs. The data table for the tarot love fortune-telling program (service code "S001") is the tarot love fortune-telling table 10250. The data table for the tarot money fortune-telling program (service code "S002") is 10251.

The data search program execution unit 10211 selects, from the database 10110, the table corresponding to the service code "S001" output from the code reception program execution unit 10209 and decides to search the tarot love fortune-telling table 10250 corresponding to the service code "S001". The data search program execution unit 10211 searches the tarot love fortune-telling table 10250 for data stored in correspondence with the object identifier "A514CZ" and extracts data "intelligent love" corresponding to the object identifier "A514CZ" (step S506).

The data search program execution unit 10211 outputs the data "intelligent love" extracted from the tarot love fortune-telling table 10250 to the tarot love fortune-telling program execution unit 10204 that is executing the application program corresponding to the service code "S001", i.e., the tarot love fortune-telling program (step S507).

The tarot love fortune-telling program execution unit 10204 makes the meaning of the received data correspond to a tarot card image from a card database independently managed by the tarot love fortune-telling program execution unit 10204 to create display data with a format displayable by the general-purpose browser program execution unit 10214 of the PC 10205, and outputs the display data to the data transmission program execution unit 10212 (step S508). The format displayable by the general-purpose browser program execution unit 10214 of the PC 10205 is, e.g., the HTML (HyperText Mark up Language) format if the general-purpose browser program executed by the general-purpose browser program execution unit 10214 is a Web browser.

The data transmission program execution unit 10212 transmits the display data to the data reception program execution unit 10213 of the PC 10105 through the communication network 120 (step S509).

Upon receiving the display data, the data reception program execution unit 10213 inputs the received display data to the general-purpose browser program execution unit 10214 (step S510). The general-purpose browser program execution unit 10214 executes rendering, i.e., adjusts the received display data to, e.g., the size of the display unit of the PC 10205 and displays, e.g., "intelligent love" on the display unit of the PC 10205.

In this detailed example, the service selected by the user when the RFID reader 10203 reads the object identifier "A514CZ" is the "tarot love fortune-telling program". However, the user may select the "tarot money fortune-telling program". In this case, the service code providing program execution unit 10106 outputs the service code "S002" corresponding to the tarot money fortune-telling program to the code transmission program execution unit 10207. The code transmission program execution unit 10207 transmits the object identifier "A514CZ" and service code "S002" to the code reception program execution unit 10209 through the communication network 120. The code reception program execution unit 10209 outputs the object identifier "A514CZ" and service code "S002" to the data search program execution unit 10211. The data search program execution unit 10211 extracts data "better refrain from shopping" from the tarot money fortune-telling table 10251 on the basis of the received object identifier "A514CZ" and service code "S002", and outputs the data to the tarot money fortune-telling program execution unit (not shown). The tarot money fortune-telling program execution unit makes the meaning of the received data correspond to a tarot card image from a card database independently managed by the tarot money fortune-telling program execution unit to create display data with a format displayable by the general-purpose browser program execution unit 10214 of the PC 10205, and outputs the display data to the data transmission program execution unit 10212. The data transmission program execution unit 10212 transmits the display data to the data reception program execution unit 10213 of the PC 10105 through the communication network 120. Upon receiving the display data, the data reception program execution unit 10213 inputs the received display data to the general-purpose browser program execution unit 10214. The general-purpose browser program execution unit 10214 executes rendering, i.e., adjusts the received display data to, e.g., the size of the display unit of the PC 10205 and displays, e.g., "better refrain from shopping" on the display unit of the PC 10205.

As described above, when the different data "intelligent love" and "better refrain from shopping" are input to the application programs requiring data, i.e., the "tarot love fortune-telling program" and "tarot money fortune-telling program" in correspondence with the single object identifier "A514CZ" (The Hermit), different services can be provided to the user.

After the user selects the program to be executed, i.e., the "tarot love fortune-telling program" or "tarot money fortune-telling program", the service code providing program execution unit 10206 may store the selection of the first time in the storage unit of the PC 10205. From the second time, the service code corresponding to the selected application program may automatically be output to the code transmission program execution unit 10207.

The service code providing program execution unit 10206 may be included in the application server 10208. In this case, the code transmission program execution unit 10207 transmits only the object identifier read by the RFID reader 10203 to the application server 10208. In the application server 10208, the code reception program execution unit 10209 receives the object identifier. The service code providing program execution unit 10206 displays a window to make the user to select the application program to be executed on the display unit of the PC 10205 through the communication network 120 and data reception program execution unit 10213, decides the application program selected by the user as the application program to be executed, and outputs the service code corresponding to the decided application program to the data search program 10211, thereby obtaining the set of the object identifier and service code to search for data by using the database 10210.

Instead of causing the user to select the application program to be executed, the service code providing program execution unit 10206 may check the application program that is being executed by the application program execution unit 204 of the application server 10208 and output the service code corresponding to the running application program to the code transmission program execution unit 10207. More specifically, the service code providing program execution unit 10206 inquires of the application program execution unit 204 about the running application program through the communication network 120 and code reception program execution unit 10209. The application program execution unit 204 transmits information representing the running application program to the service code providing program execution unit 10206 through the data transmission program execution unit 10212, communication network 120, and data transmission program execution unit 10212. The service code providing program execution unit 10206 specifies the application program that is being executed by the application program execution unit 204 and outputs the service code of the specified application program to the code transmission program execution unit 10207.

The general-purpose browser program can be a Web browser. In this case, data transmitted/received between the data transmission program execution unit 10212 and the data reception program execution unit 10213 may be expressed in the HTML format.

Before the RFID reader 10203 reads the object identifier, the service code providing program execution unit 10206 may decide the tarot love fortune-telling program by user selection and output the service code "S001" corresponding to the tarot love fortune-telling program to the code transmission program execution unit 10207.

The data search program execution unit 10211 may have a means for registering, in the storage unit of the application server 10208, a service code and a method of activating an application program corresponding to the service code (e.g., in a normal OS, the file path of the program file of the application program and an activation option). When data is searched from the database 10210, and the application program to receive the search result (data), i.e., the tarot love fortune-telling program is not activated, the tarot love fortune-telling program may be activated on the basis of the registered information, and the search result may be output after activation.

Another detailed example of the arrangement shown in Fig. 9 will be described.

The RFID reader 10203 has a function of continuously reading a plurality of object identifiers from the RFID tag 10201 and other RFID tags (e.g., another object identifier is "A514QR" (The World)). The plurality of read object identifiers are output to the code transmission program execution unit 10207 in order. The service code providing program execution unit 10206 displays, on the display unit of the PC 10205, a window to make the user select an application program from a list of application programs to be executed by the application server 10208. When the user selects a "tarot past/future fortune-telling program", the service code providing program execution unit 10206 selects the "tarot past/future fortune-telling program" and outputs its service code, e.g., "S003" to the code transmission program execution unit 10207.

The code transmission program execution unit 10207 transmits the object identifiers "A514CZ" and "A514QR" and the service code "S003" to the code reception program execution unit 10209. The database 10210 includes a data table corresponding to the service code "S003", i.e., a tarot past/future fortune-telling table (not shown).

In the tarot past/future fortune-telling table, data corresponding to the object identifier read first (past) and the object identifier read next (future) are stored in correspondence with each of the plurality of object identifiers.

The data search program execution unit 10211 decides the search target table in the database 10210 to the "tarot past/future fortune-telling table" and extracts data corresponding to the object identifiers on the basis of the object identifiers and the read order. For example, since the read order of the object identifier "A514CZ" indicates "past", the data search program execution unit 10211 extracts data "seem to have done many good deeds in the past" corresponding to the object identifier "A514CZ". Since the read order of the object identifier "A514QR" indicates "future", the data search program execution unit 10211 extracts data "the future can be rosy" corresponding to the object identifier "A514QR". These data are output to a tarot past/future fortune-telling program execution unit (not shown) corresponding to the service code "S003".

The data table structure may be based not on the order but on the combination. In this case, the data does not change depending on the order.

The program to be executed by the general-purpose browser program execution unit 10214 may be not the general-purpose browser program but a client-side application program such as a tarot love fortune-telling browser program corresponding to the application program of the application server 10208. In this case, the PC 10205 is designed to output, to a tarot love fortune-telling browser program execution unit (not shown) (a substitute to the general-purpose browser program execution unit 10214), a processing result of the tarot love fortune-telling program execution unit 10204 received from the application server 10208. If the client-side application program (tarot love fortune-telling browser program) is not activated, the data transmission program execution unit 10212 may activate the client-side application program and then transmit the processing result after activation. In the above-described arrangement, a unique service code capable of simultaneously identifying both the server-side application program and the client-side application program is used.

As described above, according to this embodiment, since the application server 208 has a means (application program) for providing a service, a service can easily be added or changed on the side of the application server 208.

### Third Embodiment

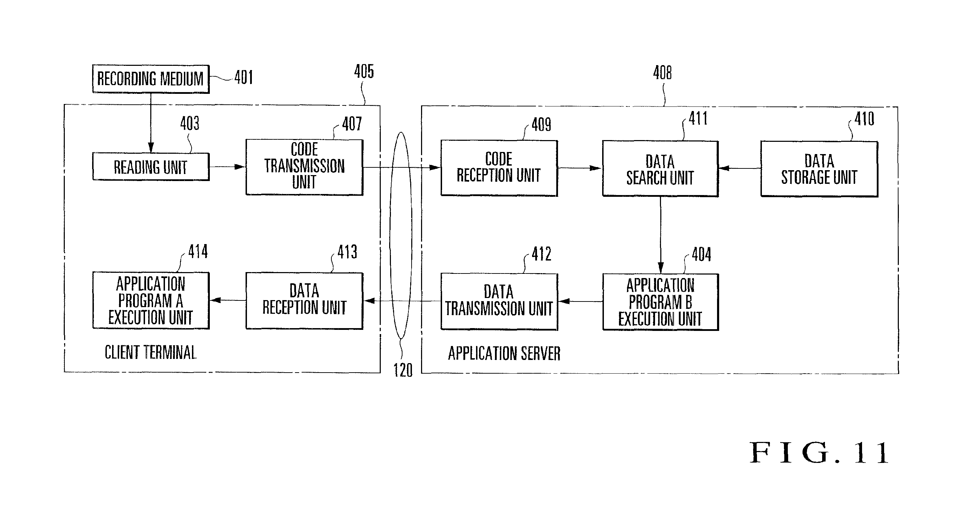

The third embodiment of the present invention will be described next with reference to the accompanying drawings. Fig. 11 is a block diagram showing an arrangement example of the third embodiment of the present invention.

The third embodiment of the present invention includes a recording medium 401, client terminal 405, application server 408, and communication network 120.

The recording medium 401 stores a unique object identifier. The client terminal 405 includes a reading unit (identifier reading means) 403, code transmission unit (code transmission means) 407, data reception unit (data reception means) 413, and application program A execution unit (application program execution means) 414. The reading unit 403 reads the object identifier stored in the recording medium 401. The code transmission unit 407 transmits the object identifier to the application server 108 through the communication network 120. The data reception unit 413 receives data from the application server 408 through the communication network 120. The application program A execution unit 414 executes an application program A that processes the data received by the data reception unit 413.

The application server 408 includes a code reception unit (code reception means) 409, data storage unit (data storage means) 410, data search unit (data search means) 411, application program B execution unit (application program execution means) 404, and data transmission unit (data transmission means) 412. The code reception unit 409 receives the object identifier from the client terminal 405 through the communication network 120. The data storage unit 410 stores data in advance. The data search unit 411 searches for and extracts data stored in the data storage unit 410. The application program B execution unit 404 executes an application program B that processes the data extracted by the data search unit 211. The data transmission unit 412 transmits the data processed by the application program B execution unit 404 to the client terminal 405 through the communication network 120.

The reading unit 403 moves close to or contacts the recording medium 401 to read the object identifier stored in the recording medium 401. The reading unit 403 outputs the read object identifier to the code transmission unit 407. Upon receiving the object identifier read by the reading unit 403, the code transmission unit 407 transmits the received object identifier to the code reception unit 409 of the application server 408 through the communication network 120.

The data storage unit 410 stores a service code and data to be input to the application program B uniquely in correspondence with an object identifier. A service code is an identifier that uniquely identifies application programs, i.e., the application programs A and B to implement the service provided by the data processing system of the present invention.

The code reception unit 409 inputs the received object identifier to the data search unit 411. The data search unit 411 searches for and extracts a service code and data corresponding to the received object identifier from the service codes and data stored in the data storage unit 410 and outputs the service code and data to the application program B execution unit 404 that executes the application program B corresponding to the extracted service code.

The application program B execution unit 404 processes the received data and outputs the data to the data transmission unit 412 together with the service code. The data transmission unit 412 transmits the service code and data processed by the application program B execution unit 404 to the data reception unit 413 of the client terminal 405 through the communication network 120.

The data reception unit 413 outputs the received data to the application program A execution unit 414 that executes the application program A corresponding to the service code. The application program A execution unit 414 processes the received data.

The data search unit 411 outputs the extracted service code to the data transmission unit 412 through the application program B execution unit 404. However, if a means for transmitting the service code to the client terminal 405 is separately provided, it is unnecessary to output the service code to the application program B execution unit 404. For example, the application program B execution unit 404 may store the service code of its own. In this case, the data search unit 411 may transfer only data to the application program B execution unit 404. The application program B execution unit 404 may output the service code stored in it when outputting the processing result to the data transmission unit 412. Alternatively, the data search unit 411 may output the service code to the data transmission unit 412 without intervention of the application program B execution unit 404.

The application program B may be a general-purpose processing program. In this case, upon receiving the service code and data extracted by the data search unit 411, the application program B execution unit 404 may interpret the service code and change the data processing method. Instead of changing processing depending on the service code, only data may be processed by a predetermined processing method, and the result and service code may be transmitted to the data transmission unit 412. In this case, the application program A of the client terminal 405 is changed depending on the service code so that processing on the side of the client terminal 405 for the processing result of the application program B is changed.

If the application program A is, e.g., a general-purpose browser program that can be specified independently of the service code transmitted from the application server 408, no service code need be transmitted from the application server 408 to the client terminal 405.

The application program B execution unit 404 may be omitted. In this case, the data search unit 411 outputs the extracted service code and data to the data transmission unit 412.

The application program A execution unit 414 may be omitted. In this case, the data transmission unit 412 and data reception unit 413 are unnecessary. The application program A execution unit 404 need not output the processing result to the outside. The data search unit 411 need not output the service code to the application program A execution unit 404.

The reading unit 403 may be a part of the client terminal 405 or may be connected to the outside of the client terminal through a communication interface.

The data storage unit 410, data search unit 411, and application program B execution unit 404 may be included in another server connected to the application server 408 so as to operate through the application server 408.

If the application program B is not activated when the data search unit 411 extracts data from the data storage unit 410 and outputs the data to the application program B execution unit 404, the application program B execution unit 404 may activate the application program B so that the data search unit 411 can input the data to the application program B execution unit 404 that is executing the application program B. If the application program A is not activated when the data reception unit 413 receives data and outputs it to the application program A execution unit 414, the application program A execution unit 414 may activate the application program A so that the data reception unit 413 can input the data to the application program A execution unit 414 that is executing the application program A.

Each of the application programs A and B can form either one program file by itself or a partial function of a program file.

The data storage unit 410 can store a set of a service code and data uniquely in correspondence with an object identifier either before or after the object identifier is stored in the recording medium 401.

The data storage unit 410 may store a plurality of sets of service codes and data in correspondence with one object identifier. When the data search unit 411 extracts a plurality of service code and data, the user of the client terminal 405 may select a service code and data from the plurality of sets of service codes and data to execute the application program. In this case, the service codes and data may be displayed on the display unit (not shown) of the client terminal 405 through the data transmission unit 412, communication network 120, and data reception unit 413 to make the user select a set. The client terminal 405 may store the information of user selection result of the first time in the storage unit (not shown). From the second time, the information of user selection result of the first time may automatically be transmitted to the data search unit 411 through the code transmission unit 407, communication network 120, and code reception unit 409.

In storing a set of a service code and data in correspondence with an object identifier, the data storage unit 410 may handle a plurality of object identifiers as a set so that the set of service code and data corresponds to the set of object identifiers. At this time, the set of object identifiers may specify the reading order of the reading unit 403.

In searching for a set of a service code and data corresponding to an object identifier from the data storage unit 410, the data search unit 411 may check the application program that is being executed by the application program A execution unit 414 and application program B execution unit 404, execute search by adding the service code corresponding to the running application program, and select one of a plurality of sets of service codes and data corresponding to one object identifier.

The client terminal 405 incorporates a data processing program that causes a computer to execute processing of reading an object identifier, processing of transmitting the object identifier to the application server 408, processing of receiving information of a data processing result from the application server 408, and processing of inputting the received result information to the application program A execution unit 414 that executes the application program A represented by the service code, and processing of processing the received result information by causing the application program A execution unit 414 to execute the application program A.

The application server 408 incorporates a data processing program that causes a computer to execute processing of receiving an object identifier from the client terminal 405, processing of extracting a service code and data, which correspond to the received object identifier and serve as information indicating the application program to process the data, from the data storage unit 410 that stores a set of a service code and data in correspondence with an object identifier, processing of inputting the extracted data to the application program B execution unit 404 that executes the application program B indicated by the extracted service code, and processing of transmitting information of a data processing result of the application program B execution unit 404 to the client terminal 405.

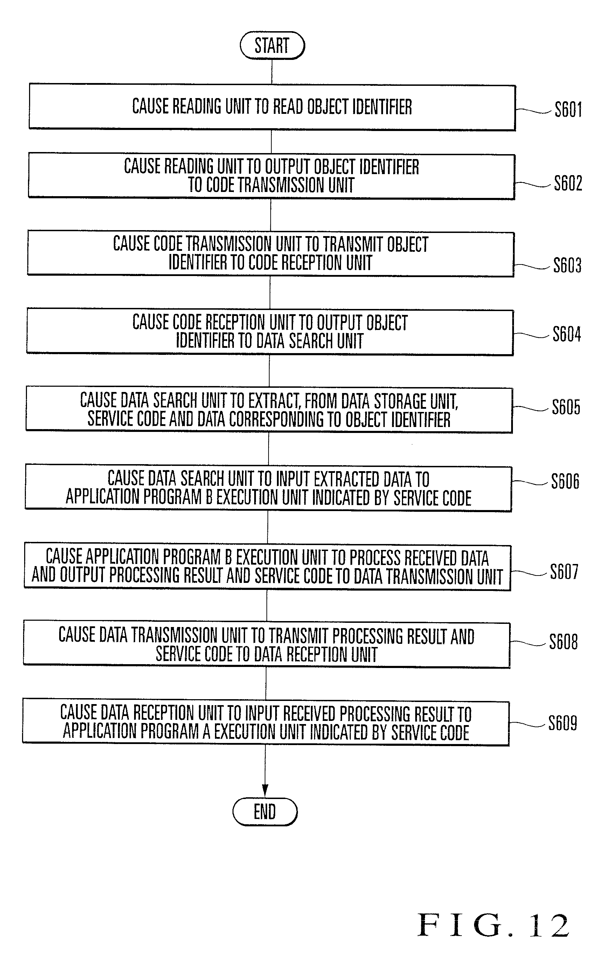

The operation of the third embodiment of the present invention will be described next with reference to the accompanying drawings. Fig. 12 is a flowchart for explaining the operation of the third embodiment of the present invention.

The reading unit 403 reads an object identifier stored in the recording medium 401 (step S601). The reading unit 403 outputs the read object identifier to the code transmission unit 407 (step S602).

The code transmission unit 407 transmits the object identifier to the code reception unit 409 of the application server 408 through the communication network 120 (step S603). The code reception unit 409 outputs the received object identifier to the data search unit 411 (step S604).

The data search unit 411 searches for a set of a service code and data corresponding to the object identifier from the service codes and data stored in the data storage unit 110 in correspondence with object identifiers (step S605). The data search unit 411 inputs the service code and data to the application program B execution unit 404 that is executing the application program B indicated by the service code (step S606).

The application program B execution unit 404 processes the received data and outputs the service code and the data of processing result data to the data transmission unit 412 (step S607). The data transmission unit 412 transmits the service code and the data of processing result to the data reception unit 413 of the client terminal 405 (step S608). The data reception unit 113 inputs the data of processing result to the application program A execution unit 414 that is executing the application program A indicated by the received service code (step S609). The application program A execution unit 414 processes the data of processing result of the application program B.

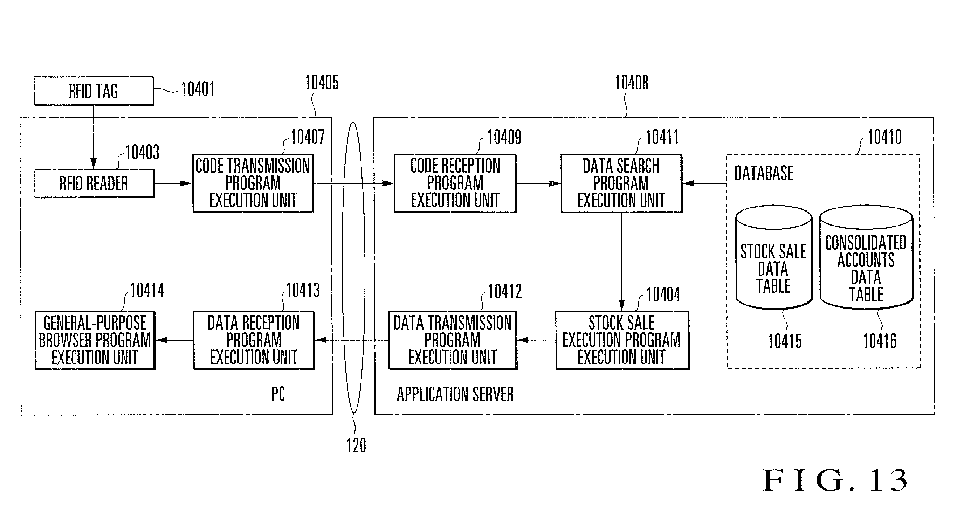

The third embodiment of the present invention will be described next by using a detailed example. Fig. 13 is a block diagram for explaining the arrangement of a detailed example of the third embodiment of the present invention.

A detailed example of the third embodiment of the present invention includes an RFID tag 10401, PC 10405, application server 10408, and communication network 120.

The RFID tag 10401 stores an object identifier. The PC 10405 includes an RFID reader 10403, code transmission program execution unit 10407, data reception program execution unit 10413, and general-purpose browser program execution unit 10414. The RFID reader 10403 reads the object identifier stored in the RFID tag 10401. The code transmission program execution unit 10407 implements the code transmission unit 407 and executes a code transmission program that causes the PC 10405 to transmit the object identifier to the application server 10408 through the communication network 120. The data reception program execution unit 10413 implements the data reception unit 413 and executes a data reception program that causes the PC 10405 to receive data from the application server 10408 through the communication network 120. The general-purpose browser program execution unit 10414 implements the application program B execution unit 404 and executes a general-purpose browser program to display data received by the data reception program execution unit 10413 on the display unit (not shown) of the PC 10405.

The RFID tag 10401 includes a storage unit (not shown) to store an identifier or data and a wireless communication device (not shown). The RFID reader 10403 includes a wireless communication device (not shown) to read the identifier or data from the RFID tag 10401. Assume that the RFID tag 10401 has a function of storing an object identifier as a read-only unique identifier and transmitting only the object identifier to the RFID reader 10403. The RFID tag 10401 stores an object identifier "A514CZ" and is implanted in a card with a stock brand "company A" and an action "sale".

The application server 10408 includes a code reception program execution unit 10409, database 10410, data search program execution unit 10411, stock sale execution program execution unit 10404, and data transmission program execution unit 10412. The code reception program execution unit 10409 implements the code reception unit 409 and executes a code reception program that causes the application server 10408 to receive the object identifier from the PC 10405 through the communication network 120. The database 10410 implements the data storage unit 410 and stores a set of a service code and data in correspondence with an object identifier. The data search program execution unit 10411 implements the data search unit 411 and executes a data search program that causes the application server 10408 to search for and extract a set of a service code and data stored in the database 10410. The stock sale execution program execution unit 10404 implements the application program B execution unit 404 and executes a stock sale execution program as an application program to process the data extracted by the data search program execution unit 10411 and generate a processing result. The data transmission program execution unit 10412 implements the data transmission unit 412 and executes a data transmission program that causes the application server 10108 to transmit the processing result to the PC 10405 through the communication network 120.

The database 10410 includes a stock sale data table 10415 as a data table of stock sale and a consolidated accounts data table 10416 as a data table of consolidated accounts. The stock sale data table 10415 stores the object identifier "A514CZ", a service code "S001" of the stock sale execution program, stock code data "6701" of the company A, share count data "5000", and execution condition data "carte blanche" in correspondence with each other.

The PC 10405 and application server 10408 are connected through the communication network 120.

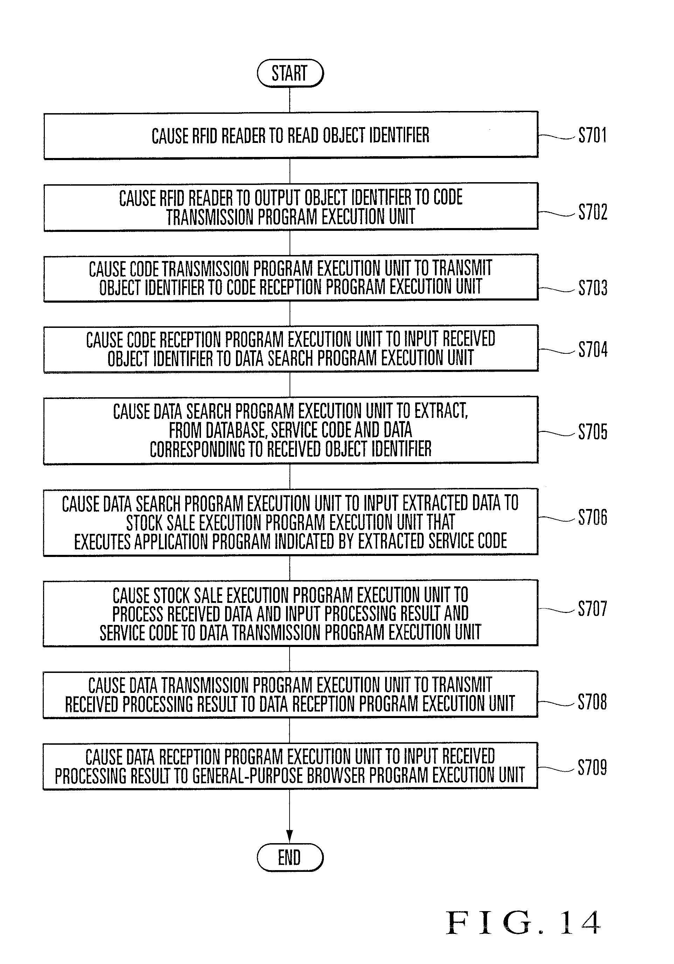

The operation of a detailed example of the third embodiment of the present invention will be described next with reference to the accompanying drawings. Fig. 14 is a flowchart for explaining the operation of a detailed example of the third embodiment of the present invention.

The user of the PC 10405 moves the RFID tag 10401 close to the RFID reader 10403 so that the RFID reader 10403 reads the object identifier "A514CZ" stored in the RFID tag 10401 (step S701). The RFID reader 10103 outputs the read object identifier "A514CZ" to the code transmission program execution unit 10407 (step S702).

The code transmission program execution unit 10407 transmits the object identifier "A514CZ" to the code reception program execution unit 10409 of the application server 10408 through the communication network 120 (step S703).

Upon receiving the object identifier "A514CZ", the code reception program execution unit 10409 inputs the received object identifier "A514CZ" to the data search program execution unit 10411 (step S704).

The data search program 10411 searches for and extracts a set of a service code and data, which are stored in correspondence with the object identifier "A514CZ", from the database 10410 (step S705). More specifically, "S001", "6701", "5000", and "carte blanche" are searched for and extracted. The data "S001", "6701", "5000", and "carte blanche" are output to the stock sale execution program execution unit 10404 that is executing the stock sale execution program as the application program corresponding to the service code "S001" (step S706).

The stock sale execution program execution unit 10404 executes processing of giving a selling order of the brand represented by the stock code data "6701" to the stock market on the basis of the stock code data "6701", share count data "5000", and execution condition data "carte blanche". The data of selling order execution result and service code are converted into a format displayable by the general-purpose browser program execution unit 10414 and output to the data transmission program execution unit 10412 (step S707).

The data transmission program execution unit 10412 transmits the processing result data and service code to the data reception program execution unit 10413 of the PC 10405 through the communication network 120 (step S708).

Upon receiving the processing result data and service code, the data reception program execution unit 10413 inputs the processing result data to the general-purpose browser program execution unit 10414 that executes the general-purpose browser program as the application program indicated by the service code (step S709). The general-purpose browser program execution unit 10414 executes rendering, i.e., adjusts the received processing result data to, e.g., the size of the display unit of the PC 10405 and displays the processing result on the display unit of the PC 10405.

The database 10410 stores only one set of a service code and data corresponding to the object identifier "A514CZ". However, a plurality of sets may exist. For example, a set of "S001", "6701", "5000", and "carte blanche" and a set of "S002", "6701", and "consolidated accounts" may be stored. "S002" is the service code of a stock brand company information providing program.

In this case, the data search program execution unit 10411 extracts two sets for the database 10410 as data corresponding to the object identifier "A514CZ".

The data search program execution unit 10411 may check the program (stock sale execution program in Fig. 13) that is being executed by the application server 10408, specify the service code "S001" corresponding to the program, and execute search on the basis of the service code "S001" and object identifier "A514CZ" received from the code reception program execution unit 10409 to detect only one set. In the example shown in Fig. 13, data is output to the stock sale execution program, i.e., the application program that is being executed by the application server 10408. If the stock brand company information providing program is running instead of the stock sale execution program, the corresponding service code is, e.g., "S002". Data "6701" and "consolidated accounts" are output to the stock brand company information providing program execution unit (not shown). The stock brand company information providing program execution unit may output the consolidated accounts data of the company A corresponding to the stock code data "6701" to the data transmission program execution unit 10412 in a format displayable on the PC 10405 by the general-purpose browser program execution unit 10414.

The data search program execution unit 10411 may inquire of the user about the desired one of the two extracted sets to extract only one set. More specifically, the extracted data are transmitted to the general-purpose browser program execution unit 10414 through the data transmission program execution unit 10412, communication network 120, and data reception program execution unit 10413 to display, on the display unit of the PC 10405, a window to make the user select data. When the user selects one set, the data search program execution unit 10411 receives information representing the selected set through the code transmission program execution unit 10407, communication network 120, and code reception program execution unit 10409.

The stock sale execution program may be a part of a stock dealing program. The service code stored in the database 10410 as a set may represent the stock dealing program, and the data search program execution unit 10411 may input only the stock code data "6701" to the stock dealing program. In this case, the final action (e.g., stock sale) is decided by, e.g., inquiring of the user about the desired action in the stock dealing program.

The stock sale execution program execution unit 10404 may be included in another server connected to the outside of the application server 10408 through the Internet. Data extracted by the data search program execution unit 10411 may be transmitted/received by a protocol such as TCP/IP or HTTP.

In this detailed example, only one stock code data "6701" corresponds to one service code "S001". However, a plurality of stock code data may correspond to a service code. For example, aiming at a service to simultaneously process a plurality of brands by one action, data "code=6701&share count=5000, code=6723&share count=1000" and "carte blanche" are stored in the database 10410 in correspondence with one object identifier. In this case, the type of management of the whole stock assets held by the user can be designated.

Assume that the user wants to change the data "code=6701&share count=5000, code=6723&share count=1000" (stock assets) corresponding to the object identifier at a timing to other stocks recommended by the securities company. In this case, the RFID reader 10403 is caused to sequentially read object identifiers stored in an RFID tag corresponding to the current stock assets and an RFID tag (e.g., issued by the securities company) corresponding to stock assets after change. The object identifiers are transmitted to the data search program execution unit 10411 through the code transmission program execution unit 10407, communication network 120, and code reception program execution unit 10409.

The data search program execution unit 10411 of the application server 10408 searches for and extracts data of stock assets corresponding to the two object identifiers and inputs, to a stock assets change program (e.g., service code "S004"), the current stock assets data "code=6701&share count=5000, code=6723&share count=1000" and stock assets data "code=6701&share count=4000, code=6723&share count=2000" after change. The stock assets change program calculates the number of shares to be sold/purchased of each designated brand included in the stock assets on the basis of the current stock assets data and the changed stock assets data. In addition, the stock assets change program creates the sale/purchase order schedule on the basis of the stock exchange rules within the current purchasing power (corresponding to cash). The stock assets change program sells and purchases stocks on the basis of the created schedule. If necessary, the stock assets change program deletes and invalidates the stock assets data before execution stored in the database 10410 and notifies the general-purpose browser program execution unit 10414 that the held stock assets have correctly been changed through the data transmission program execution unit 10412, communication network 120, and data reception program execution unit 10413.

Another method of changing stock assets will be described. The database 10410 stores the service code "S004" (indicating the stock assets change program) and data "79UYT4" (user ID). The stock assets change program knows the current stock assets and stock assets after change of the user ID "79UYT4". More specifically, the current stock assets and stock assets after change of the user ID "79UYT4" are stored at a predetermined position of the storage unit (not shown) of the application server 10408. The user causes the RFID reader 10403 to read an object identifier stored on a stock assets change RFID tag (the RFID tag is implanted in, e.g., a paper sheet on which the user name and the change contents of the stock assets are printed) that is issued by the securities company for exclusive use of his/her own. The RFID reader 10403 transmits the read object identifier to the data search program execution unit 10411 through the code transmission program execution unit 10407, communication network 120, and code reception program execution unit 10409. In the application server 10408, the data search program execution unit 10411 searches for and extracts the service code "S004" and user ID "79UYT4" corresponding to the object identifier from the database 10410 and inputs the data to the stock assets change program. The stock assets change program automatically sells and purchases stocks on the basis of the stock assets change contents of the user ID "79UYT4" known in advance, thereby changing the contents of the stock assets of the user ID "79UYT4".

As described above, according to this embodiment, since the service codes are managed on the side of the application server 408, a new service can easily be added, and the operation to be executed directly by the operator on the side of the client terminal 405 decreases.

### Fourth Embodiment

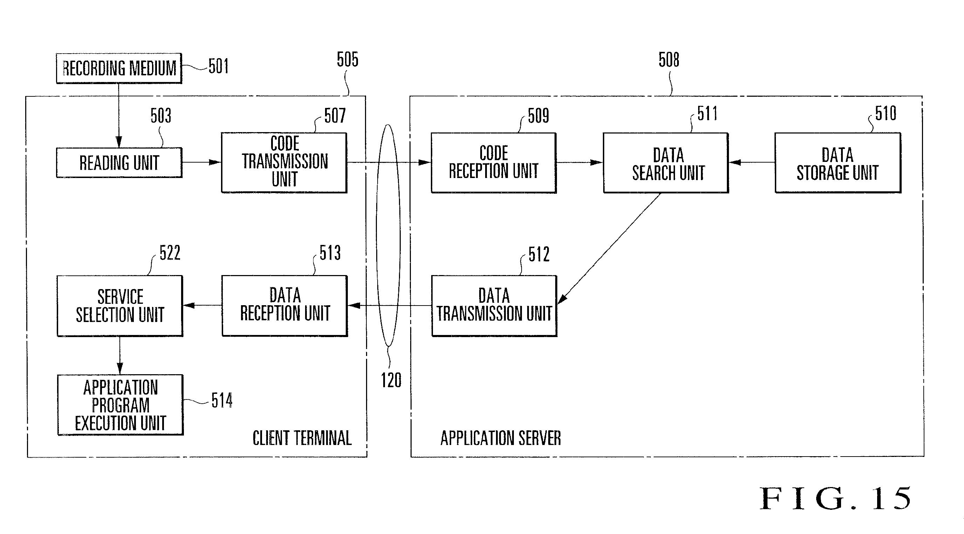

The fourth embodiment of the present invention will be described next with reference to the accompanying drawings. Fig. 15 is a block diagram showing an arrangement example of the fourth embodiment of the present invention.

The fourth embodiment of the present invention includes a recording medium 501, client terminal 505, application server 508, and communication network 120.

The recording medium 501 stores a unique object identifier. The client terminal 505 includes a reading unit (identifier reading means) 503, code transmission unit (code transmission means) 507, data reception unit (data reception means) 513, service selection unit (service selection means) 522, and application program execution unit (application program execution means) 514. The reading unit 503 reads the object identifier stored in the recording medium 501. The code transmission unit 507 transmits the object identifier to the application server 508 through the communication network 120. The data reception unit 513 receives data from the application server 508 through the communication network 120. The service selection unit 522 inputs the data received by the data reception unit 513 to an application program selected by the user. The application program execution unit 514 executes an application program.

The application server 508 includes a code reception unit (code reception means) 509, data storage unit (data storage means) 510, data search unit (data search means) 511, and data transmission unit (data transmission means) 512. The code reception unit 509 receives the object identifier from the client terminal 505 through the communication network 120. The data storage unit 510 stores data in advance. The data search unit 511 searches for and extracts data stored in the data storage unit 510. The data transmission unit 512 transmits the data extracted by the data search unit 511 to the client terminal 505 through the communication network 120.

The reading unit 503 moves close to or contacts the recording medium 501 to read the object identifier stored in the recording medium 501. The reading unit 503 outputs the read object identifier to the code transmission unit 507. Upon receiving the object identifier read by the reading unit 503, the code transmission unit 507 transmits the received object identifier to the code reception unit 509 of the application server 508 through the communication network 120.

The code reception unit 509 inputs the received object identifier to the data search unit 511. The data storage unit 510 stores in advance a plurality of sets of service codes and data in correspondence with an arbitrary object identifier. A service code is an identifier that uniquely identifies an application program to implement the service provided by the data processing system of the present invention.

The data search unit 511 extracts, from the data storage unit 510, all sets of service codes and data that are made in advance to correspond to the object identifier received from the code reception unit 509. The data search unit 511 outputs all the extracted sets of service codes and data to the data transmission unit 512.

The data transmission unit 512 transmits all the sets of service codes and data extracted by the data search unit 511 to the data reception unit 513 of the client terminal 505 through the communication network 120.

The data reception unit 513 outputs all the received sets of service codes and data to the service selection unit 522.

The service selection unit 522 causes the display unit (not shown) of the client terminal 505 to display all the sets of service codes and data received from the data reception unit 513 and display a window to make the user select application programs to be executed and data to be input to each application program.

When the user selects at least one of the sets of service codes and data, data combined with the service code in each set is input to the application program execution unit 514 that executes an application program indicated by each service code.

The application program execution unit 514 processes the data input to each application program.

The service selection unit 522 may operate without user selection such that all the sets of service codes and data received from the data reception unit 513 are executed by application programs. In this case, the data of each set of a service code and data is input to an application program corresponding to the service code of each set of the service code and data.

The service selection unit 522 may select only sets of service codes and data including service codes registered in advance in the service selection unit 522 from all the sets of service codes and data received from the data reception unit 513 without user selection and input data of each set of a service code and data to an application program corresponding to the service code. In this case, the service selection unit 522 stores in advance list data of the service codes of the application programs to be executed by downloading it from the application server 508 or making the user manually input it.

The service selection unit 522 may store the information of user selection result of the first time in the storage unit (not shown) of the client terminal 505. From the second time, application programs to which the data of sets of service codes and data are input may automatically be decided on the basis of the information of user selection result of the first time stored in the storage unit.

If there are a plurality of sets of service codes and data including identical service codes, the data transmission unit 512 may transmit one of those identical service codes as a representative contained in the data of the sets of service codes and data to the data reception unit 513 through the communication network 120.

If all the sets of service codes and data received from the data reception unit 513 include service codes that are identical or represent similar application programs whose operations can be recognized by the user with the same expression, the service selection unit 522 may display only the data on the display unit of the client terminal 505 without presenting the service codes and operations to make the user select application programs to be executed and data to be input to each application program. Examples of application programs whose operations can be recognized by the user with the same expression are a spreadsheet program developed by company A and a spreadsheet program developed by company B. The spreadsheet programs exhibit similar behaviors and receive data of similar characteristics. It is important for the user that the data is processed by a spreadsheet program. Words such as "developer A" and "developer B" on the window are relatively insignificant.

If an application program is not activated when the service selection unit 522 is to input data to the application program, the service selection unit 522 may cause the application program execution unit 514 to activate the application program and then input data to the activated application program.

The application program 514 can form either one program file or a partial function of a program file.

The data storage unit 510 can store the sets of object identifiers, service codes, and data either before or after the object identifiers are issued.

In storing an object identifier 502 and sets of service codes and data in correspondence with each other, the data storage unit 510 may handle a plurality of object identifiers as a set so that a set of a service code and data corresponds to the set of object identifiers. At this time, the set of object identifiers may specify the reading order of the reading unit 503.

In selecting at least one of the plurality of sets of service codes and data corresponding to an object identifier, the service selection unit 522 may check the application program that is being executed by the application program execution unit 514 of the client terminal 505 and automatically input, to the application program, the data of the set of service codes corresponding to the running application program.

The client terminal 505 incorporates a data processing program that causes a computer to execute processing of reading an object identifier, processing of transmitting the object identifier to the application server 508, processing of receiving, from the application server 508, a plurality of data and service codes as information uniquely indicating an application program to process the data, processing of making the user select one of the plurality of received data and an application program to which the data is to be input, processing of inputting the data selected by the user to the application program execution unit 514 that executes the application program selected by the user, and processing of causing the application program execution unit 514 to execute the application program selected by the user to process the data selected by the user.

The application server 508 incorporates a data processing program that causes a computer to execute processing of receiving an object identifier from the client terminal 505, processing of extracting a plurality of sets of service codes and data corresponding to the received object identifier from the data storage unit 510 that stores sets of service codes and data in correspondence with an object identifier, and processing of transmitting the plurality of extracted sets of service codes and data to the client terminal 505.

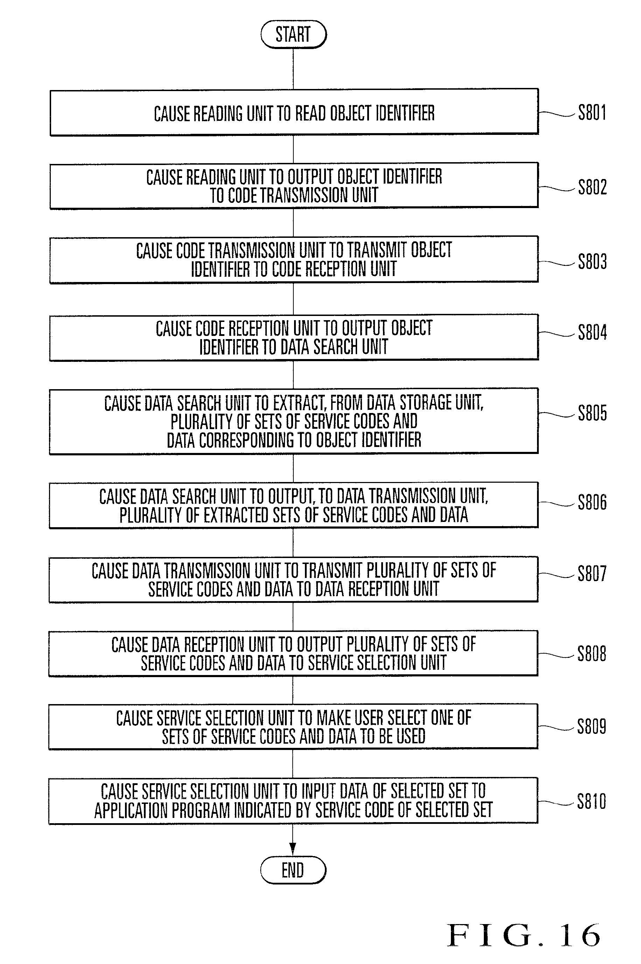

The operation of the fourth embodiment of the present invention will be described next with reference to the accompanying drawings. Fig. 16 is a flowchart for explaining the operation of the fourth embodiment of the present invention.

The reading unit 503 reads an object identifier stored in the recording medium 501 (step S801). The reading unit 503 outputs the read object identifier to the code transmission unit 507 (step S802). The code transmission unit 507 transmits the object identifier to the code reception unit 509 of the application server 508 through the communication network 120 (step S803). The code reception unit 509 outputs the received object identifier to the data search unit 511 (step S804).

The data search unit 511 extracts, from the data storage unit 510, all sets of service codes and data that are made in advance to correspond to the object identifier received from the code reception unit 509 (step S805). The data search unit 511 outputs all the extracted sets of service codes and data to the data transmission unit 512 (step S806).

The data transmission unit 512 transmits all the received sets of service codes and data to the data reception unit 513 of the client terminal 505 through the communication network 120 (step S807). The data reception unit 513 outputs all the received sets of service codes and data to the service selection unit 522 (step S808). The service selection unit 522 makes the user select an application program to which the received sets of service codes and data are to be input (step S809).

The service selection unit 522 inputs the sets of service codes and data to the application program selected by the user (step S810). The application program execution unit 514 processes the received data.

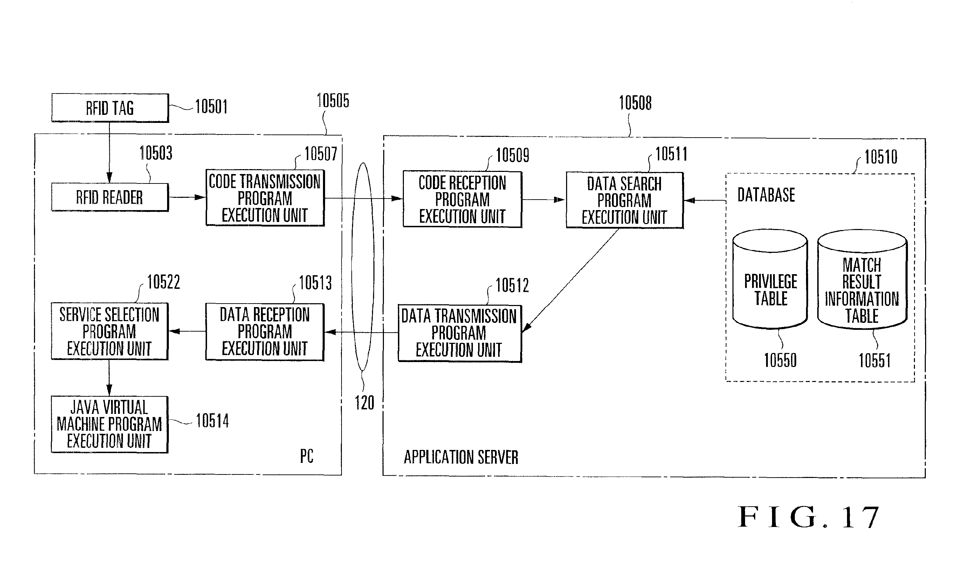

The fourth embodiment of the present invention will be described next by using a detailed example. Fig. 17 is a block diagram for explaining the arrangement of a detailed example of the fourth embodiment of the present invention.

A detailed example of the fourth embodiment of the present invention includes an RFID tag 10501, PC 10505, application server 10508, and communication network 120.

The RFID tag 10501 stores an object identifier. The PC 10505 includes an RFID reader 10503, code transmission program execution unit 10507, data reception program execution unit 10513, service selection program execution unit 10522, and Java^{®} virtual machine program execution unit 10514. The RFID reader 10503 reads the object identifier stored in the RFID tag 10501. The code transmission program execution unit 10507 implements the code transmission unit 507 and executes a code transmission program that causes the PC 10505 to transmit the object identifier to the application server 10508 through the communication network 120. The data reception program execution unit 10513 implements the data reception unit 513 and executes a data reception program that causes the PC 10505 to receive data from the application server 10508 through the communication network 120. The service selection program execution unit 10522 implements the service selection unit 522 and executes a service selection program that makes the user select data to be input to an application program. The Java virtual machine program execution unit 10514 executes a Java virtual machine program that executes a Java applet program.

The RFID tag 10501 includes a storage unit (not shown) to store an identifier or data and a wireless communication device (not shown). The RFID reader 10503 includes a wireless communication device (not shown) to read the identifier or data from the RFID tag 10501. Assume that the RFID tag 10501 has a function of storing an object identifier as a read-only unique identifier and transmitting only the object identifier to the RFID reader 10503. The RFID tag 10501 stores an object identifier "A514CZ" and is implanted in a ticket of a sport game. The user has got the ticket and watched the game in the match day.

The application server 10508 includes a code reception program execution unit 10509, database 10510, data search program execution unit 10511, and data transmission program execution unit 10512. The code reception program execution unit 10509 implements the code reception unit 509 and executes a code reception program that causes the application server 10508 to receive the object identifier from the PC 10505 through the communication network 120. The database 10510 implements the data storage unit 510 and stores sets of service codes and data in correspondence with an object identifier. The data search program execution unit 10511 implements the data search unit 511 and executes a data search program that causes the application server 10508 to search for and extract sets of service codes and data stored in the database 10510. The data transmission program execution unit 10512 implements the data transmission unit 512 and executes a data transmission program that causes the application server 10108 to transmit the sets of service codes and data to the PC 10505 through the communication network 120.

The database 10510 includes a match result information table 10551 and a privilege table 10550. The match result information table corresponding to a match result information browser (service code "S001") stores a set of the service code "S001" and score information of the game of the ticket in correspondence with the object identifier implanted in the ticket. For example, the match result information table 10551 stores a set of the service code "S001" and data of score information of a match of Blue Rockets vs. Red Rockets on October 17, 2003 in correspondence with the object identifier "A514CZ". The privilege table 10550 corresponding to a Java virtual machine program (service code "S002") stores a binary code of a Java applet (a downloadable program that is described by a Java language and is executable by the Java virtual machine program execution unit 10514 of the client terminal 10505) which allows, if the team on the side of the stand of the ticket has won, the user to enjoy an animation program showing the team in action. For example, the privilege table 10550 stores the binary program (corresponding to data for the Java virtual machine program) of a Java applet to play back the match by animation if the stand-side team has won in the match day in correspondence with the object identifier "A514CZ".

The PC 10505 and application server 10508 are connected through the communication network 120.

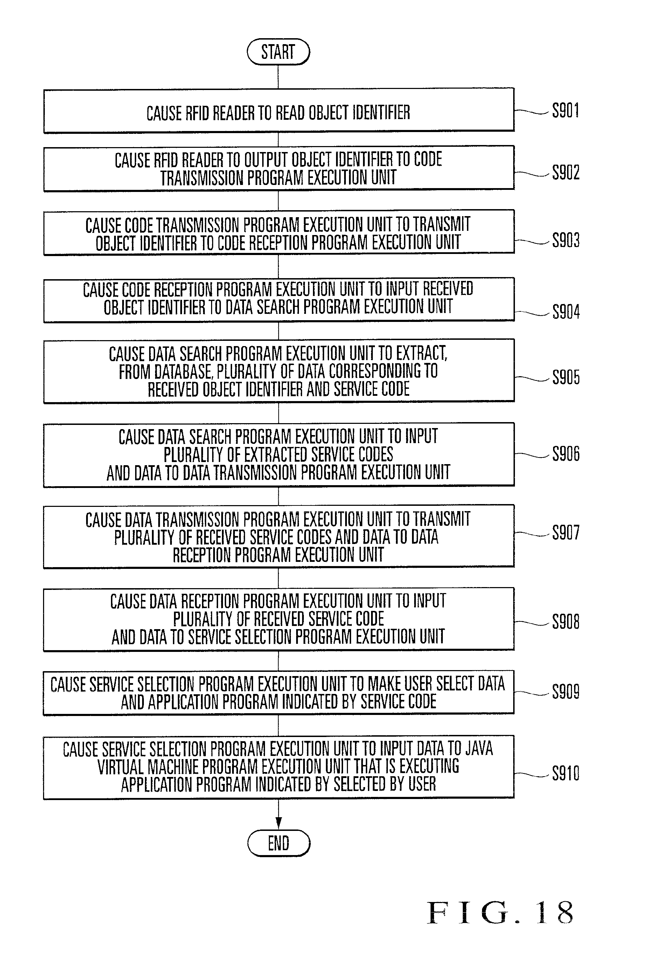

The operation of a detailed example of the fourth embodiment of the present invention will be described next with reference to the accompanying drawings. Fig. 18 is a flowchart for explaining the operation of a detailed example of the fourth embodiment of the present invention.

The user of the PC 10505 moves the RFID tag 10501 close to the RFID reader 10503 so that the RFID reader 10503 reads the object identifier stored in the RFID tag 10501 (step S901). The RFID reader 10103 outputs the read object identifier "A514CZ" to the code transmission program execution unit 10507 (step S902).

The code transmission program execution unit 10507 transmits the object identifier "A514CZ" to the code reception program execution unit 10509 of the application server 10508 through the communication network 120 (step S903).

Upon receiving the object identifier "A514CZ", the code reception program execution unit 10509 outputs the received object identifier "A514CZ" to the data search program execution unit 10511 (step S904).

The data search program 10511 searches for and extracts all sets of service codes and data, which are stored in correspondence with the object identifier "A514CZ", from the database 10510 (step S905). In this example, the set of score information data and service code "S002" is extracted from the match result information table 10551, and the set of animation program data and service code "S001" is extracted from the privilege table 10550.

The data search program 10511 outputs all the extracted sets of data and service codes to the data transmission program execution unit 10512 (step S906). The data transmission program execution unit 10512 transmits all the sets of data and service codes output from the data search program 10511 to the data reception program execution unit 10513 of the PC 10505 through the communication network 120 (step S907).

Upon receiving all the sets of data and service codes, the data reception program execution unit 10513 outputs all the received sets of data and service codes to the service selection program execution unit 10522 (step S908).

The service selection program execution unit 10522 makes the user select one of the received sets of service codes and data as data to be executed (step S909). Each of the sets of service codes and data input to the data reception program execution unit 10513 contains information about the data. The pieces of information are displayed on the display unit of the PC 10505 so that the user can select one of the received sets of service codes and data as data to be executed. The service selection program execution unit 10522 stores sets of service codes and activation methods of Java virtual machine programs corresponding to the service codes. More specifically, the service selection program execution unit 10522 stores service codes and activation methods of Java virtual machine programs corresponding to the service codes at predetermined positions of the storage unit of the PC 10505.

The service selection program execution unit 10522 inputs the data of the set selected by the user to the Java virtual machine program represented by the service code of the set selected by the user (step S910). The Java virtual machine program execution unit 10514 executes the Java virtual machine program on the basis of the received data. For example, assume that the user selects an animation program as the data of the set containing the service code "S002". The service selection program execution unit 10522 activates a Java virtual machine program corresponding to the service code "S002" selected by the user and inputs, to the Java virtual machine program execution unit 10514, animation program data as the data contained in the same set as the service code "S002" received from the application server 10508.

The Java virtual machine program execution unit 10514 executes the received animation program and displays animation on the display unit of the PC 10505.

After the data transmission program execution unit 10512 transmits the sets of service codes and data to the data reception program execution unit 10513 through the communication network, the communication network 120 may be disconnected from the PC 10505 and application server 10508. Even in this case, service selection and execution of the Java virtual machine program can be done without any problem because the PC 10505 has already received the sets of service codes and data necessary for executing the Java virtual machine program.

The service selection program execution unit 10522 may temporarily store the sets of service codes and data in a file in a storage device (not shown) of the PC 10505. When the user activates one of programs corresponding to the service codes later, the program reads out and executes the data stored in the storage device of the PC 10505. In file storage, only data with a predetermined name may be stored in the same folder as that of a program corresponding to a service code. The program corresponding to the service code may always refer to the file if the data with the predetermined name is present.

In this operation example, the following application is possible. That is, in, e.g., a game program, an RFID tag storing an object identifier representing a specific game character is implanted in a trading card representing the game character. Various kinds of data to raise the level of the character are stored in the application server. The RFID reader reads the object identifier stored in the RFID tag. Various kinds of data (or the data of not only one character but a plurality of characters) to raise the level of the character are downloaded from the application server and replaced with the original data. When the game program is activated next, the level of the character in the game rises.

Alternatively, the user acquires a trading card which has an RFID tag storing an object identifier of a character who is absent in the game at first. The RFID reader reads the object identifier stored in the RFID implanted in the trading card. The application server stores the full data of the character or a partial correction program of the game program in advance. When the client terminal downloads the full data of the character or the partial correction program of the game program from the application server, the game world can be expanded later. If data is acquired not from the card itself but from the application server, it is unnecessary to mind the data storage capacity of the card. In addition, the data can be upgraded easily, or data oriented for a plurality of services can be added at an arbitrary timing.

As described above, according to this embodiment, all sets of service codes and data corresponding to each other are transmitted from the application server 508 to the client terminal 505. Hence, the sets of service codes and data can be executed on the side of the client terminal 505 in accordance with an arbitrary order and selection. When a plurality of associated services are to be executed, the number of times of data transmission from the application server 508 to the client terminal 505 can be reduced. Even when the client terminal 505 and application server 508 are not compatible with continuous connection of the communication network 120 such as the Internet, the user of the client terminal 505 can enjoy all services after the communication network 120 between the client terminal 505 and the application server 508 is disconnected.

### Fifth Embodiment

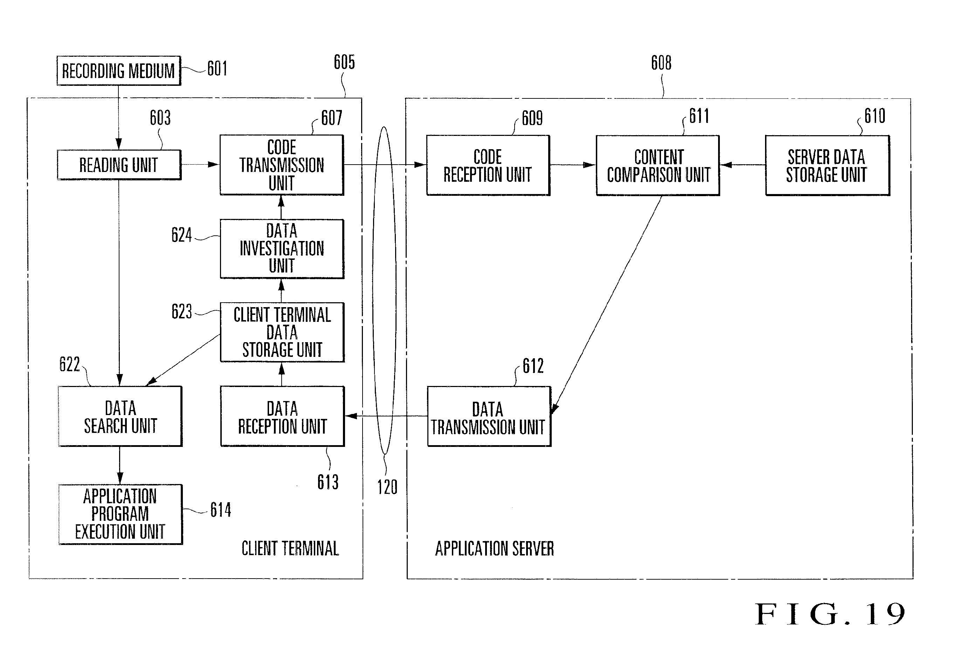

The fifth embodiment of the present invention will be described next with reference to the accompanying drawings. Fig. 19 is a block diagram showing an arrangement example of the fifth embodiment of the present invention.

The fifth embodiment of the present invention includes a recording medium 601, client terminal 605, application server 608, and communication network 120.

The recording medium 601 stores a unique object identifier. The client terminal 605 includes a reading unit (identifier reading means) 603, client terminal data storage unit (client terminal data storage means) 623, data investigation unit (data investigation means) 624, code transmission unit (code transmission means) 607, data reception unit (data reception means) 613, data search unit (data search means) 622, and application program execution unit (application program execution means) 614. The reading unit 603 reads the object identifier stored in the recording medium 601. The client terminal data storage unit 623 stores in advance object identifiers, service codes as information representing application programs, and data to be processed by the application programs in correspondence with each other. The data investigation unit 624 generates index information as information representing a set of an object identifier, service code, and data stored in the client terminal data storage unit 623 in advance in correspondence with each other. The code transmission unit 607 transmits the index information generated by the data investigation unit 624 to the application server 608 through the communication network 120. The data reception unit 613 receives information from the application server 608 through the communication network 120 and stores data in the client terminal data storage unit 623 on the basis of the received information. The data search unit 622 searches for and extracts, from the client terminal data storage unit 623, a service code and data corresponding to the object identifier read by the reading unit 603 and inputs the extracted data to the application program corresponding to the extracted service code. The application program execution unit 614 executes the application program.

The application server 608 includes a code reception unit (code reception means) 609, server data storage unit (server data storage means) 610, content comparison unit (content comparison means) 611, and data transmission unit (data transmission means) 612. The code reception unit 609 receives index information from the client terminal 605 through the communication network 120. The server data storage unit 610 stores in advance object identifiers, service codes, and data in correspondence with each other. The content comparison unit 611 compares the index information received by the code reception unit 609 with the sets of object identifiers, service codes, and data stored in the server data storage unit 610, extracts information to be transmitted to the client terminal 605, and generates difference update information as extracted information. The data transmission unit 612 transmits the difference update information generated by the content comparison unit 611 to the client terminal 605 through the communication network 120.

The data investigation unit 624 may be activated in accordance with a predetermined schedule.

The data investigation unit 624 may be activated when the data search unit 622 determines that the client terminal data storage unit 623 does not store the set of a service code and data corresponding to an object identifier read by the reading unit 603. At this time, the data investigation unit 624 outputs the object identifier to the code transmission unit 607 instead of creating index information. The code transmission unit 607 transmits the object identifier to the code reception unit 609 of the application server 608. The code reception unit 609 outputs the received object identifier to the content comparison unit 611. The content comparison unit 611 extracts, from the server data storage unit 610, the set of a service code and data corresponding to the object identifier to generate difference update information and outputs it to the data transmission unit 612. The data transmission unit 612 transmits the difference update information to the data reception unit 613 of the client terminal 605. On the basis of the received difference update information, the data reception unit 613 stores the set of the object identifier, service code, and data in the client terminal data storage unit 623 such that the contents of difference update in the client terminal data storage unit 623 equal contents about the object identifier read by the reading unit 603.

The data investigation unit 624 may be activated when a new application program is installed, setting of an already installed application program is changed from an unstable state to a usable state, or an already installed application program is activated, and the data search unit 622 cannot detect any data to be combined with the service code corresponding to the application program. At this time, the data investigation unit 624 outputs the service code to the code transmission unit 607 instead of creating index information. The code transmission unit 607 transmits the service code to the code reception unit 609 of the application server 608. The code reception unit 609 outputs the received service code to the content comparison unit 611. The content comparison unit 611 extracts, from the server data storage unit 610, the set of an object identifier and data corresponding to the service code to generate difference update information and outputs it to the data transmission unit 612. The data transmission unit 612 transmits the difference update information to the data reception unit 613 of the client terminal 605. On the basis of the received difference update information, the data reception unit 613 stores the set of the object identifier, service code, and data in the client terminal data storage unit 623 such that the contents of difference update in the client terminal data storage unit 623 match contents about the new service code.

The data search unit 622 may check the application program that is being executed by the application program execution unit 614 and extract, from the client terminal data storage unit 623, data corresponding to the set of the service code corresponding to the application program that is being executed by the application program execution unit 614 and the object identifier read by the reading unit 603. At this time, if the client terminal data storage unit 623 does not store the data corresponding to the set of the service code corresponding to the application program that is being executed by the application program execution unit 614 and the object identifier read by the reading unit 603, the data investigation unit 624 is activated. The data investigation unit 624 outputs, to the code transmission unit 607, the set of the service code corresponding to the application program that is being executed by the application program execution unit 614 and the object identifier read by the reading unit 603. The code transmission unit 607 transmits the set of the service code and object identifier to the code reception unit 609 of the application server 608. The code reception unit 609 outputs the received set of the service code and object identifier to the content comparison unit 611. The content comparison unit 611 extracts, from the server data storage unit 610, data corresponding to the set of the object identifier and service code to generate difference update information and outputs it to the data transmission unit 612. The data transmission unit 612 transmits the difference update information to the data reception unit 613 of the client terminal 605. On the basis of the received difference update information, the data reception unit 613 stores the set of the object identifier, service code, and data in the client terminal data storage unit 623 such that the contents of difference update in the client terminal data storage unit 623 match contents about the set of the service code corresponding to the application program that is being executed by the application program execution unit 614 and the object identifier read by the reading unit 603.

The index information generated by the data investigation unit 624 may be obtained by substituting all or some of the contents stored in the client terminal data storage unit 623 to the update date. In this case, the content comparison unit 611 compares the update date of data stored in the server data storage unit 610 with the update date of index information. If the server data storage unit 610 stores new contents, the content comparison unit 611 generates difference update information on the basis of the contents and outputs it to the data transmission unit 612. The data transmission unit 612 transmits the difference update information to the data reception unit 613 of the client terminal 605. On the basis of the received difference update information, the data reception unit 613 executes difference update of the contents stored in the client terminal data storage unit 623.

The user of the client terminal 605 may independently update the contents of the client terminal data storage unit 623 to generate a new set of an object identifier, service code, and data. In this case, on the basis of index information generated by the data investigation unit 624, the content comparison unit 611 compares the contents stored in the client terminal data storage unit 623 with the contents stored in the server data storage unit 610. If the contents stored in the server data storage unit 610 are short, the contents stored in the server data storage unit 610 are updated on the basis of the index information. As another update method, in the application server 608, the content comparison unit 611 generates index information on the basis of the contents stored in the server data storage unit 610 and outputs it to the data transmission unit 612. The data transmission unit 612 transmits the index information to the data reception unit 613 of the client terminal 605. On the basis of the received index information, the data reception unit 613 compares the contents stored in the client terminal data storage unit 623 with the contents stored in the server data storage unit 610 and specifies the short portion of the contents stored in the server data storage unit 610. The data investigation unit 624 extracts only the short contents and transmits them to the content comparison unit 611 of the application server 608 through the code transmission unit 607, communication network 120, and code reception unit 609. The content comparison unit 611 stores the received contents in the server data storage unit 610 to do difference update of the contents stored in the server data storage unit 610.

Assume that the data search unit 622 searches the contents stored in the client terminal data storage unit 623 and extracts a plurality of sets of service codes and data. In this case, the data search unit 622 may display sets of application programs and data corresponding to the plurality of service codes on the display unit (not shown) of the client terminal 605 to make the user select a set of an application program and data to be executed and input the data to the application program execution unit 614 that executes the application program selected by the user.

If the data search unit 622 searches the contents stored in the client terminal data storage unit 623 and extracts a plurality of sets of service codes and data, the application program execution unit 614 may execute all sets of application programs and data corresponding to the plurality of service codes.

Assume that the data search unit 622 searches the contents stored in the client terminal data storage unit 623 and extracts a plurality of sets of service codes and data. In this case, the data search unit 622 may cause the application program execution unit 614 to execute only a predetermined application program in sets of application programs and data corresponding to the plurality of service codes and input the data to the application program execution unit 614. The application program to be executed by the application program execution unit 614 may be decided by making the user select an application program only for the first time from the result obtained by searching and extracting the contents stored in the client terminal data storage unit 623. From the second time, the application program is decided in accordance with the contents of the first selection by the user.

The application program can form either one program file or a partial function of a program file.

The client terminal data storage unit 623 and server data storage unit 610 can store the sets of object identifiers, service codes, and data either before or after the object identifiers are issued.

In storing an object identifier and a set of a service code and data in correspondence with each other, the data client terminal data storage unit 623 and server data storage unit 610 may handle a plurality of object identifiers as a set so that a set of a service code and data corresponds to the set of object identifiers. At this time, the set of object identifiers may specify the reading order of the reading unit 603.

The client terminal 605 incorporates a data processing program that causes a computer to execute processing of generating index information as information representing contents stored in the client terminal data storage unit 623 that stores object identifiers, service codes, and data in correspondence with each other, processing of transmitting the generated index information to the application server 608, processing of receiving information from the application server 608, and processing of storing the information received from the application server 608 in the client terminal data storage unit 623.

The client terminal 605 also incorporates a data processing program that causes a computer to execute processing of reading an object identifier, processing of extracting a service code and data corresponding to the read object identifier from the client terminal data storage unit 623 that stores object identifiers, service codes, and data in correspondence with each other, processing of inputting the extracted data to the application program execution unit 614 that executes an application program indicated by the extracted service code, and processing of causing the application program execution unit 614 to execute the application program to process the data.

The application server 608 incorporates a data processing program that causes a computer to execute processing of receiving, from the client terminal 605, index information as information representing the contents stored in the client terminal 605, processing of comparing the index information with contents stored in the server data storage unit 610 that stores service codes, object identifiers, and data in correspondence with each other and extracting information that is stored in the server data storage unit 610 but not in the client terminal 605, and processing of transmitting the extracted information to the client terminal 605.

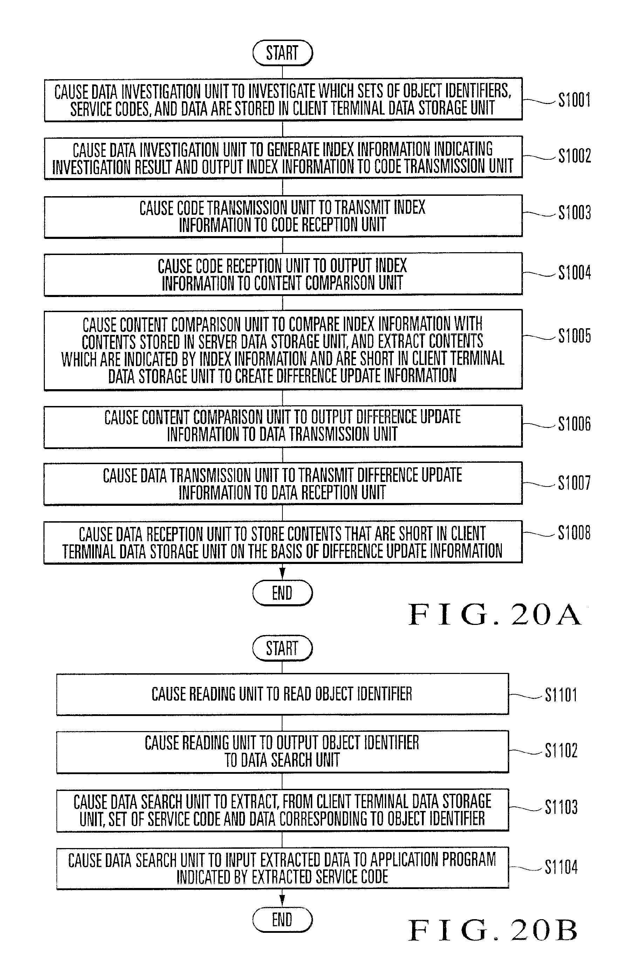

The operation of the fifth embodiment of the present invention will be described next with reference to the accompanying drawings. Figs. 20A and 20B are flowcharts for explaining the operation of the fifth embodiment of the present invention.

The data investigation unit 624 investigates and specifies a set of an object identifier, service code, and data stored in the client terminal data storage unit 623 (step S1001). The data investigation unit 624 generates index information representing the specified set of the object identifier, service code, and data and outputs it to the code transmission unit 607 (step S1002).

The code transmission unit 607 transmits the index information to the code reception unit 609 of the application server 608 through the communication network 120 (step S1003). The code reception unit 609 outputs the received index information to the content comparison unit 611 (step S1004).

The content comparison unit 611 compares the index information with contents stored in the server data storage unit 610, extracts contents that are stored in the server data storage unit 610 but not in the client terminal data storage unit 623, and generates difference update information on the basis of the extracted contents (step S1005). The content comparison unit 611 outputs the generated difference update information to the data transmission unit 612 (step S1006).

The data transmission unit 612 transmits the received difference update information to the data reception unit 613 of the client terminal 605 through the communication network 120 (step S1007). On the basis of the received difference update information, the data reception unit 613 stores, in the client terminal data storage unit 623, the contents that are not stored in the client terminal data storage unit 623 (step S1008).

The reading unit 603 reads an object identifier stored in the recording medium 601 (step S1101) and outputs the read object identifier to the data search unit 622 (step S1102).

The data search unit 622 searches for and extracts, from the client terminal data storage unit 623, a set of a service code and data corresponding to the received object identifier (step S1103). The data search unit 622 inputs the data to the application program execution unit 614 that executes an application program indicated by the service code in the extracted set of the service code and data (step S1104). The application program execution unit 614 executes the application program indicated by the service code to process the received data.

The operation in steps S1001 to S1008 may be executed parallel to the operation in step S1101 to S1104.

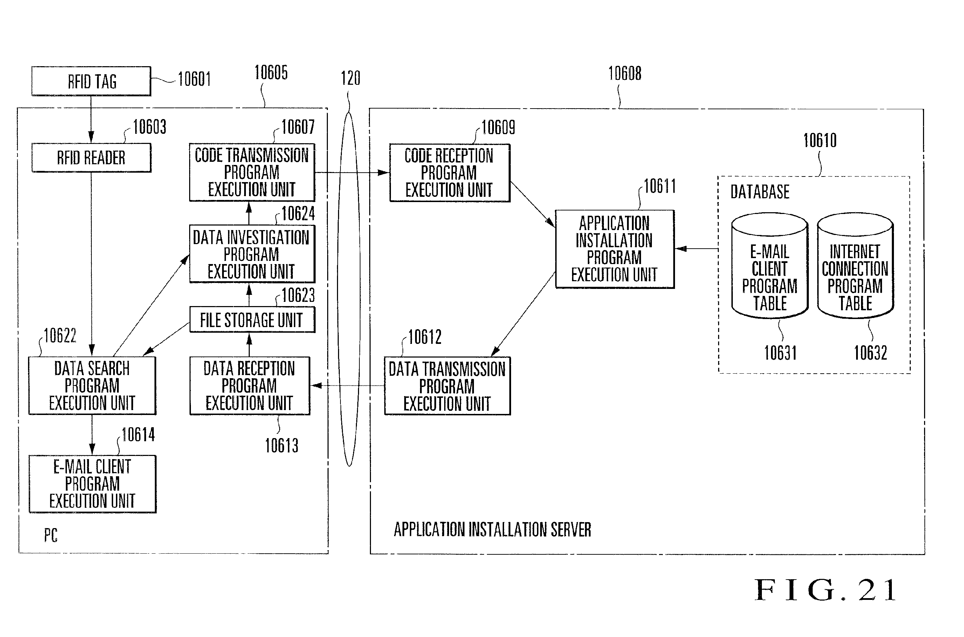

The fifth embodiment of the present invention will be described next by using a detailed example. Fig. 21 is a block diagram for explaining the arrangement of a detailed example of the fifth embodiment of the present invention.

A detailed example of the fifth embodiment of the present invention includes an RFID tag 10601, PC 10605, application installation server 10608, and communication network 120.

The RFID tag 10601 stores an object identifier. The PC 10605 includes an RFID reader 10603, file storage unit 10623, data investigation program execution unit 10624, code transmission program execution unit 10607, data reception program execution unit 10613, data search program execution unit 10622, and e-mail client program execution unit 10614. The RFID reader 10603 reads the object identifier stored in the RFID tag 10601. The file storage unit 10623 implements the client terminal data storage unit 623 that stores in advance object identifiers, service codes as information representing application programs, and data to be processed by the application programs in correspondence with each other. The data investigation program execution unit 10624 implements the data investigation unit 624 and executes a data investigation program that generates index information as information representing a set of an object identifier, service code, and data stored in the file storage unit 10623 in advance in correspondence with each other. The code transmission program execution unit 10607 implements the code transmission unit 607 and executes a code transmission program that causes the PC 10605 to transmit the index information to the application installation server 10608 through the communication network 120. The data reception program execution unit 10613 implements the data reception unit 613 and executes a data reception program that receives information from the application installation server 10608 through the communication network 120 and stores the information in the file storage unit 10623 on the basis of the received information. The data search program execution unit 10622 implements the data search unit 622 and executes a data search program that searches for and extracts, from the file storage unit 10623, a service code and data corresponding to the object identifier read by the reading unit 10603 and inputs the extracted data to the application program corresponding to the extracted service code. The e-mail client program execution unit 10614 implements the application program execution unit 614 and executes an e-mail client program that sends/receives e-mail through the communication network 120.

The RFID tag 10601 includes a storage unit (not shown) to store an identifier or data and a wireless communication device (not shown). The RFID reader 10603 includes a wireless communication device (not shown) to read the identifier or data from the RFID tag 10601. Assume that the RFID tag 10601 has a function of storing an object identifier as a read-only unique identifier and transmitting only the object identifier to the RFID reader 10603. The RFID tag 10601 stores an object identifier "A514CZ". The user has already subscribed for an Internet connection service in an ISP (Internet Service Provider). The ISP mails an application installation ticket with the RFID tag 10601 to the user in advance as a part of providing the Internet connection service. Especially, this ticket has a description of, e.g., "e-mail client setup".

The application installation server 10608 includes a code reception program execution unit 10609, database 10610, application installation program execution unit 10611, and data transmission program execution unit 10612. The code reception program execution unit 10609 implements the code reception unit 609 and receives index information from the PC 10605 through the communication network 120. The database 10610 implements the server data storage unit 610 and stores in advance sets of object identifiers, service codes, and data in correspondence with each other. The application installation program execution unit 10611 implements the content comparison unit 611 and executes an application installation program that compares the index information received by the code reception program execution unit 10609 with the sets of object identifiers, service codes, and data stored in the database 10610, extracts information to be transmitted to the PC 10605, and generates difference update information as extracted information. The data transmission program execution unit 10612 executes a data transmission program that causes the application installation server 10608 to transmit the difference update information generated by the application installation program execution unit 10611 to the PC 10605 through the communication network 120.

The PC 10605 and application server 10608 are connected through the communication network 120.

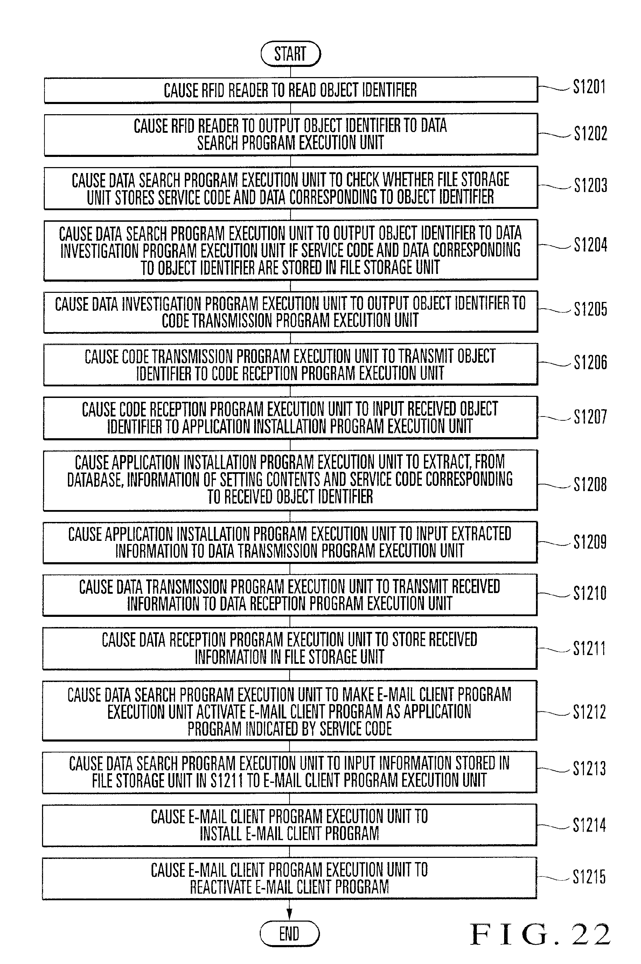

The operation of a detailed example of the fifth embodiment of the present invention will be described next with reference to the accompanying drawings. Fig. 22 is a flowchart for explaining the operation of a detailed example of the fifth embodiment of the present invention.

The user of the PC 10605 moves the RFID tag 10601 close to the RFID reader 10603 so that the RFID reader 10603 reads the object identifier stored in the RFID tag 10601 (step S1201). The RFID reader 10603 outputs the read object identifier "A514CZ" to the data search program execution unit 10622 (step S1202).

The data search program execution unit 10622 checks whether a set of a service code and data corresponding to the object identifier "A514CZ" is stored in the file storage unit 10623 (step S1203). Assume that it is found by check that the file storage unit 10623 stores no set of a service code and data corresponding to the object identifier "A514CZ". The data search program execution unit 10622 outputs the object identifier "A514CZ" to the data investigation program execution unit 10624 (step S1204).

The data investigation program execution unit 10624 outputs the object identifier "A514CZ" to the code transmission program execution unit 10607 (step S1205). The data investigation program may be identical to the data search program.

The code transmission program execution unit 10607 transmits the object identifier "A514CZ" to the code reception program execution unit 10609 through the communication network 120 (step S1206). The code reception program execution unit 10609 inputs the received object identifier "A514CZ" to the application installation program execution unit 10611 (step S1207).

The database 10610 stores object identifiers, service codes, and data in correspondence with each other and includes an e-mail client program table 10631 that stores information about the e-mail client program, and an Internet connection program table 10632 that stores information about the Internet connection program. The e-mail client program table 10631 stores "S001" representing the e-mail client program as a service code corresponding to the object identifier "A514CZ", and information of setting contents to be used as various kinds of settings in the e-mail client program as data corresponding to the object identifier "A514CZ". The setting content information contains, e.g., a user ID and connection destination mail server address prepared on the ISP side, and a password sent from the user to the ISP at the time of subscription for the Internet connection service.

The application installation program execution unit 10611 searches the database 10610 and extracts the service code "S001" and setting content information corresponding to the object identifier "A514CZ" (step S1208). The application installation program execution unit 10611 outputs the extracted information to the data transmission program execution unit 10612 in correspondence with the object identifier "A514CZ" (step S1209).

The data transmission program execution unit 10612 transmits the information extracted by the application installation program execution unit 10611 to the data reception program execution unit 10613 through the communication network 120 in correspondence with the object identifier "A514CZ" (step S1210). The data reception program execution unit 10613 stores the received information in the file storage unit 10623 (step S1211).

During this time (from step S1205 to step S1211), the data search program execution unit 10622 waits until the necessary service code and data are stored in the file storage unit 10623. The file storage unit 10623 stores, as, e.g., a file, a means for specifying the directory path of an application program on the basis of a service code stored in the file storage unit 10623. The e-mail client program execution unit 10614 is designed to install itself in the target PC on the basis of a designated setting file at the first activation time. From the second time, the e-mail client program execution unit 10614 is activated in accordance with the settings installed at the first time.

When the file storage unit 10623 stores the set of the service code and data corresponding to the object identifier "A514CZ", the data search program execution unit 10622 extracts the service code "S001" corresponding to the object identifier "A514CZ", causes the e-mail client program execution unit 10614 to activate the application program, i.e., the e-mail client program corresponding to the service code (step S1212), and inputs the data, i.e., the setting content information contained in the set of the service code "S001" of the e-mail client program to the e-mail client program (step S1213).

Since the e-mail client program is activated for the first time, the e-mail client program execution unit 10614 executes automatic installation on the basis of the setting content information (step S1214).

When installation of the e-mail client program is ended, the e-mail client program execution unit 10614 displays a message representing the end of installation on the display unit of the PC 10605 and activates the e-mail client program 10614 for the second time (step S1215).

The e-mail client program is stored in the storage unit (not shown) of the PC 10605. If the storage unit of the PC 10605 stores no e-mail client program, the application program of the corresponding service code may be received from the application installation server 10608 simultaneously with or after service code reception by the data reception program execution unit 10613. The application installation server 10608 may store the application program in advance.

In this detailed example, the PC 10605 receives the set of the service code and data from the application installation server 10608 after the RFID reader 10603 reads the object identifier. Instead, the data investigation program execution unit 10624 may periodically investigate the contents stored in the file storage unit 10623 and transmit the investigated contents to the application installation program execution unit 10611 of the application installation server 10608 through the code transmission program execution unit 10607, communication network 120, and code reception program execution unit 10609. On the basis of the contents investigated by the data investigation program execution unit 10624, the application installation program execution unit 10611 may transmit a set of an object identifier, service code, and data for an object identifier that is not stored in the database 10610 but not in the file storage unit 10623 to the data reception program execution unit 10613 through the data transmission program execution unit 10612 and communication network 120. At this time, the application installation program execution unit 10611 may be designed to automatically install the application program corresponding to the service code newly transmitted to the data reception program execution unit 10613 and, when the RFID reader 10603 reads the object identifier "A514CZ" for the first time, normally activate the application program from the state after installation.

In this detailed example, only one set of a service code and data corresponds to the object identifier '"A514CZ". However, a plurality of sets may exist. For example, an e-mail client program available from company A and an e-mail client program available from company B require different setting data. In this case, the e-mail client program table 10631 of the database 10610 stores a set of an "e-mail client program available from company A" and "setting data for the e-mail client program available from company A" and a set of an "e-mail client program available from company B" and "setting data for the e-mail client program available from company B" in correspondence with the object identifier "A514CZ". The application installation program execution unit 10611 transmits these sets to the data reception program execution unit 10613 through the data transmission program execution unit 10612 and communication network 120. The data reception program execution unit 10613 stores the received sets in the file storage unit 10623. At the first activation time, the data search program execution unit 10622 displays on the display unit of the PC 10605 to notify the user that the two e-mail client programs are present and make the user select an e-mail client program to be used. The application program selected by the user is installed. From the second data search, the application program selected by the user at the first time is activated.

In this detailed example, if the application program to be executed by the e-mail client program execution unit 10614 is a file storage processing program, data having a file format may temporarily be stored in a removable storage medium outside the PC 10605. Then, the storage medium is connected to a device outside the PC 10605 so that the data is processed in the external device. In this case, the necessary condition for the application program executed in the external device to run is data storage processing in the storage device by the file storage processing program. Hence, the file storage processing program may be regarded as a part of the application program executed on the external device.

As described above, according to this embodiment, sets of service codes and data necessary in reading an object identifier in the client terminal 605 are stored in the client terminal data storage unit 623 of the client terminal 605 in advance. For this reason, the number of times of connection between the client terminal 605 and the application server 608 in reading the object identifier can be reduced, and a service with higher speed can be provided.

### Sixth Embodiment

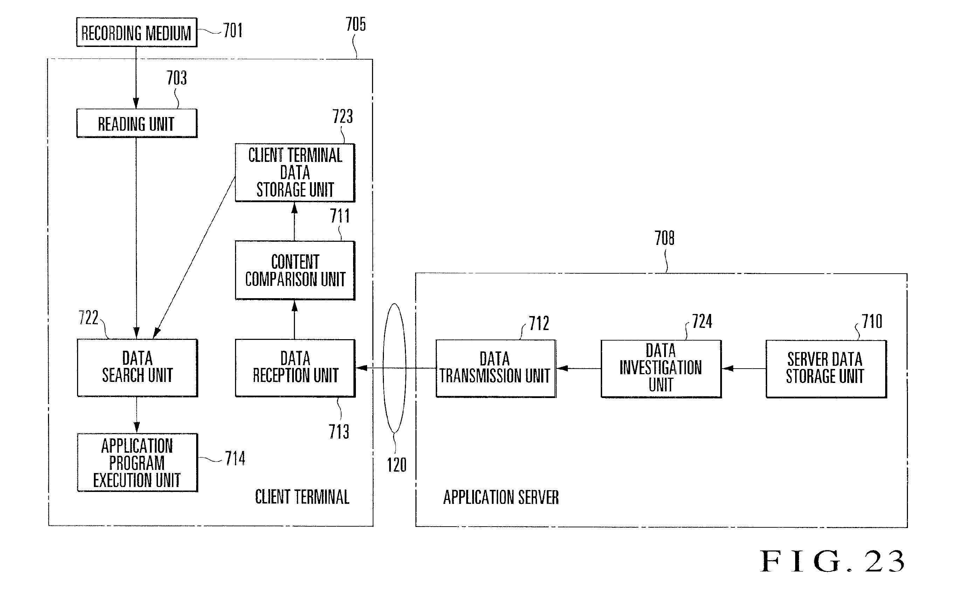

The sixth embodiment of the present invention will be described next with reference to the accompanying drawings. Fig. 23 is a block diagram showing an arrangement example of the sixth embodiment of the present invention.

The sixth embodiment of the present invention includes a recording medium 701, client terminal 705, application server 708, and communication network 120.

The recording medium 701 stores a unique object identifier. The client terminal 705 includes a reading unit (identifier reading means) 703, client terminal data storage unit (client terminal data storage means) 723, data reception unit (data reception means) 713, content comparison unit (content comparison means) 711, data search unit (data search means) 722, and application program execution unit (application program execution means) 714. The reading unit 703 reads the object identifier stored in the recording medium 701. The client terminal data storage unit 723 stores in advance object identifiers, service codes as information representing application programs, and data to be processed by the application programs in correspondence with each other. The data reception unit 713 receives information from the application server 708 through the communication network 120. The content comparison unit 711 compares the information received by the data reception unit 713 with the sets of object identifiers, service codes, and data stored in the client terminal data storage unit 723 in advance in correspondence with each other, and if the contents stored in the client terminal data storage unit 723 are short in the information received by the data reception unit 713, stores the information received by the data reception unit 713 in the client terminal data storage unit 723. The data search unit 722 searches for and extracts, from the client terminal data storage unit 723, a service code and data corresponding to the object identifier read by the reading unit 703 and inputs the extracted data to the application program corresponding to the extracted service code. The application program execution unit 714 executes the application program.

The application server 708 includes a server data storage unit (server data storage means) 710, data investigation unit (data investigation means) 724, and data transmission unit (data transmission means) 712. The server data storage unit 710 stores in advance object identifiers, service codes, and data in correspondence with each other. The data investigation unit 724 investigates the contents stored in the server data storage unit 710 and generates storage content information representing the contents stored in the server data storage unit 710. The data transmission unit 712 transmits the storage content information generated by the data investigation unit 724 to the client terminal 705 through the communication network 120.

The client terminal 705 and application server 708 are connected through the communication network 120.

The content comparison unit 711 compares the storage content information received by the data reception unit 713 with the contents stored in the client terminal data storage unit 723, extracts, from the storage content information as update contents, contents that are short in the client terminal data storage unit 723, and stores the update contents in the data storage unit 723.

If the set of the service code and data corresponding to the object identifier read by the reading unit 703 is not stored in the client terminal data storage unit 723, the content comparison unit 711 may store the object identifier read by the reading unit "703. When the data reception unit 713 receives storage content information, the content comparison unit 711 determines whether the set of the stored object identifier, service code, and data is contained in the storage content information. When the set of the stored object identifier, service code, and data is contained in the storage content information, the content comparison unit 711 stores the set of the stored object identifier, service code, and data in the client terminal data storage unit 723.

If the set of the object identifier and data corresponding to the service code corresponding to the application program that is being executed by the application program execution unit 714 or can be executed by the application program execution unit 714 is not stored in the client terminal data storage unit 723, the content comparison unit 711 may store the service code. When the data reception unit 713 receives storage content information, the content comparison unit 711 determines whether the set of the stored service code, object identifier, and data is contained in the storage content information. When the set of the stored service code, object identifier, and data is present, the content comparison unit 711 stores the set of the stored service code, object identifier, and data in the client terminal data storage unit 723.

If data corresponding to the set of the object identifier read by the reading unit 703 and the service code of the application program that is being executed by the application program execution unit 714 is not stored in the client terminal data storage unit 723, the content comparison unit 711 may store the set of the object identifier read by the reading unit 703 and the service code of the application program that is being executed by the application program execution unit 714. When the data reception unit 713 receives storage content information, the content comparison unit 711 determines whether a set of the stored object identifier and service code and data corresponding to them is contained in the storage content information. When the set of the stored object identifier and service code and data corresponding to them is present, the content comparison unit 711 stores the set of the stored object identifier and service code and data corresponding to them in the client terminal data storage unit 723.

In data expression of storage content information generated by the data investigation unit 724, a plurality of object identifiers may be made to simultaneously correspond to a set of a service code and data to reduce the transmission size in the communication network 120.

The storage content information generated by the data investigation unit 724 may contain information representing the final update date/time of the server data storage unit 710. The client terminal data storage unit 723 may store the final update date/time of the client terminal data storage unit 723. The content comparison unit 711 may store, in the client terminal data storage unit 723, information of a newer one of the final update dates/times on the basis of the final update dates/times of the contents stored in the client terminal data storage unit 723 and those stored in the server data storage unit 710. If the final update date/time of the server data storage unit 710 represented by the storage content information is later than the final update date/time of the client terminal data storage unit 723, the storage content information is stored in the client terminal data storage unit 723. If the final update date/time of the server data storage unit 710 represented by the storage content information is earlier than the final update date/time of the client terminal data storage unit 723, the storage content information need not be stored in the client terminal data storage unit 723.

The storage content information generated by the data investigation unit 724 need not always be the entity of the contents stored in the server data storage unit 710 and may be indirect reference information indicated by, e.g., a URL. In this case, the data reception unit 713 is connected to another server (not shown) through the communication network 120 on the basis of the indirect reference information such as a URL to receive the entity of the storage content information from the connected other server.

If the data search unit 722 has searched the contents stored in the client terminal data storage unit 723 and extracted a plurality of sets of service codes and data, the data search unit 722 may display sets of application programs and data corresponding to the plurality of service codes on the display unit (not shown) of the client terminal 705 to make the user select a set of an application program and data to be executed. The data selected by the user is input to the application program execution unit 714 that executes the application program selected by the user.

If the data search unit 722 has searched the contents stored in the client terminal data storage unit 723 and extracted a plurality of sets of service codes and data, all sets of application programs and data corresponding to the plurality of service codes may be executed by the application program execution unit 714.

If the data search unit 722 has searched the contents stored in the client terminal data storage unit 723 and extracted a plurality of sets of service codes and data, the data search unit 722 may cause the application program execution unit 714 to execute only a predetermined application program of sets of application programs and data corresponding to the plurality of service codes and input the data to the application program execution unit 714. The application program to be executed by the application program execution unit 714 may be decided by causing the data search unit 722 to make the user select an application program only for the first time from the result obtained by searching and extracting the contents stored in the client terminal data storage unit 723. From the second time, the application program is decided in accordance with the contents of the first selection by the user.

The application program can form either one program file or a partial function of a program file.

The client terminal data storage unit 723 and server data storage unit 710 can store the sets of object identifiers, service codes, and data either before or after the object identifiers are issued.

In storing an object identifier and a set of a service code and data in correspondence with each other, the data client terminal data storage unit 723 and server data storage unit 710 may handle a plurality of object identifiers as a set so that a set of a service code and data corresponds to the set of object identifiers. At this time, the set of object identifiers may specify the reading order of the reading unit 703.

The client terminal 705 incorporates a data processing program that causes a computer to execute processing of receiving contents stored in the server data storage unit 710 from the application server 708 comprising the server data storage unit 710 that stores object identifiers, service codes, and data in correspondence with each other, processing of comparing the received contents stored in the server data storage unit 710 with contents stored in the client terminal data storage unit 723 that stores object identifiers, service codes, and data, processing of extracting contents that are stored in the server data storage unit 710 but not in the client terminal data storage unit 723, and processing of storing the extracted contents in the client terminal data storage unit 723.

The client terminal 705 also incorporates a data processing program that causes a computer to execute processing of reading an object identifier, processing of extracting a service code and data corresponding to the read object identifier from the client terminal data storage unit 723 that stores object identifiers, service codes, and data in correspondence with each other, processing of inputting the extracted data to the application program execution unit 714 that executes an application program indicated by the extracted service code, and processing of causing the application program execution unit 714 to execute the application program to process the data.

The application server 708 incorporates a data processing program that causes a computer to execute processing of transmitting the contents stored in the server data storage unit 710 that stores object identifiers, service codes, and data in correspondence with each other to the client terminal 705 comprising the client terminal data storage unit 723 that stores object identifiers, service codes, and data.

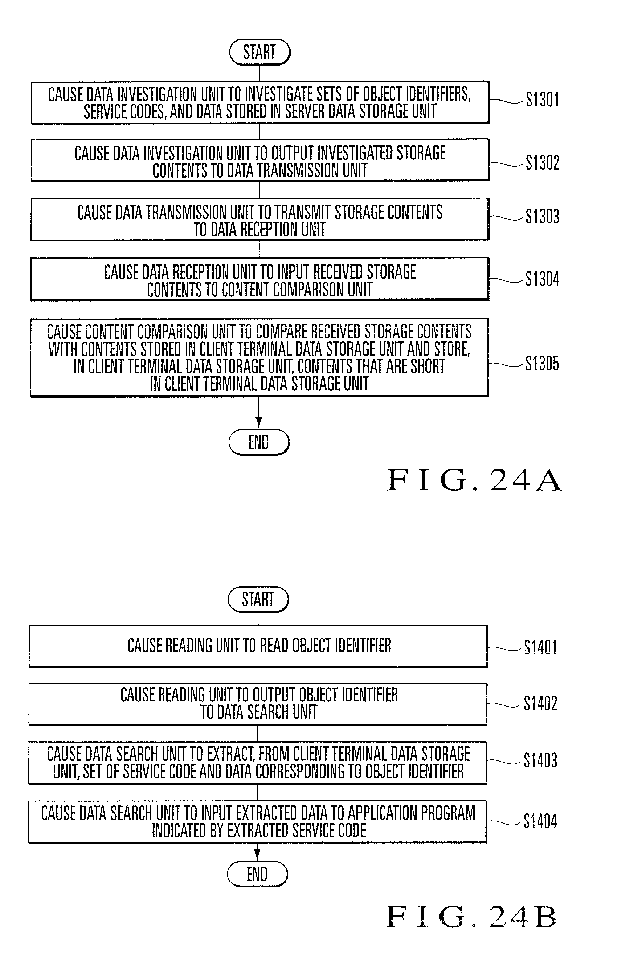

The operation of the sixth embodiment of the present invention will be described next with reference to the accompanying drawings. Figs. 24A and 24B are flowcharts for explaining the operation of the sixth embodiment of the present invention.

The data investigation unit 724 investigates and specifies a set of an object identifier, service code, and data stored in the server data storage unit 710 (step S1301). The data investigation unit 724 generates storage content information representing the specified set of the object identifier, service code, and data and outputs it to the data transmission unit 712 (step S1302).

The data transmission unit 712 transmits received storage content information to the data reception unit 713 of the client terminal 705 through the communication network 120 (step S1303). The data reception unit 713 inputs the received storage content information to the content comparison unit 711 (step S1304). The content comparison unit 711 compares the received storage content information with contents stored in the client terminal data storage unit 723, extracts contents that are stored in the server data storage unit 710 but not in the client terminal data storage unit 723, and stores the extracted contents in the client terminal data storage unit 723 (step S1305).

The reading unit 703 reads an object identifier stored in the recording medium 701 (step S1401) and outputs the read object identifier to the data search unit 722 (step S1402).

The data search unit 722 searches for and extracts, from the client terminal data storage unit 723, a set of a service code and data corresponding to the received object identifier (step S1403). The data search unit 722 inputs the data to the application program execution unit 714 that executes an application program indicated by the service code in the extracted set of the service code and data (step S1404). The application program execution unit 714 executes the application program indicated by the service code to process the received data.

The operation in steps S1301 to S1305 may be executed parallel to the operation in step S1401 to S1404.

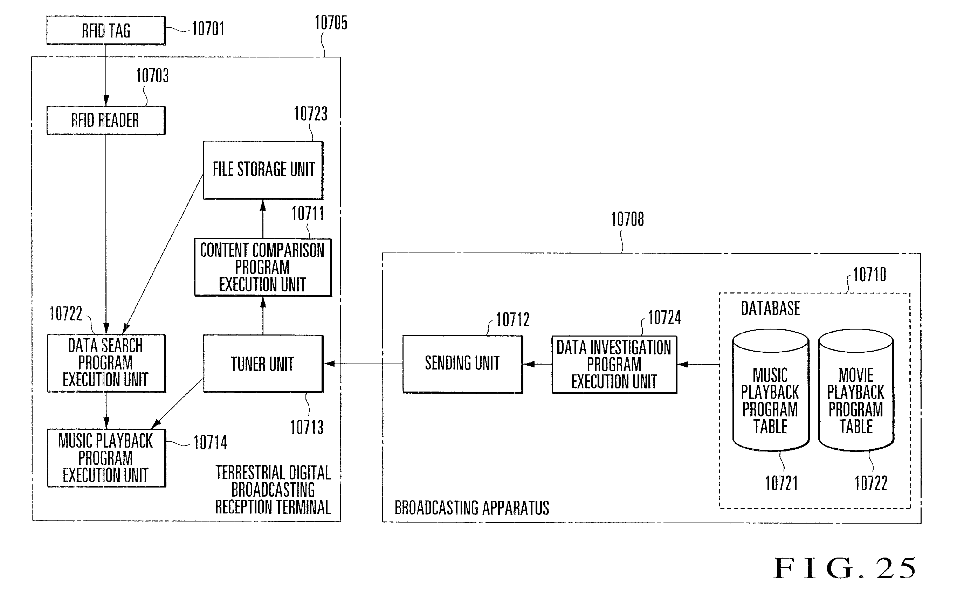

The sixth embodiment of the present invention will be described next by using a detailed example. Fig. 25 is a block diagram for explaining the arrangement of a detailed example of the sixth embodiment of the present invention.

A detailed example of the sixth embodiment of the present invention includes an RFID tag 10701, terrestrial digital broadcasting reception terminal 10705, and broadcasting apparatus 10708.

The RFID tag 10701 stores an object identifier. The terrestrial digital broadcasting reception terminal 10705 includes an RFID reader 10703, file storage unit 10723, tuner unit 10713, content comparison program execution unit 10711, data search program execution unit 10722, and music playback program execution unit 10714. The RFID reader 10703 reads the object identifier stored in the RFID tag 10701. The file storage unit 10723 implements the client terminal data storage unit 723 that stores in advance object identifiers, service codes as information representing application programs, and data to be processed by the application programs in correspondence with each other. The tuner unit 10713 implements the data reception unit 713 and receives information contained in a radio wave signal sent from the broadcasting apparatus 10708. The content comparison program execution unit 10711 implements the content comparison unit 711 and executes a content comparison program that causes the terrestrial digital broadcasting reception terminal 10705 to compare the information received by the tuner unit 10713 with sets of object identifiers, service codes, and data stored in the file storage unit 10723, extract information that is received by the tuner unit 10713 and is not stored in the file storage unit 10723, and store the extracted information in the file storage unit 10723. The data search program execution unit 10722 implements the data search unit 722 and executes a data search program that causes the terrestrial digital broadcasting reception terminal 10705 to search for and extract, from the file storage unit 10723, a service code and data corresponding to the object identifier read by the reading unit 10703 and input the extracted data to the application program corresponding to the extracted service code. The music playback program execution unit 10714 implements the application program execution unit 714 and executes a music playback program that causes the terrestrial digital broadcasting reception terminal 10705 to play back music.

The RFID tag 10701 includes a storage unit (not shown) to store an identifier or data and a wireless communication device (not shown). The RFID reader 10703 includes a wireless communication device (not shown) to read the identifier or data from the RFID tag 10701. Assume that the RFID tag 10701 has a function of storing an object identifier as a read-only unique identifier and transmitting only the object identifier to the RFID reader 10703. The RFID tag 10701 stores an object identifier "A514CZ". The RFID tag 10701 is implanted in a music listening ticket appended to a music magazine.

The music playback program execution unit 10714 is designed to be unable to digitally output audio data from the terrestrial digital broadcasting reception terminal 10705.

The broadcasting apparatus 10708 is implemented by an information sending device in a broadcasting station and includes a database 10710, data investigation program execution unit 10724, and sending unit 10712. The database 10710 implements the server data storage unit 710 and stores in advance object identifiers, service codes, and data in correspondence with each other. The data investigation program execution unit 10724 implements the data investigation unit 724 and executes a data investigation program that causes the broadcasting apparatus 10708 to investigate contents stored in the database 10710 and generate storage content information as information representing the contents stored in the database 10710. The sending unit 10712 implements the data transmission unit 712, converts the storage content information into a broadcast wave signal, and broadcasts it.

The tuner unit 10713 of the terrestrial digital broadcasting reception terminal 10705 receives information of video or data broadcast from the broadcasting apparatus 10708 through a broadcast wave signal.

The database 10710 stores sets of object identifiers, service codes, and data and includes a music playback program table 10721 that stores information about a music playback program and a movie playback program table 10722 that stores information about a movie playback program. The music playback program table 10721 stores a set of a service code "S001" of the music playback program execution unit 10714 and data "0945" as a program index (a unique identifier added for each program to distinguish it from other programs in broadcast) of a piece of music to be listened in correspondence with the object identifier "A514CZ" that is distributed to the user as a music listening ticket through a music magazine.

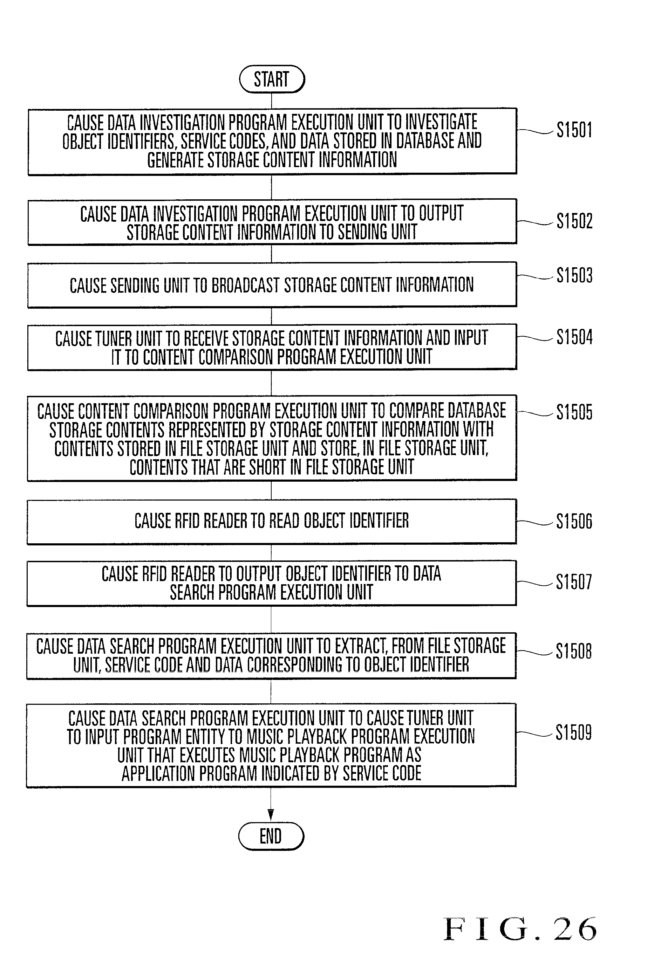

The operation of a detailed example of the sixth embodiment of the present invention will be described next with reference to the accompanying drawings. Fig. 26 is a flowchart for explaining the operation of a detailed example of the sixth embodiment of the present invention.

The data investigation program execution unit 10724 investigates the sets of object identifiers, service codes, and data stored in the database 10710 (step S1501), reconstructs information to make all object identifiers corresponding to each set of a service code and data correspond to each other at once, and outputs storage content information as information representing the reconstructed storage contents to the sending unit 10712 (step S1502).

The sending unit 10712 mixes the storage content information with other broadcast programs and broadcasts it from, e.g., a steel tower outside the broadcasting apparatus 10708 as a broadcast wave signal (step S1503). The tuner unit 10713 receives the broadcast wave signal, selects a channel of the broadcasting apparatus 10708 on the basis of the received broadcast wave signal, extracts the broadcast storage content information of the database 10710, and outputs the storage content information to the content comparison program execution unit 10711 (step S1504).

The file storage unit 10723 already stores sets of object identifiers, service codes, and data that are updated by the content comparison program execution unit 10711 when the tuner unit 10713 has received storage content information contained in a broadcast wave signal. On the basis of the newly received storage content information, the content comparison program execution unit 10711 compares the contents stored in the database 10710 with the contents stored in the file storage unit 10723, if there are contents that are stored in the database 10710 but not in the file storage unit 10723, extracts a corresponding portion from the storage content information, and stores the extracted portion in the file storage unit 10723 (step S1505).

The user of the terrestrial digital broadcasting reception terminal 10705 moves the RFID tag 10701 close to the RFID reader 10703 so that the RFID reader 10703 reads the object identifier stored in the RFID tag 10701 (step S1506). The RFID reader 10703 outputs the read object identifier "A514CZ" to the data search program execution unit 10722 (step S1507).

The data search program execution unit 10722 checks whether a set of a service code and data corresponding to the object identifier "A514CZ" is stored in the file storage unit 10723 (step S1508). Assume that it is found by check that the file storage unit 10723 stores the service code "S001" and data "0945" corresponding to the object identifier "A514CZ" by the operation in step S1505. The entity of music data corresponding to the data "0945" is received from the broadcasting apparatus 10708 through the tuner unit 10713. More specifically, for example, if the music data has a data broadcast format, the user operates the terrestrial digital broadcasting reception terminal 10705 to cause the tuner unit 10713 to receive a broadcast wave signal sent from the broadcast station having the broadcasting apparatus 10708. The tuner unit 10713 receives program index information as information representing programs at the respective times. At this time, the terrestrial digital broadcasting reception terminal 10705 may display the program index information on the display unit (not shown). The user checks the time of the program that broadcasts the data "0945" on the basis of the program index information. The data search program execution unit 10722 causes the tuner unit 10713 to input the program that broadcasts the data "0945" contained in the broadcast wave signal from that time to the music playback program as an application program corresponding to the service code "S001" (step S1509). The music playback program execution unit 10714 plays back a piece of music corresponding to the received data "0945".

When the terrestrial digital broadcasting reception terminal 10705 has a program storage function, the program that broadcasts the data "0945" may be stored in the file storage unit 10723. In a terrestrial digital broadcasting reception terminal with such an arrangement, the data search program execution unit 10722 checks whether the program that broadcasts the data "0945" is stored in the file storage unit 10723. If the program that broadcasts the data "0945" is stored, the stored program may be output to the music playback program.

A plurality of sets of service codes and data may correspond to the object identifier "A514CZ" stored in the RFID tag 10701 implanted in the music listening ticket and be stored in the database 10710. For example, assume that the "music playback program (service code "S001")" and "music program index (data "0945")", and a "music purchase program (service code "S002")" and "music program index (data "0945")" are made to correspond to each other.

The two sets of service codes and data are extracted from a broadcast wave signal by the tuner unit 10713 and stored in the file storage unit 10723 by the content comparison program execution unit 10711. When the RFID reader 10703 inputs the object identifier "A514CZ" to the data search program execution unit 10722, the data search program execution unit 10722 extracts the two sets of service codes and data as the search result of the file storage unit 10723. The data search program execution unit 10722 may display a window on the display unit of the terrestrial digital broadcasting reception terminal 10705 and make the user select one of the two sets of the search result. For example, assume that the user inputs the music of data "0945" to the music playback program execution unit 10714 (service code "S001"). When the user likes the music played back and wants to record it on an MD (Mini Disk^{®}), he/she purchases the piece of music of data "0945" by executing the music purchase program (service code "S002") because the music playback program execution unit 10714.

The music purchase program connects to a music license server (not shown) that is connected to a public line through a public line (telephone line) connector (not shown) prepared in the terrestrial digital broadcasting reception terminal 10705, sends the information of the user, and obtains acceptance of license (digital recording). Upon receiving the acceptance, the music purchase program rewrites the service code corresponding to the object identifier "A514CZ" stored in the file storage unit 10723 to a service code "S003" of a music playback program capable of digital output. From the next time, when the user causes the RFID reader 10703 to read the music listening ticket with the object identifier "A514CZ", the piece of music corresponding to the data "0945" can be played back by using the music playback program with the service code "S003" corresponding to the object identifier "A514CZ", or the piece of music can be output to the MD recorder connected to the outside of the terrestrial digital broadcasting reception terminal 10705 so that the piece of music can be recorded by the MD recorder.

In this detailed example, the data is program index information as information representing the program that broadcasts the music. However, the data may be information representing the music data itself. The sending unit 10712 may transmit a service code and music data itself as a broadcast wave signal.

The set of the music playback program execution unit 10714 and the program index of a piece of music may be a set of a moving image reproduction program and the program index of a moving image, a set of a program guide viewer and the program index of a program guide information, or a combination thereof. The program guide information may include detailed story information, cast information, and reviews with images as in feature pages of TV magazines, in addition to program information containing only titles, dates/times, and channel numbers as in the radio/television section of newspapers. The program guide information may also contain audio or moving image information.

As described above, according to this embodiment, when the client terminal 705 stores sets of object identifiers, service codes, and data, sets of service codes and data can be searched for at the time of reading the object identifier. Hence, a service can be provided even in a one-way network environment such as broadcast.

### Seventh Embodiment

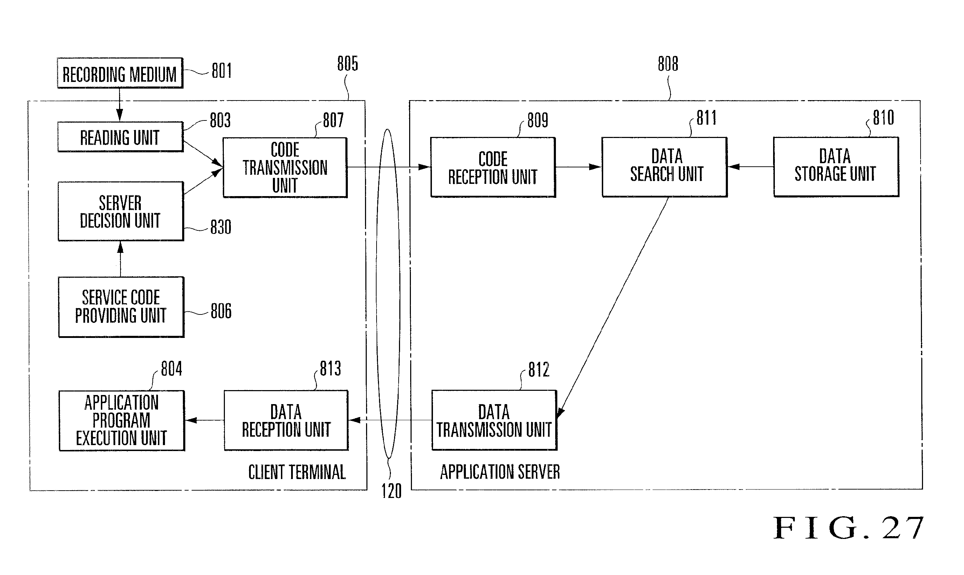

The seventh embodiment of the present invention will be described next with reference to the accompanying drawings. Fig. 27 is a block diagram showing an arrangement example of the seventh embodiment of the present invention.

The seventh embodiment of the present invention includes a recording medium 801, client terminal 805, application server 808, and communication network 120.

The recording medium 801 stores a unique object identifier. The client terminal 805 includes a reading unit (identifier reading means) 803, service code providing unit (service code providing means) 806, code transmission unit (code transmission means) 807, server decision unit (server decision means) 830, data reception unit (data reception means) 813, and application program execution unit (application program execution means) 804. The reading unit 803 reads the object identifier stored in the recording medium 801. The service code providing unit 806 stores in advance a service code as information indicating an application program to implement a service provided by the data processing system according to the seventh embodiment of the present invention. The code transmission unit 807 transmits the object identifier through the communication network 120 upon receiving the address of a transmission destination server. The server decision unit 830 stores in advance the object identifier transmission destination address in correspondence with the service code and, upon receiving the service code from the service code providing unit 806, decides to transmit the object identifier to the stored transmission destination address, and outputs the decided transmission destination address to the code transmission unit 807. The data reception unit 813 receives information through the communication network 120. The application program execution unit 804 executes an application program on the basis of the information received by the data reception unit 813.

The application server 808 includes a code reception unit (code reception means) 809, data storage unit (data storage means) 810, data search unit (data search means) 811, and data transmission unit (data transmission means) 812. The code reception unit 809 receives the object identifier from the client terminal 805 through the communication network 120. The data storage unit 810 stores object identifiers and data in advance in correspondence with each other. The data search unit 811 extracts, from the data storage unit 810, data corresponding to the object identifier received by the code reception unit 809. The data transmission unit 812 transmits the data extracted by the data search unit 811 to the client terminal 805 through the communication network 120.

The client terminal 805 and application server 808 are connected through the communication network 120.

The client terminal 805 need not always include the service code providing unit 806. In this case, the data storage unit 810 of the application server 808 stores sets of object identifiers, service codes, and data. The data search unit 811 inputs a set of a service code and data corresponding to the object identifier to the data transmission unit 812. The data transmission unit 812 transmits, to the client terminal 805, the received set of the object identifier, service code, and data. In the client terminal 805, the data reception unit 813 may input the data to the application program corresponding to the received service code. If the application program is not activated, the data reception unit 813 may cause the application program execution unit 804 to activate the application program and then input the data.

The server decision unit 830 may decides, in accordance with the object identifier read by the reading unit 803, the server to which the object identifier should be transmitted. In this case, the server decision unit 830 may store a set of an object identifier and the object identifier transmission destination server address.

The server decision unit 830 may decide the object identifier transmission destination server in accordance with the object identifier read by the reading unit 803 and the service code input by the service code providing unit 806. In this case, the server decision unit 830 may store sets of object identifiers, service codes, and object identifier transmission destination server addresses.

The server decision unit 830 may output, to the code transmission unit 807, the service code output from the service code providing unit 806. The code transmission unit 807 transmits the service code and object identifier to the code reception unit 809 of the application server 808. The code reception unit 809 receives the service code and object identifier and outputs them to the data search unit 811. The data search unit 811 may store sets of object identifiers, service codes, and data in the data storage unit 810. The data search unit 811 may extract, from the data storage unit 810, data corresponding to an object identifier and service code.

The reading unit 803 may be included in the client terminal 805 or connected to the outside of the client terminal 805 through a communication interface.

If the application program is not activated by the application program execution unit 804 to which the data reception unit 813 is to input data when the data from the data transmission unit 812 is received by the data reception unit 813, the data reception unit 813 may cause the application program execution unit 804 to activate the application program and then input the data.

The application program executed by the application program execution unit 804 can form either one program file by itself or a partial function of a program file.

The data storage unit 810 can store the sets of object identifiers and data or the sets of object identifiers, service codes, and data either before or after the object identifiers are issued.

The service code providing unit 806 may be incorporated in the application program execution unit 804 to output, to the server decision unit 830, a unique service code corresponding to an application program incorporated in the application program execution unit 804.

The service code providing unit 806 may receive the service code of an application program itself from the application program execution unit 804 and output the received service code to the server decision unit 807.

The service code providing unit 806 may make the object identifier stored in the recording medium 801 uniquely correspond to the application program. When the reading unit 803 reads the object identifier, the service code providing unit 806 may output, to the server decision unit 830, a service code to uniquely specify the application program corresponding to the object identifier on the basis of the correspondence between the application program and the object identifier.

When the service code providing unit 806 and data storage unit 810 store an object identifier and a service code or data in correspondence with each other, a plurality of object identifiers may be handled as a set so that a service code or data may be stored in correspondence with the set of object identifiers. At this time, the set of object identifiers may specify the reading order of the reading unit 803.

The service code providing unit 806 may store a plurality of service codes in correspondence with one object identifier. Before outputting a service code to the server decision unit 830, the service code providing unit 806 may decide one of the plurality of service codes corresponding to the object identifier read by the reading unit 803 as a service code to be output to the server decision unit 830. At this time, the service code providing unit 806 may display the plurality of service code on the display unit (not shown) of the client terminal 805 to make the user select a service code to be output to the server decision unit 830. If the user should select a service code to be output to the server decision unit 830, the service code providing unit 806 may have a mechanism to make the user do selection when the reading unit 803 reads an object identifier for the first time. If the reading unit 803 reads the object identifier for the second or subsequent time, the service code may automatically be transferred to the server decision unit 830 in accordance with the first selection.

The server decision unit 830 may store a plurality of transmission destination server addresses in correspondence with one object identifier or one service code. Before outputting a transmission destination server address to the code transmission unit 807, the server decision unit 830 may decide a transmission destination server address to which the object identifier is to be output. At this time, the server decision unit 830 may display the plurality of server addresses on the display unit (not shown) of the client terminal 805 to make the user select a server address to which the object identifier is to be output. If the user should select a server address to which the object identifier is to be output, the server decision unit 830 may have a mechanism to make the user do selection when the reading unit 803 reads an object identifier for the first time, or when the first service code is received from the service code providing unit 806. If the object identifier or service code is input to the server decision unit 830 for the second or subsequent time, the transmission destination server address of the first selection may automatically be decided as the transmission destination server address.

The data storage unit 810 may store a plurality of data in correspondence with one object identifier. In this case, the data search unit 811 may have a means for uniquely deciding data to be transmitted before transmitting extracted data to the data reception unit 813 through the data transmission unit 812 and communication network 120. The data search unit 811 may display a window to display the plurality of data on the display unit of the client terminal through the communication network 120 to make the user of the client terminal 805 select data to be transmitted.

The data storage unit 810 may store a plurality of data in correspondence with one object identifier. In this case, the data search unit 811 may output all searched and extracted data to the data reception unit 813 through the data transmission unit 812 and communication network 120. The data reception unit 813 may decide one of the plurality of received data as data to be input to the application program execution unit 804. The data reception unit 813 may display a window to display the plurality of data on the display unit of the client terminal to make the user of the client terminal 805 select data to be input to the application program execution unit 804. The data reception unit 813 may input the plurality of received data to corresponding application programs.

The service code providing unit 806 may acquire a service code from a recording medium different from the recording medium 801 recording the object identifier. In this case, the reading unit 803 reads the service code from the other recording medium before or after the object identifier acquisition timing. The other recording medium records a service code.

The client terminal 805 incorporates a data processing program that causes a computer to execute processing of reading an object identifier, processing of transmitting the object identifier to the application server 808, i.e., the server of the transmission destination address that represents a server corresponding to a service code as information uniquely indicating an application program that is being executed by the application program execution unit 804, processing of receiving data from the application server 808, processing of inputting the received data to the application program execution unit 804 that executes the application program indicated by the service code, and processing of causing the application program execution unit 804 to execute the application program to process the data.

The application server 808 incorporates a data processing program that causes a computer to execute processing of receiving an object identifier from the client terminal 805, processing of extracting data corresponding to the received object identifier from the data storage unit 810 that stores object identifiers and data in correspondence with each other, and processing of transmitting data corresponding to the extracted object identifier to the client terminal 805.

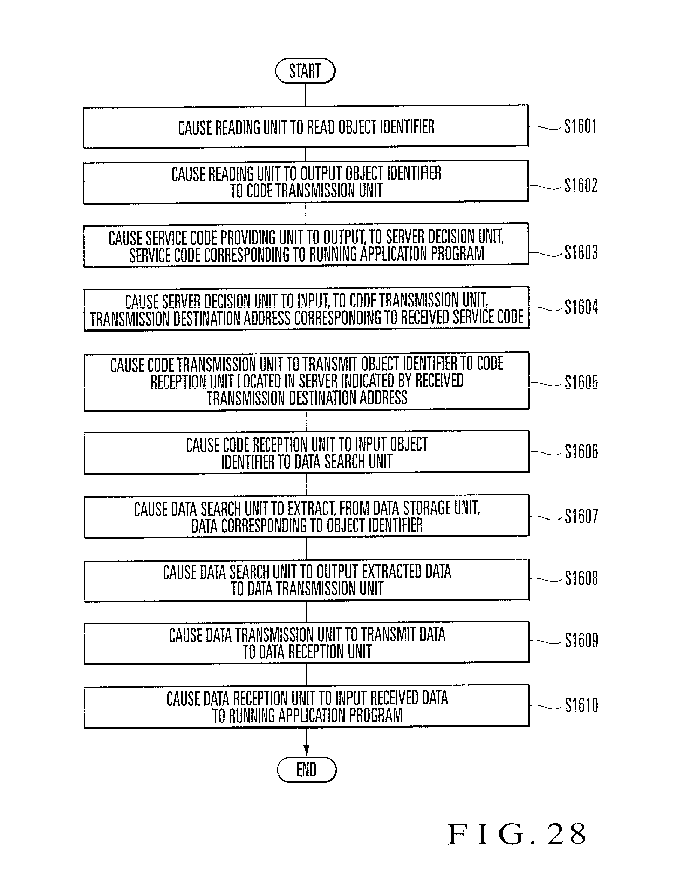

The operation of the seventh embodiment of the present invention will be described next with reference to the accompanying drawings. Fig. 28 is a flowchart for explaining the operation of the seventh embodiment of the present invention.

The reading unit 803 reads an object identifier stored in the recording medium 801 (step S1601). The reading unit 803 outputs the read object identifier to the code transmission unit 807 (step S1602). The reading unit 803 also notifies the service code providing unit 806 that the object identifier is read.

When notified by the reading unit 803 that the object identifier is read, the service code providing unit 806 outputs, to the server decision unit 830, a service code corresponding to the application program that is being executed by the application program execution unit 804 (step S1603). The server decision unit 830 inputs the address of the server of the transmission destination corresponding to the service code to the code transmission unit 807 (step S1604).

The code transmission unit 807 transmits the object identifier read by the reading unit 803 to the address of the server (application server 808) of the received transmission destination through the communication network 120 (step S1605).

The code reception unit 809 receives the object identifier and inputs it to the data search unit 811 (step S1606). The data search unit 811 searches for and extracts data corresponding to the received object identifier from the data storage unit 810 (step S1607). The data search unit 811 outputs the extracted data to the data transmission unit 812 (step S1608).

The data transmission unit 812 transmits the data extracted by the data search unit 811 to the data reception unit 813 through the communication network 120 (step S1609). The data reception unit 813 inputs the received data to the application program that is being executed by the application program execution unit 804 (step S1610). The application program execution unit 804 processes the received data.

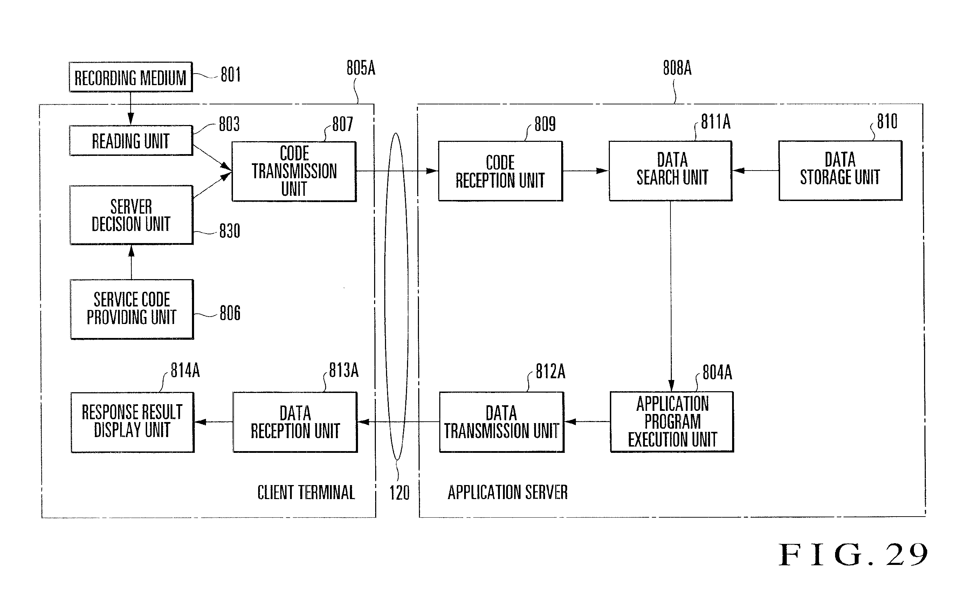

Fig. 29 is a block diagram showing another arrangement example of the seventh embodiment of the present invention. The same reference numerals as in Fig. 27 denote the same constituent elements in Fig. 29. In this arrangement example, an application program execution unit 804A is included in an application server 808A.

A data search unit 811A of the application server 808A searches for and extracts data corresponding to a received object identifier from data stored in the data storage unit 810 and outputs the data to the application program execution unit 804A. The application program execution unit 804A executes an application program to process the received data and outputs the data to a data transmission unit 812A. The data transmission unit 812A transmits the data processed by the application program execution unit 804A to a data reception unit 813A of a client terminal 805A through the communication network 120.

The data reception unit 813A outputs the received data to a response result display unit 814A. On the basis of the received data, the response result display unit 814A displays the processing result of the application program execution unit 804A on the display unit of the client terminal 805A.

If a plurality of application programs are present in the application server 808A, the data storage unit 810 stores sets of object identifiers, service codes, and data. The data search unit 811A extracts a service code and data corresponding to the object identifier by search and inputs the extracted data to the application program indicated by the extracted service code.

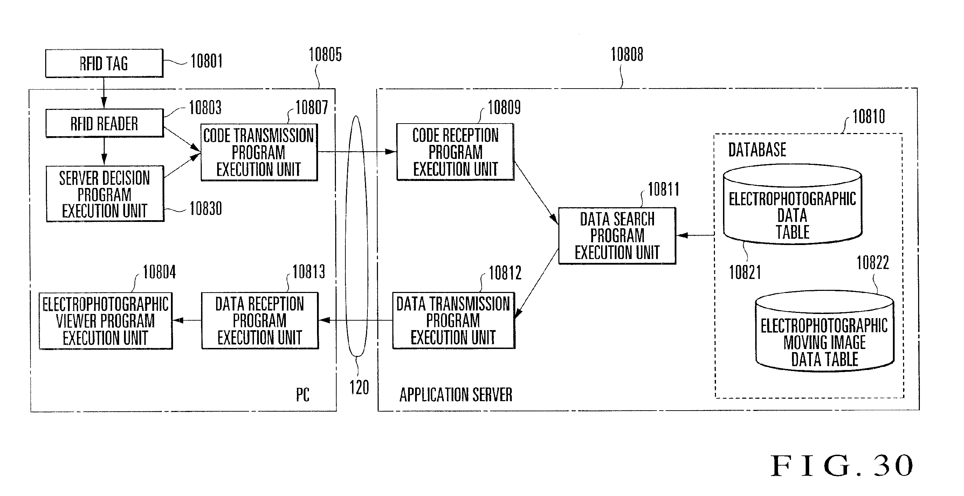

The seventh embodiment of the present invention will be described next by using a detailed example. Fig. 30 is a block diagram for explaining the arrangement of a detailed example of the seventh embodiment of the present invention.

A detailed example of the seventh embodiment of the present invention includes an RFID tag 10801, PC 10805, application server 10808, and communication network 120.

The RFID tag 10801 stores an object identifier. The PC 10805 includes an RFID reader 10803, server decision program execution unit 10830, code transmission program execution unit 10870, data reception program execution unit 10813, and electrophotographic viewer program execution unit 10804. The RFID reader 10803 reads the object identifier stored in the RFID tag 10801. The server decision program execution unit 10830 implements the server decision unit 830 and service code providing unit 806 and executes a server decision program that causes the PC 10805 to decide an object identifier transmission destination server in accordance with the object identifier read by the RFID reader 10803. The code transmission program execution unit 10870 implements the code transmission unit 807 and executes a code transmission program that causes the PC 10805 to transmit the object identifier read by the RFID reader 10803 to the object identifier transmission destination server decided by the server decision program execution unit 10830 through the communication network 120. The data reception program execution unit 10813 implements the data reception unit 813 and executes a data reception program that causes the PC 10805 to receive data from the application server 10808 through the communication network 120. The electrophotographic viewer program execution unit 10804 implements the application program execution unit 804 and executes an electrophotographic viewer program that displays the data received by the data reception program execution unit 10813 on the display unit of the PC 10805.

The RFID tag 10801 includes a storage unit (not shown) to store an identifier or data and a wireless communication device (not shown). The RFID reader 10803 includes a wireless communication device (not shown) to read the identifier or data from the RFID tag 10801. Assume that the RFID tag 10801 has a function of storing an object identifier as a read-only unique identifier and transmitting only the object identifier to the RFID reader 10803. The RFID tag 10801 stores an object identifier "A514CZ".

The application server 10808 includes a code reception program execution unit 10809, database 10810, data search program execution unit 10811, and data transmission program execution unit 10512. The code reception program execution unit 10809 implements the code reception unit 809 and executes a code reception program that causes the application server 10808 to receive the object identifier from the PC 10805 through the communication network 120. The database 10810 implements the data storage unit 810 and stores sets of service codes and data in correspondence with object identifiers. The data search program execution unit 10811 implements the data search unit 811 and executes a data search program that causes the application server 10808 to search for and extract a set of a service code and data stored in the database 10810. The data transmission program execution unit 10512 implements the data transmission unit 812 and executes a data transmission program that causes the application server 10808 to transmit the set of the service code and data to the PC 10805 through the communication network 120.

The database 10810 includes an electrophotographic data table 10821 that stores electrophotographic data in correspondence with an object identifier and a service code, and an electrophotographic moving image data table 10822 that stores electrophotographic moving image data in correspondence with an object identifier and a service code.

The PC 10805 and application server 10808 are connected through the communication network 120.

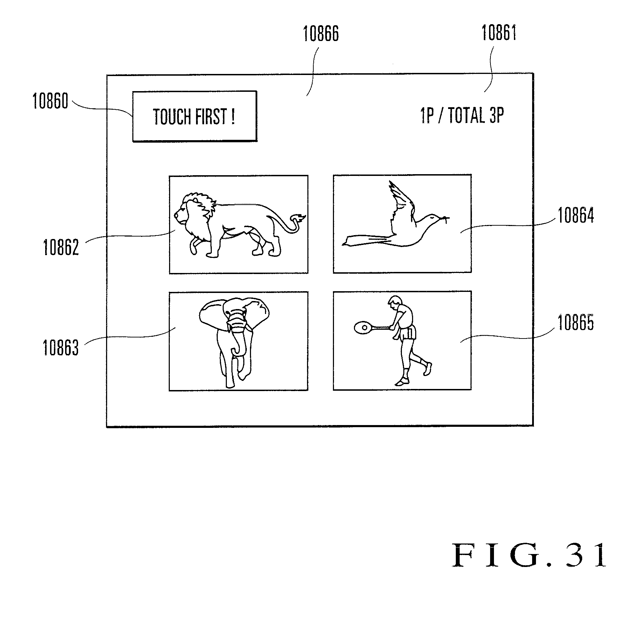

Fig. 31 is an explanatory view showing an arrangement example of an electrophotographic selection album 10866 according to a detailed example of the seventh embodiment of the present invention.

The electrophotographic selection album 10866 is a printout of a reduced image of electrophotographic data stored in the electrophotographic data table 10821 of the database 10810. An initialization button 10860, page number 10861, photo A 10862, photo B 10863, photo C 10864, and photo D 10865 are printed. These photos are printouts of reduced electrophotographic images. Small RFID tags are implanted under the print surfaces of the initialization button 10860, photo A 10862, photo B 10863, photo C 10864, and photo D 10865. Each RFID tag stores an object identifier. The RFID tag 10801 is assumed to be implanted under the print surface of the photo A 10862.

When the RFID reader 10803 reads the object identifiers stored in the RFID tags implanted under the print surfaces of the photo A 10862, photo B 10863, photo C 10864, and photo D 10865, the server decision program execution unit 10830 of the PC 10805 stores in advance, at predetermined positions of the storage unit (not shown) of the PC 10805, connection destination information that makes each object identifier correspond to the IP address of a server and specifies the connection target server.

The server decision program execution unit 10830 acquires connection destination information by, e.g., the following method. The RFID reader 10803 reads an object identifier stored in the RFID tag implanted under the print surface of the initialization button 10860. The server decision program execution unit 10830 connects to a predetermined server to receive data by, e.g., the method described in the first embodiment because the object identifier stored in the RFID tag implanted under the print surface of the initialization button 10860 is unknown. The received data is connection destination information. A service code received together at this time is the service code of the data storage unit of a server indicated by the connection destination information. The connection destination information contains the set of the object identifier "A514CZ" and the IP address of the application server 10808.

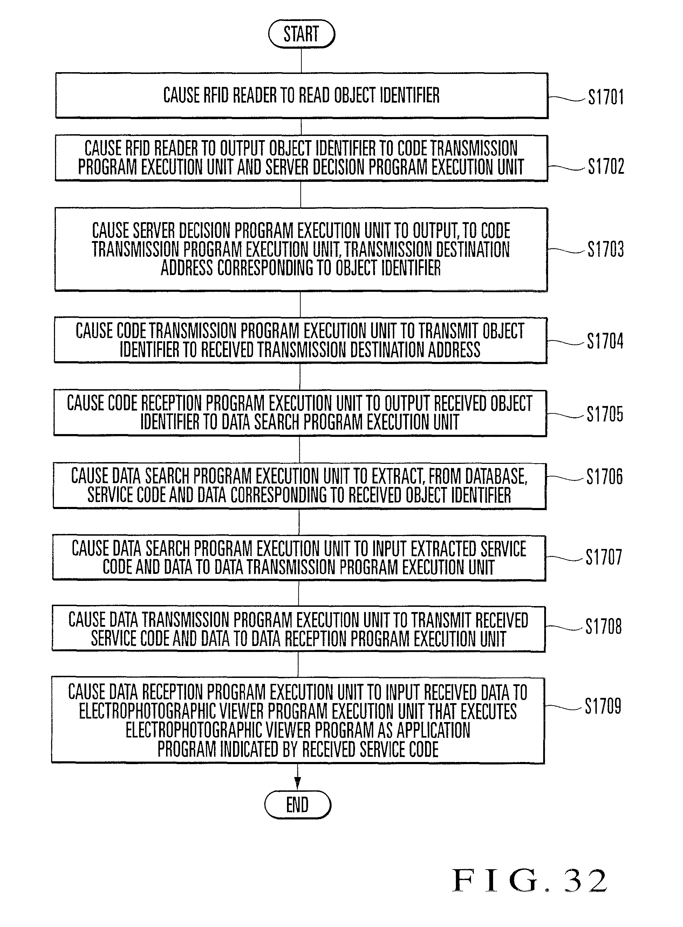

The operation of a detailed example of the seventh embodiment of the present invention will be described next with reference to the accompanying drawings. Fig. 32 is a flowchart for explaining the operation of a detailed example of the seventh embodiment of the present invention.

The user of the PC 10805 moves the photo A 10862 close to the RFID reader 10803 so that the RFID reader 10803 reads the object identifier stored in the RFID tag 10801 implanted under the print surface of the photo A 10862 (step S1701). The RFID reader 10803 outputs the read object identifier "A514CZ" to the code transmission program execution unit 10807 and server decision program execution unit 10830 (S1702).

The server decision program execution unit 10830 specifies the IP address of the connection destination application server 10808 paired with the object identifier "A514CZ" read by the RFID reader 10803 on the basis of connection destination information stored in advance and outputs the specified IP address to the code transmission program execution unit 10807 (step S1703). The code transmission program execution unit 10807 connects to the application server 10808 as the server of the received IP address through the communication network 120 to transmit the object identifier "A514CZ" to the code reception program execution unit 10809 (step S1704).

The code reception program execution unit 10809 inputs the object identifier "A514CZ" to the data search program execution unit 10811 (step S1705).

The database 10810 stores sets of object identifiers, service codes, and data. The electrophotographic data table 10821 of the database 10810 stores the object identifier "A514CZ", service code "S001", and electrophotographic data in correspondence with each other. The service code "S001" is an identifier that uniquely indicates the electrophotographic viewer program installed in the PC 10805. The electrophotographic data is obtained by digitizing an enlarged view of the photo A 10862 by, e.g., JPEG (Joint Photographic Experts Group).

The data search program execution unit 10811 searches for and extracts, from the database 10810, the service code "S001" and electrophotographic data corresponding to the object identifier "A514CZ" received from the code reception program execution unit 10809 (step S1706) and outputs the extracted service code "S001" and electrophotographic data to the data transmission program execution unit 10812 (step S1707).

The data transmission program execution unit 10812 transmits the service code "S001" and electrophotographic data extracted by the data search program execution unit 10811 to the data reception program execution unit 10813 through the communication network 120 (step S1708).

The data reception program execution unit 10813 inputs the received electrophotographic data to the electrophotographic viewer program execution unit 10804 that is executing the electrophotographic viewer program indicated by the service code "S001" received from the data transmission program execution unit 10812 (step S1709). The electrophotographic viewer program execution unit 10804 decodes the received electrophotographic data and displays an electrophotographic image corresponding to the photo A 10862 on the display unit of the PC 10805. The electrophotographic viewer program execution unit 10804 may display the electrophotographic image corresponding to the photo A 10862 on an externally connected monitor (not shown). In this example, the electrophotographic viewer program as an application program is executed by the PC 10805 serving as a client terminal. However, another application program in the application server 10808 may be executed, as in the second embodiment. For example, assume that an electrophotographic print purchase program is installed in the application server 10808 in place of the electrophotographic viewer program, and the service code "S001" indicates the electrophotographic print purchase program. In this case, the user selects a purchase target photo to be enlarged and printed from the album 10866, causes the RFID reader 10803 to read an object identifier stored in an RFID tag implanted under the selected photo, and inputs electrophotographic data corresponding to the object identifier to the electrophotographic print purchase program through the code transmission program execution unit 10807, communication network 120, code reception program execution unit 10809, and data search program execution unit 10811. The electrophotographic print purchase program causes a printer to print the received data and insert the printed image to a sealed letter. The operator of the application server 10808 mails the sealed letter to the user. The database 10810 may store the user's address together with other data and automatically print the address on the sealed letter.

As described above, according to this embodiment, a plurality of servers can selectively be used as needed. Hence, data management can be distributed for each service, or the server can be changed depending on the user's taste.

### Eighth Embodiment

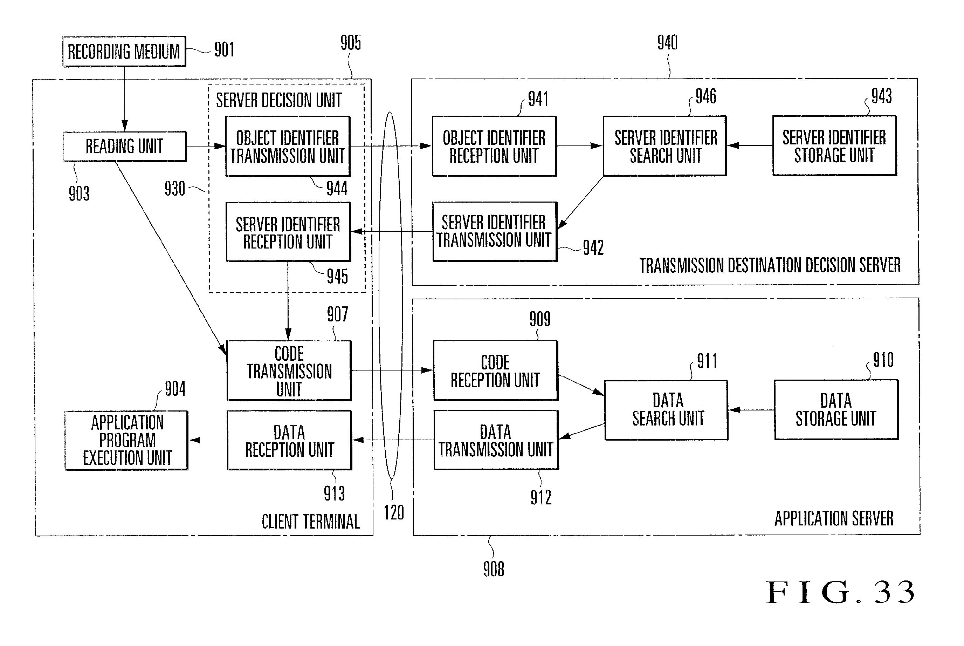

The eighth embodiment of the present invention will be described next with reference to the accompanying drawings. Fig. 33 is a block diagram showing an arrangement example of the eighth embodiment of the present invention.

The eighth embodiment of the present invention includes a recording medium 901, client terminal 905, transmission destination decision server 940, application server 908, and communication network 120.

The recording medium 901 stores a unique object identifier. The client terminal 905 includes a reading unit (identifier reading means) 903, server decision unit (server decision means) 930, code transmission unit (code transmission means) 907, data reception unit (data reception means) 913, and application program execution unit (application program execution means) 904. The reading unit 903 reads the object identifier stored in the recording medium 901. The server decision unit 930 decides a server to which the object identifier read by the reading unit 903 is to be transmitted. The code transmission unit 907 transmits the object identifier read by the reading unit 903 to the server decided by the server decision unit 930 through the communication network 120. The data reception unit 913 receives information from the application server 908. The application program execution unit 904 executes an application program on the basis of the information received by the data reception unit 913.

The server decision unit 930 includes an object identifier transmission unit (object identifier transmission means) 944 and a server identifier reception unit (server identifier reception means) 945. The object identifier transmission unit 944 transmits the object identifier read by the reading unit 903 to the transmission destination decision server 940 through the communication network 120. The server identifier reception unit 945 receives, from the transmission destination decision server 940, a server identifier as information to specify the server to which the object identifier read by the reading unit 903 is to be transmitted through the communication network 120.

The transmission destination decision server 940 includes an object identifier reception unit (object identifier reception means) 941, server identifier storage unit (server identifier storage means) 943, server identifier search unit (server identifier search means) 946, and server identifier transmission unit (server identifier transmission means) 942. The object identifier reception unit 941 receives the object identifier from the object identifier transmission unit 944 of the client terminal 905. The server identifier storage unit 943 stores object identifiers and server identifiers in correspondence with each other. The server identifier search unit 946 extracts, from the server identifier storage unit 943, a server identifier corresponding to the object identifier received by the object identifier reception unit 941. The server identifier transmission unit 942 transmits the server identifier extracted by the server identifier search unit 946 to the server identifier reception unit 945 of the client terminal 905 through the communication network 120.

The server identifier storage unit 943 stores sets of object identifiers and server identifiers representing object identifier transmission destination servers. The server identifier can be either an IP address or a symbol string such as an arbitrary number if it can uniquely indicate a server.

The application server 908 includes a code reception unit (code reception means) 909, data storage unit (data storage means) 910, data search unit (data search means) 911, and data transmission unit (data transmission means) 912. The code reception unit 909 receives the object identifier from the code transmission unit 907 of the client terminal 905 through the communication network 120. The data storage unit 910 stores object identifiers, service codes, and data in advance in correspondence with each other. The data search unit 911 extracts, from the data storage unit 910, data corresponding to the object identifier received by the code reception unit 909. The data transmission unit 912 transmits the data extracted by the data search unit 911 to the data reception unit 913 of the client terminal 905 through the communication network 120.

The client terminal 905 and transmission destination decision server 940 are connected through the communication network 120. The client terminal 905 and application server 908 are connected through the communication network 120.

The client terminal 905 may include a service code providing unit (not shown) that stores in advance a service code as information indicating an application program to implement a service provided by the data processing system according to the eighth embodiment of the present invention. In this case, when the object identifier transmission unit 944 is to output the object identifier to the server identifier transmission unit 942, the service code providing unit also outputs a service code. The object identifier transmission unit 944 transmits the object identifier and service code to the object identifier reception unit 941 of the transmission destination decision server 940 through the communication network 120. The object identifier reception unit 941 inputs the received object identifier and service code to the server identifier search unit 946. The server identifier storage unit 943 stores sets of object identifiers, service codes, and server identifiers. The server identifier search unit 946 extracts, from the server identifier storage unit 943, a server identifier corresponding to the set of the object identifier and service code.

When the client terminal 905 includes a service code providing unit, the service code output from the service code providing unit may be output simultaneously as the code transmission unit 907 transmits the object identifier to the code reception unit 909 of the application server 908 through the communication network 120. The code reception unit 909 receives the object identifier and service code and inputs them to the data search unit. In this case, the data search unit 911 extracts, from the data storage unit 910, data corresponding to the received set of the object identifier and service code and transmits the extracted data to the data reception unit 913 of the client terminal 905 through the data transmission unit 912 and communication network 120. The data reception unit 913 inputs the received data to the application program corresponding to the service code output from the service code providing unit.

If the application program is not activated when the data received from the data transmission unit 912 is to be input to the application program, the data reception unit 913 may cause the application program execution unit 904 to activate the application program and then input the data.

The server identifier storage unit 943 may store sets of object identifiers and service codes. In this case, in extracting a server identifier, the server identifier search unit 946 may extract a service code as a part of the extraction result and transmit the extracted service code to the server identifier reception unit 945 of the client terminal 905 through the server identifier transmission unit 942 and communication network 120. With this processing, the application program may be specified instead of specifying it by the service code providing unit or data storage unit 910 in this example.

The reading unit 903 may be a part of the client terminal 905 or connected to the outside of the client terminal 905 through a communication interface.

The application program executed by the application program execution unit 904 can form either one program file by itself or a partial function of a program file.

When the client terminal 905 includes a service code providing unit, the object identifier transmission unit 944 may transmit not the object identifier but a service code output from the service code providing unit to the object identifier reception unit 941 of the transmission destination decision server 940 through the communication network 120. In this case, the server identifier storage unit 943 stores sets of service codes and server identifiers. The server identifier search unit 946 may extract, from the server identifier storage unit 943, a server identifier corresponding to the service code received through the object identifier reception unit 941.

The server identifier storage unit 943 can store the sets of object identifiers and server identifiers, the sets of object identifiers, service codes, and server identifier, or the sets of service codes and server identifiers either before or after the object identifiers are issued.

When the client terminal 905 includes a service code providing unit, the service code providing unit may be incorporated in the application program execution unit 904. In this case, the application program execution unit 904 outputs a service code corresponding to the application program to be executed to the application program execution unit 904.

When the client terminal 905 includes a service code providing unit, the service code providing unit may store the object identifier stored in the recording medium 901 uniquely in correspondence with an application program. When the reading unit 903 reads the object identifier, a service code corresponding to the application program corresponding to the object identifier may be output to the object identifier transmission unit 944 or code transmission unit 907 on the basis of the correspondence between the object identifier and the application program.

The server identifier storage unit 943 may store a plurality of server identifiers in correspondence with one object identifier, one service code, or a set of an object identifier and a service code. In this case, the server identifier search unit 946 transmits the plurality of server identifiers to the server identifier reception unit 945 of the client terminal 905 through the server identifier transmission unit 942 and communication network 120. The server identifier reception unit 945 may display the plurality of received server identifiers on the display unit (not shown) of the client terminal 905 to make the user select the connection target server. Alternatively, the server identifier of a physically close server may be selected on the basis of network routing information.

The data storage unit 910 may store a plurality of sets of service codes and data in correspondence with one object identifier. In this case, the data search unit 911 extracts the plurality of sets of service codes and data and transmits them to the data reception unit 913 through the data transmission unit 912 and communication network 120. The data reception unit 913 may display the plurality of received sets of service codes and data on the display unit (not shown) of the client terminal 905 to make the user select a set to be executed.

If the user should select a set, the server identifier reception unit 945 or data reception unit 913 may have a mechanism to make the user do selection when the reading unit 903 reads an object identifier for the first time. If the reading unit 903 reads the object identifier for the second or subsequent time, a set may automatically be selected in accordance with the first selection.

In storing object identifiers and server identifiers in correspondence with each other, the server identifier storage unit 943 may handle a plurality of object identifiers as a set so that a server identifier may be stored in correspondence with the set of object identifiers. At this time, the set of object identifiers may specify the reading order of the reading unit 903.

In storing object identifiers in correspondence with data or service codes and data, the data storage unit 910 may handle a plurality of object identifiers as a set so that data or a service code and data may be stored in correspondence with the set of object identifiers. At this time, the set of object identifiers may specify the reading order of the reading unit 903.

When the client terminal 905 includes a service code providing unit, it may acquire a service code from a recording medium different from the recording medium 901 storing the object identifier. In this case, the reading unit 903 reads the service code from the other recording medium before or after the object identifier acquisition timing. The other recording medium records a service code.

The client terminal 905 incorporates a data processing program that causes a computer to execute processing of reading an object identifier, processing of transmitting the read object identifier to the transmission destination decision server 940, processing of receiving information representing the application server 908 from the transmission destination decision server 940 and transmitting the read object identifier to the application server 908 on the basis of the received information representing the application server 908, processing of receiving a service code and data from the application server 908, processing of inputting the received data to the application program execution unit 904 that executes the application program indicated by the received service code, and processing of causing the application program execution unit 904 to execute the application program to process the data.

The transmission destination decision server 940 incorporates a data processing program that causes a computer to execute processing of receiving the object identifier, processing of extracting, from the server identifier storage unit 943 that stores an object identifier and information representing a server to which the object identifier read by the client terminal 905 is to be transmitted in correspondence with each other, information which corresponds to the object identifier read by the client terminal 905 and represents a server to which the object identifier read by the client terminal 905 is to be transmitted, and processing of transmitting the extracted information representing a server to the client terminal 905 that has transmitted the object identifier.

The application server 908 incorporates a data processing program that causes a computer to execute processing of receiving the object identifier, processing of extracting a service code and data corresponding to the received object identifier from the data storage unit 910 that stores object identifiers, service codes, and data in correspondence with each other, and processing of transmitting the extracted service code and data to the client terminal 905 that has transmitted the object identifier.

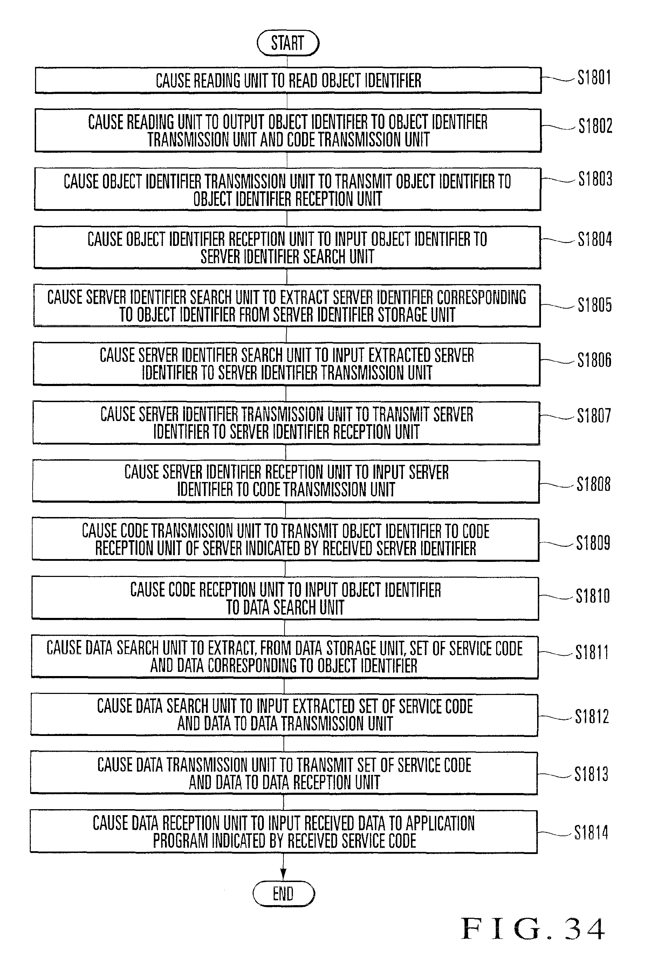

The operation of the eighth embodiment of the present invention will be described next with reference to the accompanying drawings. Fig. 34 is a flowchart for explaining the operation of the eighth embodiment of the present invention.

The reading unit 903 reads an object identifier stored in the recording medium 901 (step S1801). The reading unit 903 outputs the read object identifier to the object identifier transmission unit 944 and code transmission unit 907 (step S1802).

The object identifier transmission unit 944 transmits the object identifier read by the reading unit 903 to the object identifier reception unit 941 of the transmission destination decision server 940 through the communication network 120 (step S1803). The object identifier reception unit 941 inputs the received object identifier to the server identifier search unit 946 (step S1804).

The server identifier search unit 946 searches for and extracts a server identifier corresponding to the received object identifier from the server identifier storage unit 943 (step S1805). The server identifier search unit 946 inputs the extracted server identifier to the server identifier transmission unit 942 (step S1806).

The server identifier transmission unit 942 transmits the received server identifier to the server identifier reception unit 945 of the client terminal 905 through the communication network 120 (step S1807). The server identifier reception unit 945 inputs the received server identifier to the code transmission unit 907 (step S1808).

The code transmission unit 907 transmits the object identifier read by the reading unit 903 to the code reception unit 909 of a server (application server 908) indicated by the server identifier through the communication network 120 (step S1809).

The code reception unit 909 inputs the received object identifier to the data search unit 911 (step S1810). The data search unit 911 searches for and extracts, from the data storage unit 910, a set of a service code and data corresponding to the received object identifier (step S1811).

The data search unit 911 inputs the extracted set of the service code and data to the data transmission unit 912 (step S1812). The data transmission unit 912 transmits the received set of the service code and data to the data reception unit 913 of the client terminal 905 through the communication network 120 (step S1813).

The data reception unit 913 inputs the received data to the application program execution unit 904 that executes the application program indicated by the received service code (step S1814). The application program execution unit 904 processes the received data and displays it on the display unit of the client terminal 905 or executes an operation instructed by the data.

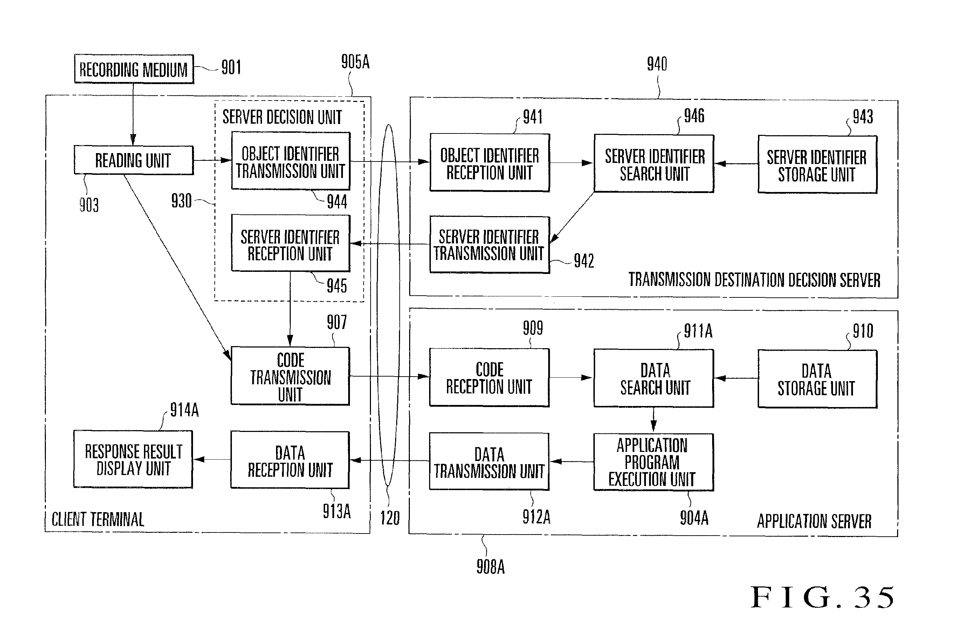

Fig. 35 is a block diagram showing another arrangement example of the eighth embodiment of the present invention. The same reference numerals as in Fig. 33 denote the same constituent elements in Fig. 35. In this arrangement example, an application program execution unit 904A is included in an application server 908A.

A data search unit 911A of the application server 908A searches for and extracts data corresponding to a received object identifier from data stored in the data storage unit 910 and outputs the data to the application program execution unit 904A. The application program execution unit 904A executes an application program to process the received data and outputs the data to a data transmission unit 912A. The data transmission unit 912A transmits the data processed by the application program execution unit 904A to a data reception unit 913A of a client terminal 905A through the communication network 120.

The data reception unit 913A outputs the received data to a response result display unit 914A. On the basis of the received data, the response result display unit 914A displays the processing result of the application program execution unit 904A on the display unit of the client terminal 905A.

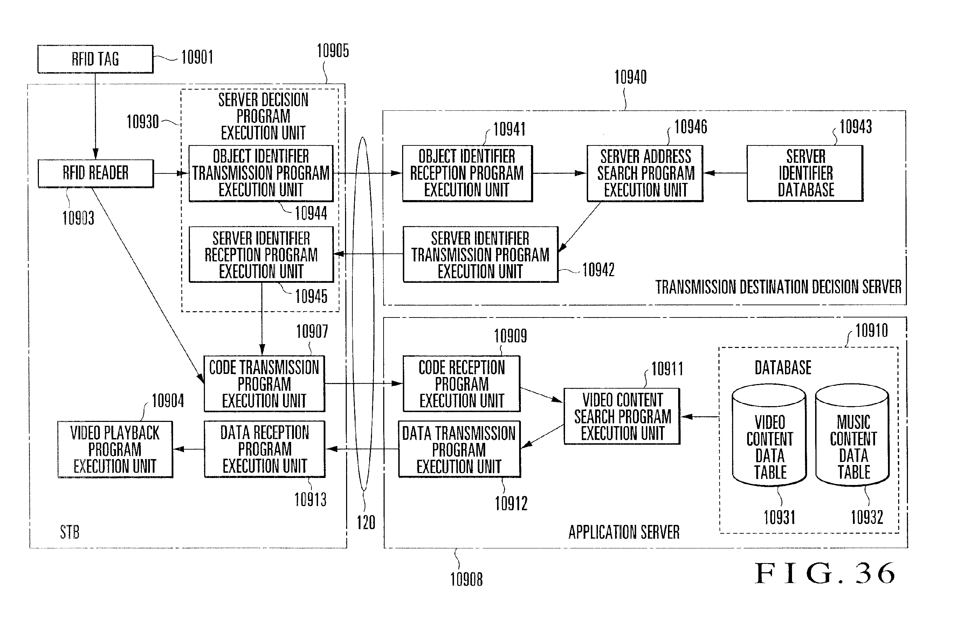

The eighth embodiment of the present invention will be described next by using a detailed example. Fig. 36 is a block diagram for explaining the arrangement of a detailed example of the eighth embodiment of the present invention.

A detailed example of the eighth embodiment of the present invention includes an RFID tag 10901, STB (Set Top Box) 10905, transmission destination decision server 10940, application server 10908, and communication network 120.

The RFID tag 10901 stores an object identifier. The STB 10905 includes an RFID reader 10903, server decision program execution unit 10930, code transmission program execution unit 10907, data reception program execution unit 10913, and video playback program execution unit 10904. The RFID reader 10903 reads the object identifier stored in the RFID tag 10901. The server decision program execution unit 10930 implements the server decision unit 930 and executes a server decision program that causes the STB 10905 to decide a server to which the object identifier read by the RFID reader 10903 is to be transmitted. The code transmission program execution unit 10907 implements the code transmission unit 907 and executes a code transmission program that causes the STB 10905 to transmit the object identifier read by the RFID reader 10903 to the server decided by the server decision program execution unit 10930 through the communication network. The data reception program execution unit 10913 implements the data reception unit 913 and executes a data reception program that causes the STB 10905 to receive information from the application server 10908. The video playback program execution unit 10904 implements the application program execution unit 904 and executes a video playback program that causes the STB 10905 to play back a video content.

This example will be explained assuming that the TB 10905 is an apparatus that can download various kinds of contents (e.g., videos, music, and games) from the application server 10908 and play back them and has a function of protecting the downloaded contents but no digital output function serving as an external output means of the downloaded contents.

The server decision program execution unit 10930 implements the server decision unit 930 and includes an object identifier transmission program execution unit 10944 and a server address reception program execution unit 10946. The object identifier transmission program execution unit 10944 executes an object identifier transmission program that causes the STB 10905 to transmit the object identifier read by the RFID reader 10903 through the communication network 120. The server address reception program execution unit 10946 executes a server address reception program that receives, through the communication network 120, a server identifier as information to specify a server to which the object identifier read by the RFID reader 10903 is to be transmitted. The object identifier transmission program execution unit 10944 implements the object identifier transmission unit 944. The server address reception program execution unit 10946 implements the server identifier reception unit 945.

The transmission destination decision server 10940 includes an object identifier reception program execution unit 10941, server identifier database 10943, server address search program execution unit 10944, and server address transmission program execution unit 10942. The object identifier reception program execution unit 10941 implements the object identifier reception unit 941 and executes an object identifier reception program that causes the transmission destination decision server 10940 to receive the object identifier from the object identifier transmission program execution unit 10944 of the STB 10905. The server identifier database 10943 implements the server identifier storage unit 943 and stores object identifiers and server identifiers in correspondence with each other. The server address search program execution unit 10944 implements the server identifier search unit 946 and executes a server address search program that extracts, from the server identifier database 10943, a server identifier corresponding to the object identifier received by the object identifier reception program execution unit 10941. The server address transmission program execution unit 10942 implements the server identifier transmission unit 942 and executes a server address transmission program that causes the transmission destination decision server 10940 to transmit the server identifier extracted by the server address search program execution unit 10944 to the server address reception program execution unit 10946 of the STB 10905.

The server identifier database 10943 stores sets of object identifiers and the IP addresses of servers.

The application server 10908 includes a code reception program execution unit 10909, database 10910, video content search program execution unit 10911, and data transmission program execution unit 10912. The code reception program execution unit 10909 implements the code reception unit 909 and executes a code reception program that causes the application server 10908 to receive the object identifier from the code transmission program execution unit 10907 of the STB 10905 through the communication network 120. The database 10910 implements the data storage unit 910 and stores in advance object identifiers, service codes, and data in correspondence with each other. The video content search program execution unit 10911 implements the data search unit 911 and executes a video content search program that causes the application server 10908 to extract, from the database 10910, data corresponding to the object identifier received by the code reception program execution unit 10909. The data transmission program execution unit 10912 implements the data transmission unit 912 and executes a data transmission program that causes the application server 10908 to transmit the data extracted by the video content search program execution unit 10911 to the data reception program execution unit 10913 of the STB 10905 through the communication network 120.

The database 10910 includes a video content data table 10931 that stores video content data in correspondence with object identifiers and service codes, and a music content data table 10932 that stores music content data in correspondence with object identifiers and service codes. The video content data table 10931 stores object identifiers, service codes, and data. Especially, a service code "S001" indicates a video playback program. In this case, data combined with the service code contains a video content encoded by, e.g., MPEG (Motion Picture Experts Group)-4.

The STB 10905 and transmission destination decision server 10940 are connected through the communication network 120. The STB 10905 and application server 10908 are connected through the communication network 120.

The RFID tag 10901 includes a storage unit (not shown) to store an identifier or data and a wireless communication device (not shown). The RFID reader 10903 includes a wireless communication device (not shown) to read the identifier or data from the RFID tag 10901. Assume that the RFID tag 10901 has a function of storing an object identifier as a read-only unique identifier and transmitting only the object identifier to the RFID reader 10903. The RFID tag 10901 stores an object identifier "A514CZ".

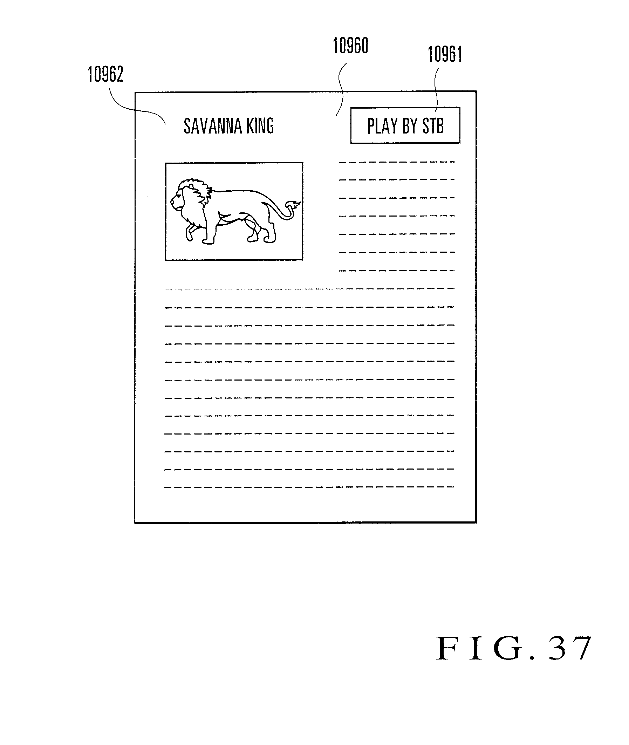

The RFID tag 10901 is implanted under an RFID reader contact surface 10961 with a description "play by STB" adjacent to a title 10962 of each corner of an entertainment paper magazine 10960 about movies, music, and games. Fig. 37 is an explanatory view showing an arrangement example of one page of such a magazine. This magazine is published by a publishing company in cooperation with the maker of the STB 10905. When the RFID reader 10903 attached to the STB 10905 reads an object identifier stored in an RFID tag implanted under the RFID reader contact surface 10961 of each page, various kinds of contents of each corner of the magazine can be played back by using the STB 10905.

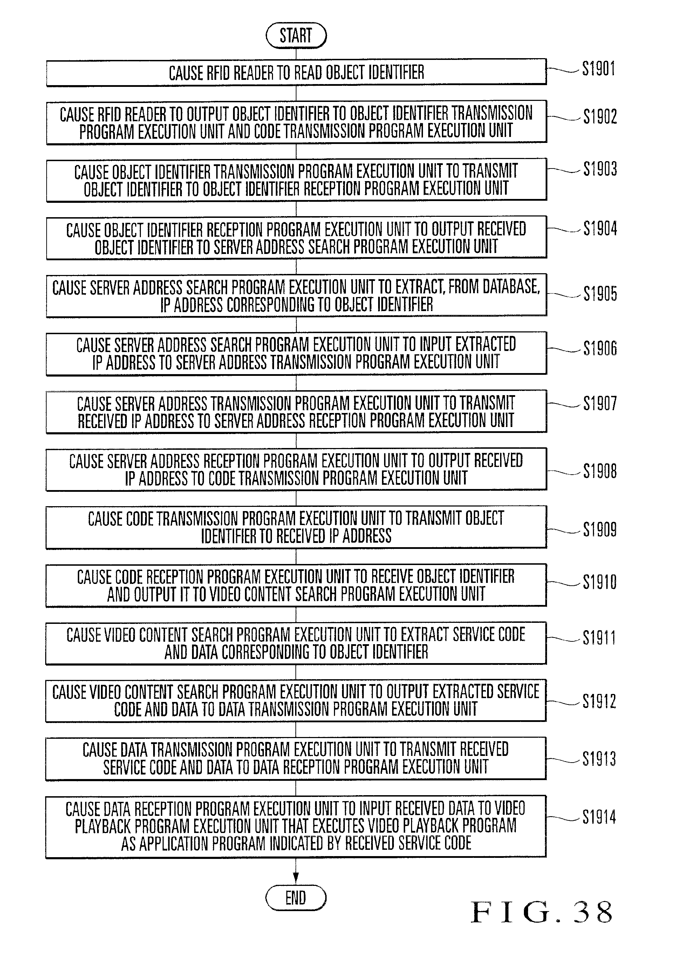

The operation of a detailed example of the eighth embodiment of the present invention will be described next with reference to the accompanying drawings. Fig. 38 is a flowchart for explaining the operation of a detailed example of the eighth embodiment of the present invention.

The user of the STB 10905 moves the RFID reader contact surface 10961 with the description "play by STB" close to the RFID reader 10903 so that the RFID reader 10903 reads the object identifier stored in the RFID tag 10901 implanted under the RFID reader contact surface 10961 (step S1901). The RFID reader 10903 outputs the read object identifier "A514CZ" to the object identifier transmission program execution unit 10944 and code transmission program execution unit 10907 (S1902).

The object identifier transmission program execution unit 10944 transmits the object identifier "A514CZ" read by the RFID reader 10903 to the object identifier reception program execution unit 10941 of the transmission destination decision server 10940 through the communication network 120 (step S1903). The object identifier reception program execution unit 10941 inputs the received object identifier to the server address search program execution unit 10944 (step S1904).

The server address search program execution unit 10944 searches for and extracts, from the database 10943, an IP address corresponding to the object identifier "A514CZ" received from the object identifier reception program execution unit 10941 (step S1905). The server address search program execution unit 10944 inputs the extracted IP address (the IP address of the application server 10908) to the server address transmission program execution unit 10942 (step S1906).

The server address transmission program execution unit 10942 transmits the IP address extracted by the server address search program execution unit 10944 to the server address reception program execution unit 10945 of the STB 10905 through the communication network 120 (step S1907). The server address reception program execution unit 10945 inputs, to the code transmission program execution unit 10907, the IP address received from the server address transmission program execution unit 10942 (step S1908).

The code transmission program execution unit 10907 transmits the object identifier "A514CZ" read by the RFID reader 10903 to the code reception program execution unit 10909 of the application server 10908 with the IP address received by the server address reception program execution unit 10945 (step S1909).

The code reception program execution unit 10909 inputs, to the video content search program execution unit 10911, the object identifier "A514CZ" received from the code transmission program execution unit 10907 of the STB 10905 (step S1910).

The video content data table 10931 of the database 10910 stores the object identifier "A514CZ", service code "S001", and data "video content of Savanna King" in correspondence with each other.

The video content search program execution unit 10911 searches for and extracts, from the video content data table 10931 of the database 10910, the set of the service code "S001" and data "video content of Savanna King" corresponding to the object identifier "A514CZ" received from the code reception program execution unit 10909 (step S1911) and inputs the extracted set of the service code "S001" and data "video content of Savanna King" to the data transmission program execution unit 10912 (step S1912).

The data transmission program execution unit 10912 transmits the set of the service code "S001" and data "video content of Savanna King" received from the video content search program execution unit 10911 to the data reception program execution unit 10913 of the STB 10905 through the communication network 120 (step S1913).

The data reception program execution unit 10913 inputs the data "video content of Savanna King" received together with the service code "S001" to the video playback program execution unit 10904 that executes the video playback program as an application program corresponding to the service code "S001" received from the data transmission program execution unit 10912 (step S1914).

The video playback program execution unit 10904 decodes the data "video content of Savanna King" received from the data reception program execution unit 10913 and displays the "video content of Savanna King" on a monitor (not shown) externally connected to the STB 10905.

In this example, the data transmission program execution unit 10912 need not always transmit the service code and data to the code transmission program execution unit 10907 simultaneously. For example, the service code may be transmitted first to make the video playback program execution unit 10904 ready. Then, the data may be transmitted and played back.

The video playback program may be a music playback program or game play base program. In this case, each data may be a binary code of score data or a game program. For example, assume that a service code "S002" indicates a music playback program, and the database 10910 stores the set of the service code "S002" and data "score data of ninth symphony" in correspondence with the object identifier "A514CZ". In this case, the music playback program is activated in the STB 10905 to receive the data "score data of ninth symphony" and play the music through a speaker (not shown) connected to the STB 10905. As described above, the paper magazine 10960 can have an RFID tag implanted in the sheet surface and storing an object identifier corresponding to data for an arbitrary application program that can be activated in the STB 10905.

In this example, the IP address of the application server is returned to the STB 10905 by using the server identifier database 10943 and server address search program execution unit 10944. However, to prevent any concentration of connections from STBs to the single transmission destination decision server 10940, the IP addresses of a plurality of transmission destination decision servers with the same function may be registered in each STB, and the address of one of the transmission destination decision servers may be decided by a decision method such as round robin and returned. The IP address of a transmission destination decision server to be returned may be decided by exchanging load information with each transmission destination decision server.

As described above, according to this embodiment, the client terminal 905 can selectively use a plurality of servers as needed. In addition, the transmission destination decision server 940 can decide the server to be selectively used. For this reason, the client terminal 905 need only know the address of the transmission destination decision server 940. The client terminal 905 need not store the network configuration of servers that provide data corresponding to application programs.

### Ninth Embodiment

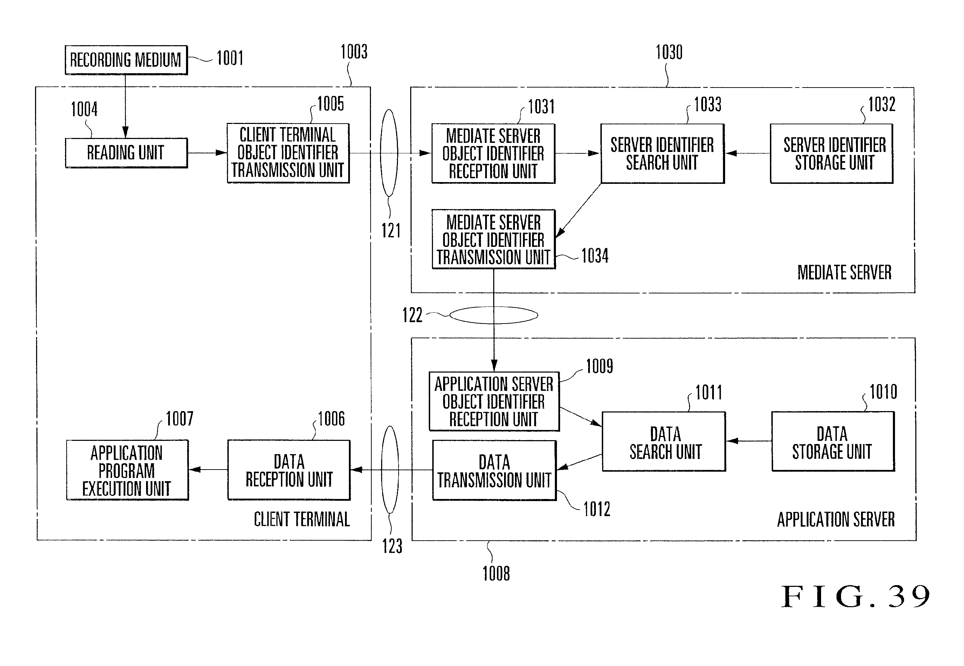

The ninth embodiment of the present invention will be described next with reference to the accompanying drawings. Fig. 39 is a block diagram showing an arrangement example of the ninth embodiment of the present invention.

The ninth embodiment of the present invention includes a recording medium 1001, client terminal 1003, mediate server 1030, application server 1008, first communication network 121, second communication network 122, and third communication network 123.

The recording medium 1001 stores a unique object identifier. The client terminal 1003 includes a reading unit (identifier reading means) 1004, client terminal object identifier transmission unit (client terminal object identifier transmission means) 1005, data reception unit (data reception means) 1006, and application program execution unit (application program execution means) 1007. The reading unit 1004 reads the object identifier stored in the recording medium 1001. The client terminal object identifier transmission unit 1005 transmits the object identifier read by the reading unit 1004 to the mediate server 1030. The data reception unit 1006 receives information from the application server 1008. The application program execution unit 1007 executes an application program on the basis of the information received by the data reception unit 1006.

The mediate server 1030 includes a mediate server object identifier reception unit (mediate server object identifier reception means) 1031, server identifier storage unit (server identifier storage means) 1032, server identifier search unit (server identifier search means) 1033, and mediate server object identifier transmission unit (mediate server object identifier transmission means) 1034. The mediate server object identifier reception unit 1031 receives the object identifier from the client terminal object identifier transmission unit 1005 of the client terminal 1003. The server identifier storage unit 1032 stores object identifiers and server identifiers as information to specify servers in correspondence with each other. The server identifier search unit 1033 extracts, from the server identifier storage unit 1032, a server identifier corresponding to the object identifier received by the mediate server object identifier reception unit 1031. The mediate server object identifier transmission unit 1034 transmits the object identifier to a server indicated by the server identifier extracted by the server identifier search unit 1033.

The server identifier storage unit 1032 stores sets of object identifiers and server identifiers representing object identifier transmission destination servers. The server identifier can be either an IP address or a symbol string such as an arbitrary number if it can uniquely indicate a server.

The application server 1008 includes an application server object identifier reception unit (application server object identifier reception means) 1009, data storage unit (data storage means) 1010, data search unit (data search means) 1011, and data transmission unit (data transmission means) 1012. The application server object identifier reception unit 1009 receives the object identifier from the mediate server object identifier transmission unit 1034 of the mediate server 1030. The data storage unit 1010 stores object identifiers, service codes as information representing application programs, and data in advance in correspondence with each other. The data search unit 1011 extracts, from the data storage unit 1010, data corresponding to the object identifier received by the application server object identifier reception unit 1009. The data transmission unit 1012 transmits the data extracted by the data search unit 1011 to the data reception unit 1006 of the client terminal 1003.

The client terminal 1003 and mediate server 1030 are connected through the first communication network 121. The client terminal 1003 and application server 1008 are connected through the third communication network 123. The mediate server 1030 and application server 1008 are connected through the second communication network 122. The first communication network 121 and third communication network 123 may be the same communication network and are implemented by, e.g., the Internet. The second communication network 122 is implemented by, e.g., an intranet 11021.

The server identifier storage unit 1032 may store sets of object identifiers, server identifiers, and service codes. In this case, the server identifier search unit 1033 extracts a server identifier and a service code and inputs the object identifier, service code, and server identifier to the mediate server object identifier transmission unit 1034. The mediate server object identifier transmission unit 1034 transmits the set of the object identifier and service code to the application server object identifier reception unit 1009 of the application server 1008 indicated by the server identifier. The application server object identifier reception unit 1009 inputs the received set of the object identifier and service code to the data search unit 1011. On the basis of the received object identifier and service code, the data search unit 1011 searches the data storage unit 1010 to extract data corresponding to the received set of the object identifier and service code and outputs the extracted set of the service code and data to the data transmission unit 1012.

The client terminal 1003 may include a service code providing unit (not shown) that stores in advance a service code as information indicating a driving application program to implement a service provided by the data processing system according to the eighth embodiment of the present invention. In this case, when the client terminal object identifier transmission unit 1005 is to transmit the object identifier to the mediate server object identifier reception unit 1031, the service code providing unit also transmits a service code together with the object identifier. The mediate server object identifier transmission unit 1034 inputs the set of the object identifier and service code to the server identifier search unit 1033. The server identifier storage unit 1032 stores sets of object identifier, service codes, and server identifiers. On the basis of the received object identifier and service code, the server identifier search unit 1033 searches the server identifier storage unit 1032 to extract a server identifier corresponding to the received set of the object identifier and service code and inputs the received object identifier and service code and the extracted server identifier to the mediate server object identifier transmission unit 1034.

The mediate server object identifier transmission unit 1034 transmits the received object identifier and service code to the application server object identifier reception unit 1009 of the application server 1008 indicated by the server identifier extracted by the server identifier search unit 1033. The application server object identifier reception unit 1009 inputs the received object identifier and service code to the data search unit 1011. The data search unit 1011 searches for and extracts, from the data storage unit 1010, data corresponding to the received set of the object identifier and service code and inputs the extracted data to the data transmission unit 1012. The data transmission unit 1012 transmits the received data to the data reception unit 1006 of the client terminal 1003. The data reception unit 1006 inputs the data received from the data transmission unit 1012 to the application program corresponding to the service code transmitted from the client terminal object identifier transmission unit 1005 to the mediate server object identifier reception unit 1031.

If the application program is not activated when the data received from the data transmission unit 1012 is to be input to the application program, the data reception unit 1006 may cause the application program execution unit 1007 to activate the application program and then input the received data.

The reading unit 1004 may be a part of the client terminal 1003 or connected to the outside of the client terminal 1003 through a communication interface.

The application program executed by the application program execution unit 1007 can form either one program file by itself or a partial function of a program file.

The server identifier storage unit 1032 and data storage unit 1010 can store the sets of object identifiers and other information either before or after the object identifiers are issued.

When the client terminal 1003 includes a service code providing unit, the service code providing unit may be incorporated in an application program. In this case, the service code providing unit outputs a service code corresponding to the application program itself.

When the client terminal 1003 includes a service code providing unit, the service code providing unit may store the object identifier stored in the recording medium 1001 uniquely in correspondence with an application program. When the reading unit 1004 reads the object identifier, a service code corresponding to the application program corresponding to the object identifier may be output to the application program execution unit 1004 on the basis of the correspondence between the object identifier and the application program.

The server identifier storage unit 1032 may store a plurality of server identifiers in correspondence with one object identifier or a set of an object identifier and a service code. The mediate server 1030 may monitor the load states of application program indicated by the plurality of corresponding server identifiers. On the basis of the load states, the server identifier search unit 1033 may decide one of the plurality of server identifiers to be extracted.

The data storage unit 1010 may store a plurality of sets of service codes and data in correspondence with one object identifier. In this case, the data search unit 1011 extracts the plurality of sets of service codes and data and inputs them to the data transmission unit 1012. The data transmission unit 1012 transmits the plurality of received sets of the service codes and data to the data reception unit 1006 of the client terminal 1003. Upon receiving the plurality of sets of the service codes and data, the data reception unit 1006 may display the plurality of received sets of service codes and data on the display unit (not shown) of the client terminal 1003 to make the user select a service code corresponding to the application program to be executed. The data reception unit 1006 may have a mechanism to make the user do selection only when the sets of object identifiers, service codes, and data are received for the first time. If the sets of object identifiers, service codes, and data are received for the second or subsequent time, a service code may automatically be selected in accordance with the first selection.

In storing object identifiers in correspondence with other information, the server identifier storage unit 1032 and data storage unit 1010 may handle a plurality of object identifiers as a set so that other information may be stored in correspondence with the set of object identifiers. At this time, the set of object identifiers may specify the reading order of the reading unit 1004.

When the client terminal 1003 includes a service code providing unit, it may acquire a service code from a recording medium different from the recording medium 1001 storing the object identifier. In this case, the reading unit 1004 reads the service code from the other recording medium before or after the object identifier acquisition timing. The other recording medium stores a service code.

The client terminal 1003 incorporates a data processing program that causes a computer to execute processing of reading an object identifier, processing of transmitting the read object identifier to the mediate server 1030, processing of receiving a service code and data from the application server 1008, processing of inputting the received data to the application program execution unit 1007 that executes the application program indicated by the received service code, and processing of causing the application program execution unit 1007 to execute the application program to process the data.

The mediate server 1030 incorporates a data processing program that causes a computer to execute processing of receiving the object identifier, processing of extracting, from the server identifier storage unit 1032 that stores an object identifier and information representing another server to which the received object identifier is to be transmitted in correspondence with each other, information which corresponds to the received object identifier and represents the application server 1008 as another server to which the object identifier is to be transmitted, and processing of transmitting the received object identifier to the application server 1008 on the basis of the extracted information representing the application server 1008.

The application server 1008 incorporates a data processing program that causes a computer to execute processing of receiving the object identifier, processing of extracting a service code and data corresponding to the received object identifier from the data storage unit 1010 that stores object identifiers, service codes, and data in correspondence with each other, and processing of transmitting the extracted service code and data to the client terminal 1003 that has read the object identifier.

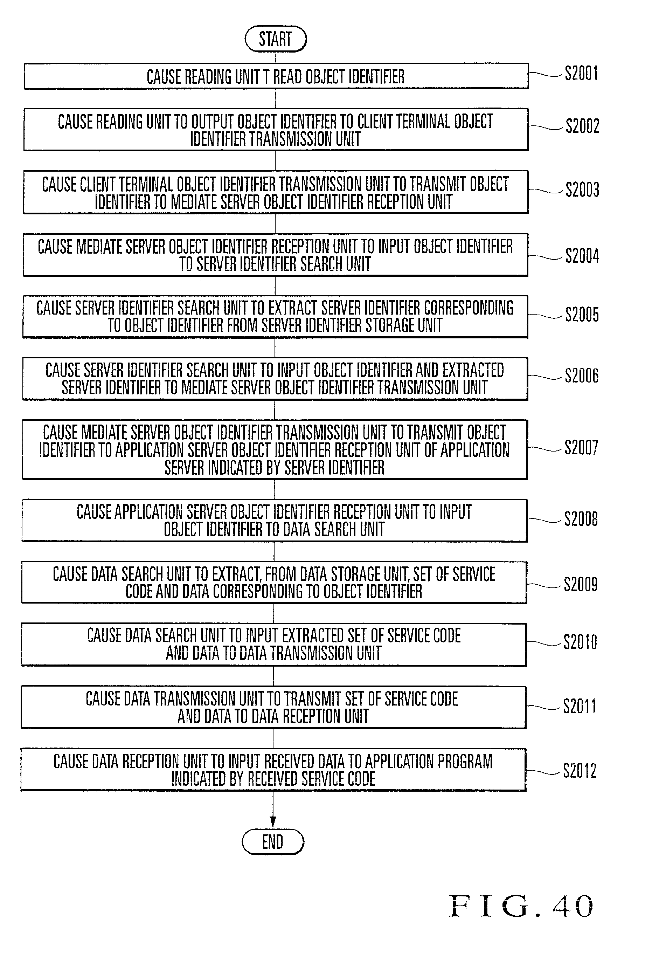

The operation of the ninth embodiment of the present invention will be described next with reference to the accompanying drawings. Fig. 40 is a flowchart for explaining the operation of the ninth embodiment of the present invention.

The reading unit 1004 reads an object identifier stored in the recording medium 1001 (step S2001). The reading unit 1004 outputs the read object identifier to the client terminal object identifier transmission unit 1005 (step S2002).

The client terminal object identifier transmission unit 1005 transmits the object identifier read by the reading unit 1004 to the mediate server object identifier reception unit 1031 through the first communication network 121 (step S2003). The mediate server object identifier reception unit 1031 inputs the received object identifier to the server identifier search unit 1033 (step S2004).

The server identifier search unit 1033 searches for and extracts, from the server identifier storage unit 1032, a server identifier corresponding to the object identifier received from the mediate server object identifier reception unit 1031 and indicates the object identifier transmission destination (step S2005) and inputs the extracted server identifier and object identifier to the mediate server object identifier transmission unit 1034 (step S2006).

The mediate server object identifier transmission unit 1034 transmits the object identifier, through the second communication network 122, to the application server object identifier reception unit 1009 of the server (application server 1008) indicated by the server identifier received from the server identifier search unit 1033 (step S2007).

The application server object identifier reception unit 1009 inputs the received object identifier to the data search unit 1011 (step S2008).

The data storage unit 1010 stores object identifiers, service codes uniquely indicating application programs that run on the client terminal 1003 or a server, and data to be processed by the application programs in correspondence with each other.

The data search unit 1011 searches for and extracts, from the data storage unit 1010, a set of a service code and data corresponding to the object identifier received from the application server object identifier reception unit 1009 (step S2009) and inputs the extracted set of the service code and data to the data transmission unit 1012 (step S2010).

The data transmission unit 1012 transmits the received set of the service code and data to the data reception unit 1006 of the client terminal 1003 through the third communication network 123 (step S2011). The data reception unit 1006 inputs the data received together with the service code to the reading unit 1004 that executes the application program indicated by the received service code (step S2012). The application program execution unit 104 displays the data received from the data reception unit 1006 or executes an operation instructed by the data.

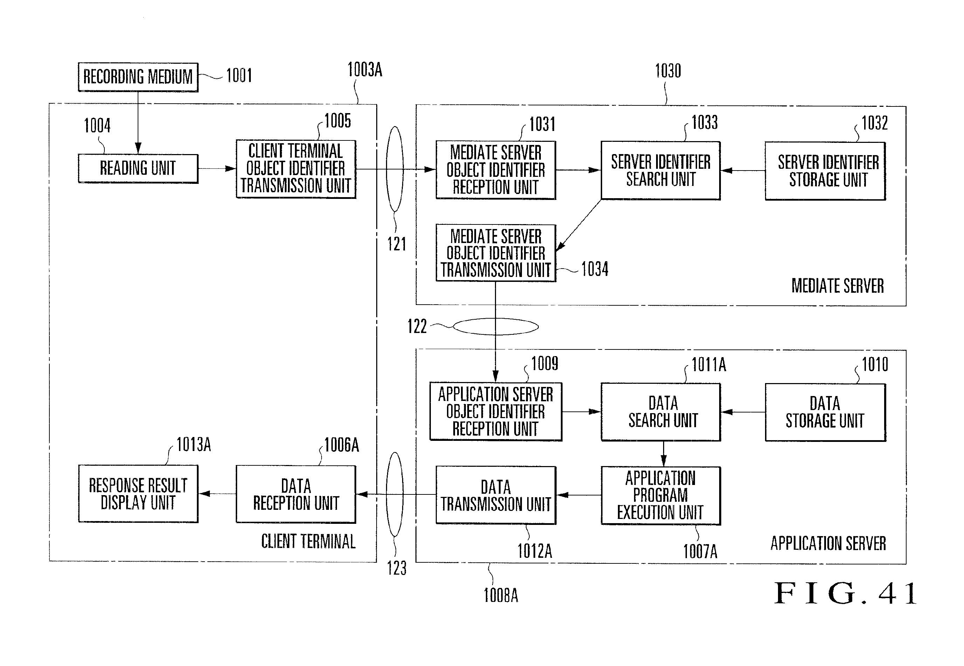

Fig. 41 is a block diagram showing another arrangement example of the ninth embodiment of the present invention. The same reference numerals as in Fig. 39 denote the same constituent elements in Fig. 41. In this arrangement example, an application program execution unit 1007A is included in an application server 1008A.

A data search unit 1011A of the application server 1008A searches for and extracts data corresponding to a received object identifier from data stored in the data storage unit 1010 and outputs the data to the application program execution unit 1007A. The application program execution unit 1007A executes an application program to process the received data and outputs the data to a data transmission unit 1012A. The data transmission unit 1012A transmits the data processed by the application program execution unit 1007A to a data reception unit 1006A of a client terminal 1003A through the communication network 120.

The data reception unit 1006A outputs the received data to a response result display unit 1013A. On the basis of the received data, the response result display unit 1013A displays the processing result of the application program execution unit 1007A on the display unit of the client terminal 1003A.

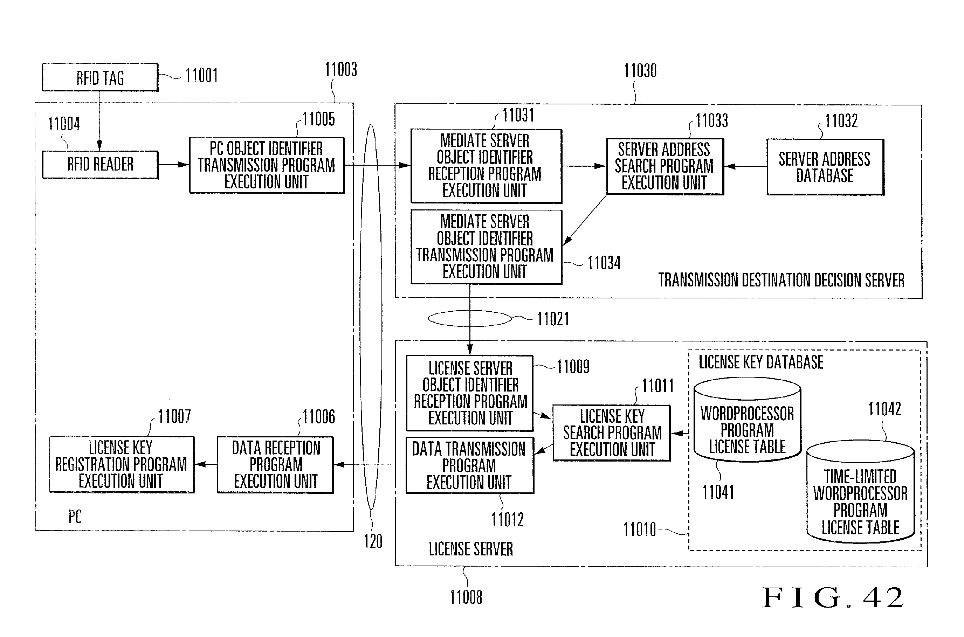

The ninth embodiment of the present invention will be described next by using a detailed example. Fig. 42 is a block diagram for explaining the arrangement of a detailed example of the ninth embodiment of the present invention.

A detailed example of the ninth embodiment of the present invention includes an RFID tag 11001, PC 11003, mediate server 11030, license server 11008, communication network 120, and intranet 11021.

The RFID tag 11001 stores an object identifier. The PC 11003 includes an RFID reader 11004, PC object identifier transmission program execution unit 11005, data reception program execution unit 11006, and license key registration program execution unit 11007. The RFID reader 11004 reads the object identifier stored in the RFID tag 11001. The PC object identifier transmission program execution unit 11005 implements the client terminal object identifier transmission unit 1005 and executes a PC object identifier transmission program that causes the PC 11003 to transmit the object identifier read by the RFID reader 11004 to the mediate server 11030. The data reception program execution unit 11006 implements the data reception unit 1006 and executes a data reception program that causes the PC 11003 to receive information from the license server 11008 through the communication network 120. The license key registration program execution unit 11007 implements the application program execution unit 1007 and executes a license key registration program that stores the information received by the data reception program execution unit 11006 in a predetermined area of the storage unit (not shown) of the PC 11003.

The RFID tag 11001 includes a storage unit (not shown) to store an identifier or data and a wireless communication device (not shown). The RFID reader 11004 includes a wireless communication device (not shown) to read the identifier or data from the RFID tag 11001. Assume that the RFID tag 11001 has a function of storing an object identifier as a read-only unique identifier and transmitting only the object identifier to the RFID reader 11004. The RFID tag 11001 stores an object identifier "A514CZ". The RFID tag 11001 is implanted in a wordprocessor program license installation card in the sales package of a wordprocessor program.

The mediate server 11030 includes a mediate server object identifier reception program execution unit 11031, server address database 11032, server address search program execution unit 11033, and mediate server object identifier transmission program execution unit 11034. The mediate server object identifier reception program execution unit 11031 implements the mediate server object identifier reception unit 1031 and executes a mediate server object identifier reception program that causes the mediate server 11030 to receive the object identifier from the PC 11003 through the communication network 120. The server address database 11032 implements the server identifier storage unit 1032 and stores object identifiers and the IP addresses of servers in correspondence with each other. The server address search program execution unit 11033 implements the server identifier search unit 1033 and executes a server address search program that causes the mediate server 11030 to extract, from the server address database 11032, the IP address of a server corresponding to the object identifier received by the mediate server object identifier reception program execution unit 11031. The mediate server object identifier transmission program execution unit 11034 implements the mediate server object identifier transmission unit 1034 and executes a mediate server object identifier transmission program that causes the mediate server 11030 to transmit, through the intranet 11021, the object identifier to the license server 11008 of the IP address extracted by the server address search program execution unit 11033.

The server address database 11032 stores sets of object identifiers and the IP addresses of servers. Especially, the IP address of the license server 11008 is stored in correspondence with the object identifier "A514CZ".

The license server 11008 includes a license server object identifier reception program execution unit 11009, license key database 11010, license key search program execution unit 11011, and data transmission program execution unit 11012. The license server object identifier reception program execution unit 11009 implements the application server object identifier reception unit 1009 and executes a license server object identifier reception program that causes the license server 11008 to receive the object identifier from the mediate server 11030 through the intranet 11021. The license key database 11010 implements the data storage unit 1010 and stores in advance object identifiers, service codes, and data in correspondence with each other. The license key search program execution unit 11011 implements the data search unit 1011 and executes a license key search program that causes the license server 11008 to extract, from the license key database 11010, a service code and data corresponding to the object identifier received by the license server object identifier reception program execution unit 11009. The data transmission program execution unit 11012 implements the data transmission unit 1012 and executes a data transmission program that causes the license server 11008 to transmit the service code and data extracted by the license key search program execution unit 11011 to the data reception program execution unit 11006 of the PC 11003 through the communication network 120.

The license key database 11010 includes a wordprocessor program license table 11041 that stores wordprocessor program license key data in correspondence with object identifiers and service codes, and a time-limited wordprocessor program license table 11042 that stores time-limited wordprocessor program license key data in correspondence with object identifiers and service codes. The wordprocessor program license table 11041 stores sets of object identifiers, service codes, and wordprocessor program license key data and especially stores a service code "S001" corresponding to the license key registration program and the license key (data) "KYZZ8U4" of a wordprocessor program that runs on the PC 11003 in correspondence with the object identifier "A514CZ". The time-limited wordprocessor program license table 11042 stores a set of an object identifier "679982", a service code "S002" corresponding to a time-limited license key registration program, and a time-limited license key (data) "HG53Y" of a wordprocessor program that runs on the PC 11003.

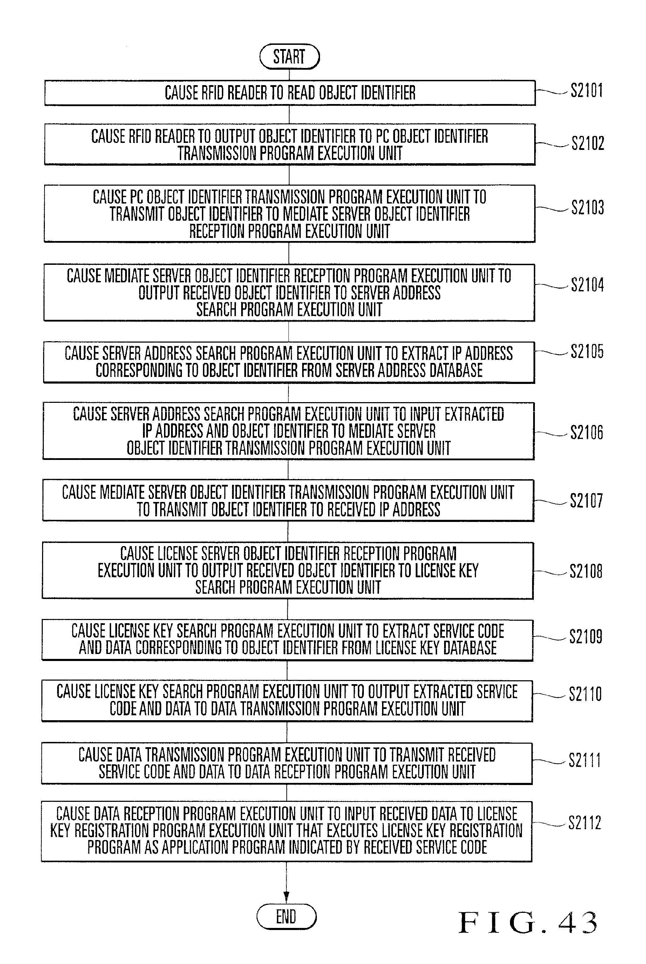

The operation of a detailed example of the ninth embodiment of the present invention will be described next with reference to the accompanying drawings. Fig. 43 is a flowchart for explaining the operation of a detailed example of the ninth embodiment of the present invention.

The user makes a wordprocessor program license installation card in the sales package of a wordprocessor program contact the RFID reader 11004. The RFID reader 11004 reads the object identifier "A514CZ" stored in the RFID tag 11001 implanted in the wordprocessor program license installation card (step S2101). The RFID reader 11004 outputs the read object identifier "A514CZ" to the PC object identifier transmission program execution unit 11005 (step S2102).

The PC object identifier transmission program execution unit 11005 transmits the object identifier "A514CZ" read by the RFID reader 11004 to the mediate server object identifier reception program execution unit 11031 of the mediate server 11030 through the communication network 120 (step S2103).

The mediate server object identifier reception program execution unit 11031 inputs the object identifier "A514CZ" received from the PC object identifier transmission program execution unit 11005 to the server address search program execution unit 11033 (step S2104).

The server address search program execution unit 11033 searches the server address database 11032 to extract an IP address corresponding to the object identifier "A514CZ" (step S2105) and inputs the object identifier "A514CZ" and the extracted IP address of the license server 11008 to the mediate server object identifier transmission program execution unit 11034 (step S2106).

The mediate server object identifier transmission program execution unit 11034 connects, through the intranet 11021, to the license server 11008 as the server of the IP address extracted by the server address search program execution unit 11033 to transmit the object identifier "A514CZ" to the license server object identifier reception program execution unit 11009 of the license server 11008 (step S2107).

The license server object identifier reception program execution unit 11009 inputs, to the license key search program execution unit 11011, the object identifier "A514CZ" received from the mediate server object identifier transmission program execution unit 11034 (step S2108).

The license key search program execution unit 11011 searches for a service code and data corresponding to the object identifier "A514CZ" from the wordprocessor program license table 11041 of the license key database 11010, extracts the service code "S001" and license key (data) "KYZZ8U4" as a result of search (step S2109), and outputs the extracted service code "S001" and license key (data) "KYZZ8U4" to the data transmission program execution unit 11012 (step S2110).

The data transmission program execution unit 11012 transmits, to the data reception program execution unit 11006 through the communication network 120, the service code "S001" and license key (data) "KYZZ8U4" output from the license key search program execution unit 11011 (step S2111).

The data reception program execution unit 11006 causes the license key registration program execution unit to activate the license key registration program as the application program corresponding to the service code "S001" received from the data transmission program execution unit 11012 and inputs the received license key (data) "KYZZ8U4" to the license key registration program execution unit 11007 (step S2112).

The license key registration program execution unit 11007 stores the license key (data) "KYZZ8U4" received from the data reception program execution unit 11006 in a predetermined area, i.e., license registration area of the storage unit of the PC 11003.

In this example, the unencrypted license key (data) is transmitted/received. However, the license key (data) may be encrypted to prevent easy replication by the following method. For example, a secret key is stored in the RFID tag 11001 in addition to the object identifier "A514CZ". The RFID reader 11004 reads the secret key from the RFID tag 11001 together with the object identifier "A514CZ". The RFID reader 11004 outputs the read secret key to the data reception program execution unit 11006. On the other hand, the license key database 11010 stores the license key (data) "KYZZ8U4" that is encrypted and is decryptable by the secret key.

The data transmission program 11012 transmits the encrypted license key (data) to the data reception program 11006. The data reception program 11006 decrypts the license key (data) by the secret key read by the RFID reader 11004 and inputs the decrypted license key (data) "KYZZ8U4" to the license key registration program execution unit 11007.

As another method, the data reception program 11006 inputs the encrypted license key (data) to the license key registration program execution unit 11007 without executing decryption. The license key registration program execution unit 11007 stores the encrypted license key (data) in a predetermined area, i.e., license registration area of the storage unit of the PC 11003. In activating the wordprocessor program as the target of the license key, the RFID reader 11004 reads the RFID tag 11001. After confirming that the license is still held even now, the wordprocessor program is activated. License confirmation can be done not only in activating an application program such as a wordprocessor program but also in playing back music data or video content. With this arrangement, distribution of programs and contents is enabled by purchasing/selling tickets with a license (object identifier and secret key). Cryptography here is merely an example, and the same effect as described above can also be obtained by any other cryptographic method using, e.g., a public key or one-time password.

As described above, according to this embodiment, the mediate server 1030 corresponds to the transmission destination decision server 940 of the eighth embodiment. In the eighth embodiment, the client directly connects to the application server 908. In the ninth embodiment, however, since the mediate server 1030 directly transmits an object identifier to the application server 1008, the network load in the entire system can be reduced.

### 10th Embodiment

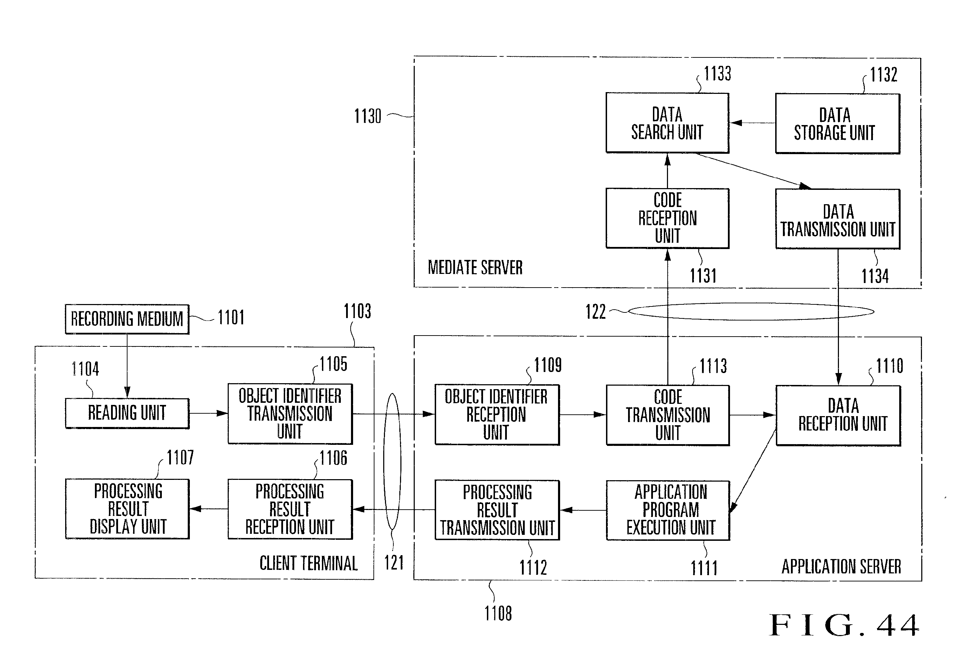

The 10th embodiment of the present invention will be described next with reference to the accompanying drawings. Fig. 44 is a block diagram showing an arrangement example of the 10th embodiment of the present invention.

The 10th embodiment of the present invention includes a recording medium 1101, client terminal 1103, application server 1108, mediate server 1130, first communication network 121, and second communication network 122.

The recording medium 1101 stores a unique object identifier. The client terminal 1103 includes a reading unit (identifier reading means) 1104, object identifier transmission unit (object identifier transmission means) 1105, processing result reception unit 1106, and processing result display unit 1107. The reading unit 1104 reads the object identifier stored in the recording medium 1101. The object identifier transmission unit 1105 transmits the object identifier read by the reading unit 1104 to the mediate server 1130. The processing result reception unit 1106 receives information from the application server 1108. The processing result display unit 1107 displays the information received by the processing result reception unit 1106 on the display unit (not shown) of the client terminal 1103.

The application server 1108 includes an object identifier reception unit (object identifier reception means) 1109, application program execution unit (application program execution means) 1111, code transmission unit (code transmission means) 1113, data reception unit (data reception means) 1110, and processing result transmission unit 1112. The object identifier reception unit 1109 receives the object identifier from the object identifier transmission unit 1105 of the client terminal 1103. The application program execution unit 1111 executes an application program. The code transmission unit 1113 transmits, to the mediate server 1130, the object identifier received by the object identifier reception unit 1109. The data reception unit 1110 receives data from the mediate server 1130. The processing result transmission unit 1112 transmits, to the client terminal 1103, processing result information, i.e., information of a result obtained by causing the application program execution unit 1111 to execute the application program to process the data received by the data reception unit 1110.

The code transmission unit 1113 stores in advance a service code corresponding to the application program that is being executed by the application program execution unit 1111.

The mediate server 1130 includes a code reception unit (code reception means) 1131, data storage unit (data storage means) 1132, data search unit (data search means) 1133, and data transmission unit (data transmission means) 1134. The code reception unit 1131 receives the object identifier from the application server 1108. The data storage unit 1132 stores in advance object identifiers, service codes, and data in correspondence with each other. The data search unit 1133 extracts, from the data storage unit 1132, data corresponding to the object identifier received by the code reception unit 1131. The data transmission unit 1134 transmits, to the application server 1108, the object identifier, service code, and data extracted by the data search unit 1133.

The client terminal 1103 and application server 1108 are connected through the first communication network 121. The application server 1108 and mediate server 1130 are connected through the second communication network 122.

The code transmission unit 1113 may transmit only the object identifier to the code reception unit 1131 of the mediate server 1130 without transmitting the service code corresponding to the application program to the code reception unit 1131. In this case, the data search unit 1133 searches the data storage unit 1132 by using only the object identifier as the search key, extracts the service code and data stored in the data storage unit 1132 in correspondence with the object identifier, and inputs the extracted service code and data to the data transmission unit 1134. The data transmission unit 1134 transmits the received service code and data to the data reception unit 1110 of the application server 1108. The data reception unit 1110 inputs the received data to the application program execution unit 1111 that is executing the application program indicated by the received service code.

The code transmission unit 1113 may transmit a server identifier uniquely indicating the application server 1108 to the code reception unit 1131 of the mediate server 1130 as a service code. The server identifier can be an arbitrary symbol string that is unique in the mediate server 1130. The server identifier can be, e.g., a server serial number or a network address such as a server IP address.

If the application program is not activated when the data received from the data transmission unit 1134 is to be input to the application program, the data reception unit 1110 may cause the application program execution unit 1111 to activate the application program and then input the data.

The data stored in the data storage unit 1132 may be authentication data as the information of the user of the client terminal 1103. The application server 1108 executes user authentication on the basis of the authentication data and provides a service necessary for the user who has the recording medium 1101 storing an object identifier corresponding to the authentication data. If user data is managed in the application server 1108 by giving, to each user, a user identifier as information uniquely indicating a user, the data stored in the data storage unit 1132 may be the user identifiers and passwords in each application server. In these forms, the mediate server 1130 executes necessary authentication procedures for the application server. Hence, the user can connect to a necessary application server and receive a service without user authentication in the application server as if it were done only by causing the reading unit 1104 to read the object identifier stored in the recording medium.

The data stored in the data storage unit 1132 may be data about application program execution permission authority. The application program execution unit 1111 may determine whether to determine the application program on the basis of the execution permission authority data. Alternatively, the mediate server 1130 may determine whether to execute the application program after the data search unit 1133 extracts the data about execution permission authority. In this case, the mediate server 1130 transmits, to the data reception unit 1110, a determination result of whether to execute the application program. The data reception unit 1110 inputs the information of whether to execute the application program to the application program execution unit 1111.

The reading unit 1104 may be a part of the client terminal 1103 or connected to the outside of the client terminal 1103 through a communication interface.

The application program executed by the application program execution unit 1111 can form either one program file by itself or a partial function of a program file.

The data storage unit 1132 can store the sets of object identifiers and other corresponding information either before or after the object identifiers are issued.

In storing object identifiers in correspondence with other information, the data storage unit 1132 may handle a plurality of object identifiers as a set so that other information may be stored in correspondence with the set of object identifiers. At this time, the set of object identifiers may specify the reading order of the reading unit 1104.

When the client terminal 1103 includes a service code providing unit and the application program execution unit 1111, the service code providing unit may be incorporated in the application program execution unit 1111. In this case, the service code providing unit outputs a service code corresponding to the application program itself to be executed by the application program execution unit 1111.

When the client terminal 1103 includes a service code providing unit, it may acquire a service code from a recording medium different from the recording medium 1101 storing the object identifier. In this case, the reading unit 1104 reads the service code stored in the other recording medium before or after the object identifier acquisition timing. The other recording medium stores a service code.

The client terminal 1103 incorporates a data processing program that causes a computer to execute processing of reading an object identifier, processing of transmitting the read object identifier to the application server 1108, processing of receiving information of the processing result of the application program, which is transmitted from the application server 1108, and processing of displaying the received information of the processing result of the application program on the display means.

The application server 1108 incorporates a data processing program that causes a computer to execute processing of receiving the object identifier, processing of transmitting, to the mediate server 1130, the received object identifier and a service code as information uniquely representing the application program that is being executed by the application program execution unit 1111, processing of receiving data from the mediate server 1130, processing of inputting the received data to the application program execution unit 1111 that executes the application program indicated by the service code, processing of causing the application program execution unit 1111 to execute the application program to process the data, and processing of transmitting the information of the processing result to the client terminal 1103 that has read the object identifier.

The mediate server 1130 incorporates a data processing program that causes a computer to execute processing of receiving the object identifier and service code from the application server 1108, processing of extracting data corresponding to the received object identifier and received service code from the data storage unit 1132 that stores object identifiers, service codes, and data in correspondence with each other, and processing of transmitting the extracted data to the application server 1108.

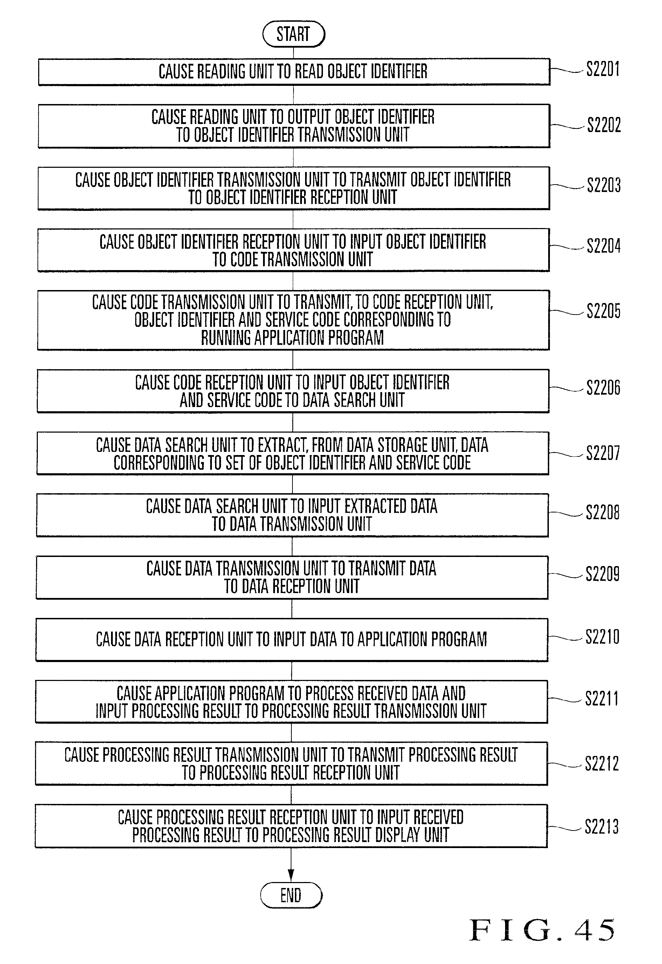

The operation of the 10th embodiment of the present invention will be described next with reference to the accompanying drawings. Fig. 45 is a flowchart for explaining the operation of the 10th embodiment of the present invention.

The reading unit 1104 reads an object identifier stored in the recording medium 1101 (step S2201). The reading unit 1104 outputs the read object identifier to the object identifier transmission unit 1105 (step S2202).

The object identifier transmission unit 1105 transmits the object identifier read by the reading unit 1104 to the object identifier reception unit 1109 of the application server 1108 through the first communication network 121 (step S2203).

The object identifier reception unit 1109 inputs, to the code transmission unit 1113, the object identifier received from the object identifier transmission unit 1105 (step S2204).

The code transmission unit 1113 transmits, to the code reception unit 1131 of the mediate server 1130 through the second communication network 122, the object identifier received from the object identifier reception unit 1109 and a service code corresponding to the application program that is being executed by the application program execution unit 1111 (step S2205).

The code reception unit 1131 inputs, to the data search unit 1133, the object identifier and service code received from the code transmission unit 1113 (step S2206).

The data search unit 1133 searches for and extracts, from the data storage unit 1132, data corresponding to the object identifier and service code received from the code reception unit 1131 (step S2207) and inputs the extracted data to the data transmission unit 1134 (step S2208).

The data transmission unit 1134 transmits the data received from the data search unit 1133 to the data reception unit 1110 through the second communication network 122 (step S2209).

The data reception unit 1110 inputs the data received from the data transmission unit 1134 to the application program execution unit 1111 that executes the application program corresponding to the service code transmitted from the code transmission unit 1113 to the code reception unit 1131 (step S2210).

The application program execution unit 1111 processes the data received from the data reception unit 1110 and inputs, to the processing result transmission unit 1112, processing result information as data processing result information (step S2211).

The processing result transmission unit 1112 transmits the processing result information received from the application program execution unit 1111 to the processing result reception unit 1106 through the first communication network 121 (step S2212).

The processing result reception unit 1106 inputs, to the processing result display unit 1107, the processing result information received from the processing result transmission unit 1112 (step S2213).

On the basis of the processing result information received from the processing result reception unit 1106, the processing result display unit 1107 displays the processing result of the application program execution unit 1111 on the screen of a display device connected to the client terminal 1103 or the display unit of the client terminal 1103.

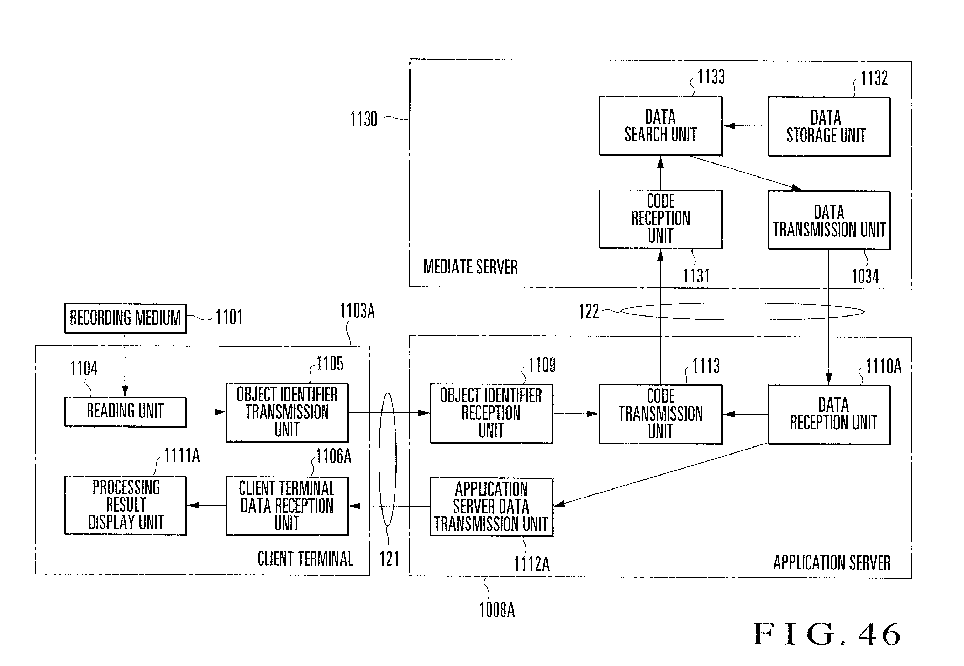

Fig. 46 is a block diagram showing another arrangement example of the 10th embodiment of the present invention. The same reference numerals as in Fig. 44 denote the same constituent elements in Fig. 46. In this arrangement example, an application program execution unit 1111A is included in a client terminal 1103A.

In the client terminal 1103A, the reading unit 1104 reads an object identifier recorded in the recording medium 1101. The object identifier transmission unit 1105 transmits, to an application server 1008A, the object identifier read by the reading unit 1104.

In the application server 1008A, the object identifier reception unit 1109 receives the object identifier transmitted from the object identifier transmission unit 1105. The code transmission unit 1113 transmits, to the mediate server 1130, the object identifier received by the object identifier reception unit 1109.

In the mediate server 1130, the data storage unit 1132 stores object identifiers, service codes, and data in correspondence with each other. A service code is information to uniquely indicate an application program to process data. The code reception unit 1131 receives the object identifier from the code transmission unit 1113. The data search unit 1133 extracts, from the data storage unit 1132, a service code and data corresponding to the object identifier received by the code reception unit 1131. The data transmission unit 1134 transmits, to the application server 1008A, the service code and data extracted by the data search unit 1133.

In the application server 1008A, a data reception unit 1110A receives the service code and data from the data transmission unit 1134. An application server data transmission unit 1112A transmits, to the client terminal 1103A, the service code and data received by the data reception unit 1110A.

In the client terminal 1103A, a client terminal data reception unit 1106A receives the service code and data from the application server data transmission unit 1112A. The application program execution unit 1111A executes the application program indicated by the service code received by the client terminal data reception unit 1106A to process the data received by the client terminal data reception unit 1106A.

The code transmission unit 1113 of the application server 1008A may store object identifiers and service codes in correspondence with each other. In this case, the code transmission unit 1113 transmits, to the mediate server 1130, the object identifier received by the object identifier reception unit 1109 and a service code corresponding to the object identifier. In the mediate server 1130, the code reception unit 1131 receives the object identifier and service code from the code transmission unit 1113. The data search unit 1133 extracts data corresponding to the received object identifier and service code from the data storage unit 1132. The data transmission unit 1134 transmits the extracted data to the application server 1008A. In the application server 1008A, the data reception unit 1110A receives the data from the data transmission unit 1134. The application server data transmission unit 1012A transmits, to the client terminal data reception unit 1106A, the data received by the data reception unit 1110A and the service code transmitted from the code transmission unit 1113 to the mediate server 1130.

As in the first embodiment, the client terminal 1103A may include a service code providing unit (not shown) to store service codes in advance. In this case, the object identifier transmission unit 1105 transmits a service code output from the service code providing unit to the object identifier reception unit 1109 of the application server 1108A together with the object identifier. The code transmission unit 1113 of the application server 1108A transmits this service code to the code reception unit 1131 of the mediate server 1130. The data reception unit 1110A of the application server 1108A transmits the data from the data transmission unit 1134 of the mediate server 1130 to the client terminal data reception unit 1106A through the application server data transmission unit 1012A. The client terminal data reception unit 1106A inputs the receive data to the application program that corresponds to the service code output from the service code providing unit and is executed by the application program execution unit 1111A.

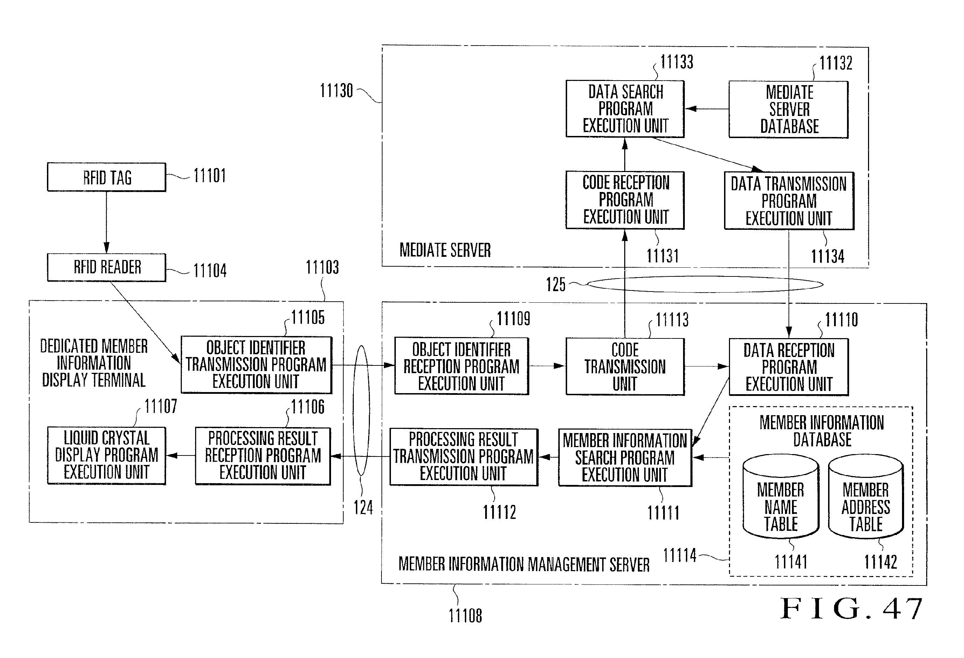

The 10th embodiment of the present invention will be described next by using a detailed example. Fig. 47 is a block diagram for explaining the arrangement of a detailed example of the 10th embodiment of the present invention.

A detailed example of the 10th embodiment of the present invention includes an RFID tag 11101, RFID reader 11104, dedicated member information display terminal 11103, mediate server 11130, member information management server 11108, first Internet 124, and second Internet 125.

The RFID tag 11101 stores an object identifier. The RFID reader 11104 implements the reading unit 1104 and reads the object identifier stored in the RFID tag 11001.

The RFID tag 11101 includes a storage unit (not shown) to store an identifier or data and a wireless communication device (not shown). The RFID reader 11104 includes a wireless communication device (not shown) to read the identifier or data from the RFID tag 11101. Assume that the RFID tag 11101 has a function of storing an object identifier as a read-only unique identifier and transmitting only the object identifier to the RFID reader 11104. The RFID tag 11101 stores an object identifier "A514CZ". The RFID tag 11101 is implanted in, e.g., a membership card (not shown) with a name card size.

The dedicated member information display terminal 11103 included an object identifier transmission program execution unit 11105, processing result reception program execution unit 11106, and liquid crystal display program execution unit 11107. The object identifier transmission program execution unit 11105 implements the object identifier transmission unit 1105 and executes an object identifier transmission program that causes the dedicated member information display terminal 11103 to receive the object identifier read by the RFID reader 11104 and transmit the received object identifier to the member information management server 11108. The processing result reception program execution unit 11106 implements the processing result reception unit 1106 and executes a processing result reception program that causes the dedicated member information display terminal 11103 to receive information from the member information management server 11108 through the first communication network 121. The liquid crystal display program execution unit 11107 implements the processing result display unit 1107 and executes a liquid crystal display program that displays the information received by the processing result reception program execution unit 11106 on a liquid crystal panel serving as the display unit (not shown) of the dedicated member information display terminal 11103.

The mediate server 11130 includes a code reception program execution unit 11131, mediate server database 11132, data search program execution unit 11133, and data transmission program execution unit 11110. The code reception program execution unit 11131 implements the code reception unit 1131 and executes a code reception program that causes the mediate server 11130 to receive the object identifier from the member information management server 11108. The mediate server database 11132 implements the data storage unit 1132 and stores object identifiers, service codes, and data in correspondence with each other. The data search program execution unit 11133 implements the data search unit 1133 and executes a data search program that causes the mediate server 11130 to extract, from the mediate server database 11132, a service code and data corresponding to the object identifier received by the code reception program execution unit 11131. The data transmission program execution unit 11110 implements the data transmission unit 1134 and executes a data transmission program that causes the mediate server 11130 to transmit, to the member information management server 11108, the service code and data extracted by the data search program execution unit 11133.

The mediate server database 11132 stores object identifiers, service codes, and data in correspondence with each other. Especially, a service code "S001" and data "000135" are stored in correspondence with the object identifier "A514CZ".

The member information management server 11108 includes an object identifier reception program execution unit 11109, code transmission unit 11113, data reception program execution unit 11110, member information database 11114, member information search program execution unit 11111, and processing result transmission program execution unit 11112. The object identifier reception program execution unit 11109 implements the object identifier reception unit 1109 and executes an object identifier reception program that causes the member information management server 11108 to receive the object identifier from the dedicated member information display terminal 11103. The code transmission unit 11113 implements the code transmission unit 1113 and transmits, to the mediate server 1130, the object identifier that the object identifier reception program execution unit 11109 has received from the dedicated member information display terminal 11103. The data reception program execution unit 11110 implements the data reception unit 1110 and executes a data reception program that causes the member information management server 11108 to receive information from the mediate server 11130. The member information database 11114 stores membership numbers and member information in correspondence with each other. The member information search program execution unit 11111 implements the application program execution unit 1111 and executes a member information search program that causes the member information management server 11108 to extract member information from the member information database 11114 on the basis of the information received by the data reception program execution unit 11110. The processing result transmission program execution unit 11112 implements the processing result transmission unit 1112 and executes a processing result transmission program that causes the member information management server 11108 to transmit the information extracted by the member information search program execution unit 11111 to the dedicated member information display terminal 11103.

The member information database 11114 includes a member name table 11141 that stores membership numbers and the names of members in correspondence with each other, and a member address table 11142 that stores membership numbers and the addresses of members in correspondence with each other. Especially, the member name table 11141 stores a member name "Taro Nichiden" in correspondence with a service code "S001" and data (membership number) "000135". A service code corresponding to the member information search program 11111 is "S001". The service code "S001" is stored in the setting file of the storage unit (not shown) of the member information management server 11108, which is managed by the code transmission unit 11113.

The RFID reader 11104 and dedicated member information display terminal 11103 are connected by a USB (Universal Serial Bus) 11115.

The dedicated member information display terminal 11103 and member information management server 11108 are connected through the first Internet 124, i.e., a PPP (Point-to-Point Protocol) type Internet using an analog public telephone line. The member information management server 11108 and mediate server 11130 are connected through the second Internet 125, i.e., an Internet capable using any connection method.

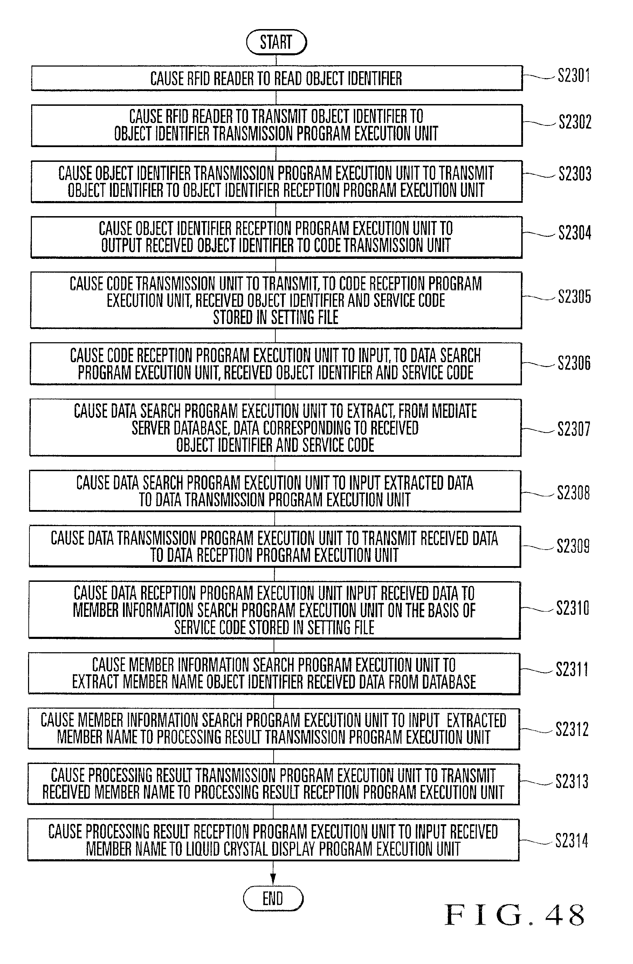

The operation of a detailed example of the 10th embodiment of the present invention will be described next with reference to the accompanying drawings. Fig. 48 is a flowchart for explaining the operation of a detailed example of the 10th embodiment of the present invention.

The user makes the membership card contact the RFID reader 11104. The RFID reader 11104 reads the object identifier "A514CZ" stored in the RFID tag 11101 (step S2301). The RFID reader 11104 transmits the read object identifier "A514CZ" to the object identifier transmission program execution unit 11105 of the dedicated member information display terminal 11103 through the USB 11115 (step S2302).

The object identifier transmission program execution unit 11105 transmits the object identifier "A514CZ" received from the RFID reader 11104 to the object identifier reception program execution unit 11109 of the member information management server 11108 through the first Internet 124 (step S2303).

The object identifier reception program execution unit 11109 outputs, to the code transmission unit 11113, the object identifier "A514CZ" received from the object identifier transmission program 11105 execution unit (step S2304).

The code transmission unit 11113 transmits, to the code reception program execution unit 11131 of the mediate server 11130 through the second Internet 125, a set of the service code "S001" stored in the setting file managed by the code transmission unit 11113 and the object identifier "A514CZ" received from the object identifier reception program execution unit 11109 (step S2305).

The code reception program execution unit 11131 inputs, to the data search program execution unit 11133, the set of the object identifier "A514CZ" and service code "S001" received from the code transmission unit 11113 (step S2306).

The data search program execution unit 11133 extracts the data "000135" stored in the mediate server database 11132 in correspondence with the set of the object identifier "A514CZ" and service code "S001" received from the code reception program execution unit 11131 (step S2307) and inputs the extracted data "000135" to the data transmission program execution unit 11134 (step S2308).

The data transmission program execution unit 11134 transmits the data "000135" extracted by the data search program execution unit 11133 to the data reception program execution unit 11110 of the member information management server 11108 through the second Internet 125 (step S2309).

The data reception program execution unit 11110 inputs the data "000135" received from the data transmission program execution unit 11134 to the member information search program execution unit 11111 on the basis of the service code "S001" stored in the setting file of the storage unit of the member information management server 11108, which is managed by the code transmission unit 11113 (step S2310).

The member information search program execution unit 11111 searches the member information database 11114, extracts the member name "Taro Nichiden" stored in correspondence with the data (membership number) "000135" received from the data transmission program execution unit 11134 (step S2311), and inputs the extracted member name "Taro Nichiden" to the processing result transmission program execution unit 11112 (step S2312).

The processing result transmission program execution unit 11112 transmits the member name "Taro Nichiden" received from the member information search program execution unit 11111 to the processing result reception program execution unit 11106 of the dedicated member information display terminal 11103 through the first Internet 124 (step S2313).

The processing result reception program execution unit 11106 inputs, to the liquid crystal display program execution unit 11107, the member name "Taro Nichiden" received from the processing result transmission program execution unit 11112 (step S2314). The liquid crystal display program execution unit 11107 displays the received member name "Taro Nichiden" on the liquid crystal panel.

In this detailed example, the mediate server database 11132 may store information of another member information management server. For example, assume that the service code of the member information search program of another member information management server is "S002". The mediate server database 11132 stores the object identifier "A514CZ", service code "S002", and membership number "036-78220" in correspondence with each other. If an RFID reader attached to another dedicated member information display terminal connectable to the other member information management server reads the object identifier "A514CZ", the other dedicated member information display terminal transmits the object identifier "A514CZ" to the mediate server 11130 through the other member information management server together with the service code "S002". The data search program execution unit 11133 searches the mediate server database 11132 to extract the data "036-78220" corresponding to the object identifier "A514CZ" and service code "S002". The data transmission program execution unit 11134 transmits, to the other member information management server, the data "036-78220" as the extraction result of the data search program execution unit 11133. Hence, information management different from member information management of this detailed example can be done. As described above, when a plurality of member information management servers using different internal management numbers are present, access using the same RFID tag is possible.

As described above, according to this embodiment, when the existing application server 1108 is present, data necessary for the application server 1108 is stored in the mediate server 1130 in correspondence with object identifiers. Object identifiers, data, and service codes need not be made to correspond to each other in each application server itself. Hence, the configuration of the data processing system of the present invention can easily be introduced. Especially when object identifiers and user identifiers are stored in the application server 1108 in correspondence with each other, each application server can use an object identifier and another user identifier. In addition, if the application server to be accessed changes, the user identifier is converted into another user identifier even when the object identifier does not change. Hence, a virtual integral user identifier commonly usable in a plurality of different application servers can be provided.

### 11th Embodiment

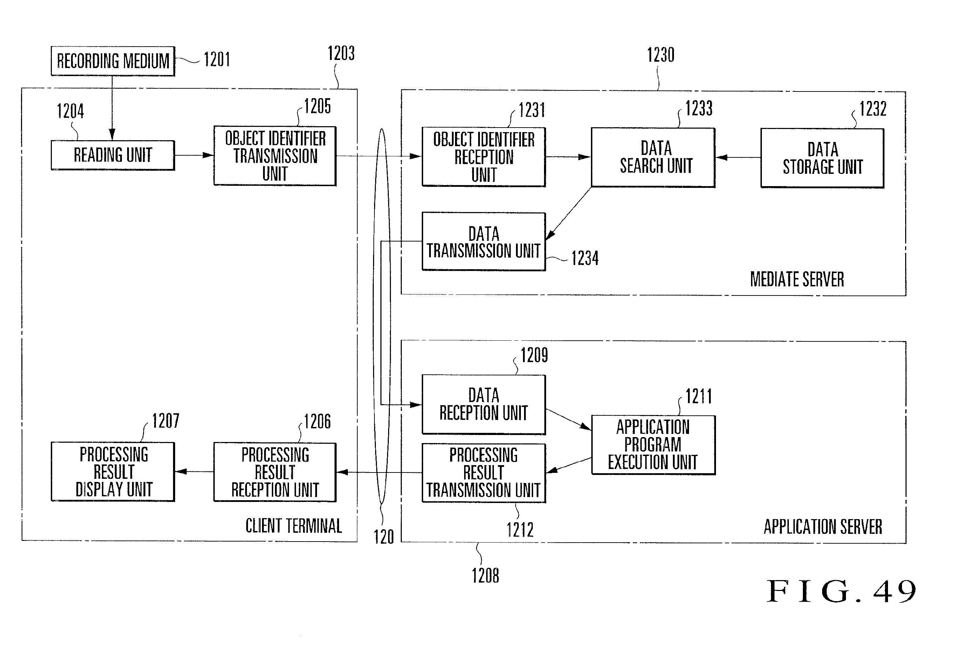

The 11th embodiment of the present invention will be described next with reference to the accompanying drawings. Fig. 49 is a block diagram showing an arrangement example of the 11th embodiment of the present invention.

The 11th embodiment of the present invention includes a recording medium 1201, client terminal 1203, application server 1208, mediate server 1230, and communication network 120.

The recording medium 1201 stores a unique object identifier. The client terminal 1203 includes a reading unit (identifier reading means) 1204, object identifier transmission unit (object identifier transmission means) 1205, processing result reception unit 1206, and processing result display unit 1207. The reading unit 1204 reads the object identifier stored in the recording medium 1201. The object identifier transmission unit 1205 transmits the object identifier read by the reading unit 1204 to the mediate server 1230. The processing result reception unit 1206 receives information from the application server 1208. The processing result display unit 1207 displays the information received by the processing result reception unit 1206 on the display unit (not shown) of the client terminal 1203.

The application server 1208 includes a data reception unit (data reception means) 1209, application program execution unit (application program execution means) 1211, and processing result transmission unit 1212. The data reception unit 1209 receives information from the mediate server 1230. The application program execution unit 1211 executes an application program to process the information received by the data reception unit 1209. The processing result transmission unit 1212 transmits, to the client terminal 1203, processing result information, i.e., information of a result obtained by causing the application program execution unit 1211 to execute the application program to process the information received by the data reception unit 1209.

The mediate server 1230 includes an object identifier reception unit (object identifier reception means) 1231, data storage unit (data storage means) 1232, data search unit (data search means) 1233, and data transmission unit (data transmission means) 1234. The object identifier reception unit 1231 receives the object identifier from the object identifier transmission unit 1205 of the client terminal 1203. The data storage unit 1232 stores object identifiers, service codes as information uniquely indicating application programs to be executed by the application program execution unit 1211, and data to be processed by the application program executed by the application program execution unit 1211 in correspondence with each other. The data search unit 1233 searches for and extracts, from the data storage unit 1232, a service code and data corresponding to the object identifier received by the object identifier reception unit 1231. The data transmission unit 1234 transmits, to the application server 1208, the service code and data extracted by the data search unit 1233. Note that the service code is represented by a network address such as the IP address of the application server including the application program execution unit 1211.

The client terminal 1203 and mediate server 1230 are connected through the communication network 120. The mediate server 1230 and application server 1208 are connected through the communication network 120. The application server 1208 and client terminal 1203 are connected through the communication network 120.

To transmit processing result information to the processing result reception unit 1206 of the client terminal 1203, the processing result transmission unit 1212 of the application server 1208 needs to know the network address such as the IP address of the client terminal 1203. The processing result transmission unit 1212 can know the network address such as the IP address of the client terminal 1203 by, e.g., several methods to be described below. As the first method, the data transmission unit 1234 of the mediate server 1230 transmits the network address such as the IP address of the client terminal 1203 including the object identifier transmission unit 1205 simultaneously when transmitting a service code and data to the data reception unit 1209 of the application server 1208. As the second method, the data storage unit 1232 stores in advance the network address such as the IP address of the client terminal 1203 in correspondence with an object identifier, service code, and data.

As the third method, the data transmission unit 1234 of the mediate server 1230 transfers data to the data reception unit 1209 of the application server 1208, pretending the client terminal 1203. More specifically, for example, the IP address of the client terminal 1203 is used as the IP address of the transmission source of an IP packet transmitted from the data transmission unit 1234 to the data reception unit 1209. As the fourth method, the data reception unit 1209 of the application server 1208 manages the network address such as the IP address of a reply target server in correspondence with a received service code and data. As the fifth method, the processing result transmission unit 1212 transmits processing result information not directly to the processing result reception unit 1206 of the client terminal 1203 but to the mediate server 1230 tracing back the communication network 120 so that the mediate server 1230 transmits the processing result information to the processing result reception unit 1206 of the client terminal 1203 through the communication network 120.

If the application server 1208 including the application program execution unit 1211 can be specified by another means, the service code stored in the data storage unit 1232 need not contain the network address such as the IP address of the application server 1208. Another means capable of specifying the application server 1208 indicates, e.g., a means for storing, in the application server including the application program execution unit 1211, the service code and the network address of the application server including the application program execution unit 1211 in correspondence with each other and searching for the network address such as the IP address of the application server from the service code.

If it is possible to integrally express a service code and data in the same format, the data storage unit 1232 may store them as a piece of information without separating. Integral expression in the same format indicates expressing a service code and data by, e.g., a URI (Uniform Resource Identifier).

If it is unnecessary to know, on the client terminal 1203, the processing result of the application program execution unit 1211, the client terminal 1203 need not include the processing result display unit 1207. In this case, the application server 1208 need not include the processing result transmission unit 1212. In addition, the processing result reception unit 1206 in the client terminal 1203 can be omitted.

The reading unit 1204 may be a part of the client terminal 1203 or connected to the outside of the client terminal 1203 through a communication interface.

The application program executed by the application program execution unit 1211 can form either one program file by itself or a partial function of a program file.

The data storage unit 1232 can store the sets of object identifiers and other corresponding information either before or after the object identifiers are issued.

In storing object identifiers in correspondence with other information, the data storage unit 1232 may handle a plurality of object identifiers as a set so that other information may be stored in correspondence with the set of object identifiers. At this time, the set of object identifiers may specify the reading order of the reading unit 1204.

The client terminal 1203 incorporates a data processing program that causes a computer to execute processing of reading an object identifier, processing of transmitting the read object identifier to mediate server 1230, processing of receiving information of the processing result of the application program, which is transmitted from the application server 1208, and processing of displaying the received information of the processing result of the application program on the display means.

The mediate server 1230 incorporates a data processing program that causes a computer to execute processing of receiving the object identifier, processing of extracting a service code and data corresponding to the received object identifier from the data storage unit 1232 that stores object identifiers, service codes, and data in correspondence with each other, and processing of transmitting the extracted service code and data to the application server 1208.

The application server 1208 incorporates a data processing program that causes a computer to execute processing of receiving the service code and data, processing of inputting the received data to the application program execution unit 1211 that executes the application program indicated by the received service code, processing of causing the application program execution unit 1211 to execute the application program to process the data, and processing of transmitting, to the client terminal 1203, information of the data processing result of the application program execution unit 1211.

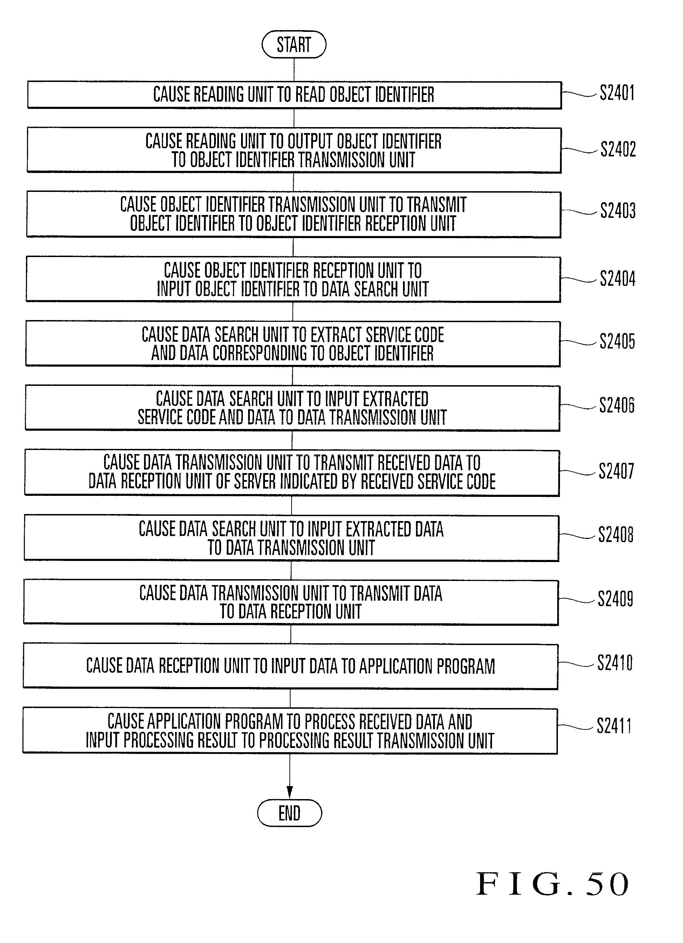

The operation of the 11th embodiment of the present invention will be described next with reference to the accompanying drawings. Fig. 50 is a flowchart for explaining the operation of the 11th embodiment of the present invention.

The reading unit 1204 reads an object identifier stored in the recording medium 1201 (step S2401). The reading unit 1204 outputs the read object identifier to the object identifier transmission unit 1205 (step S2402).

The object identifier transmission unit 1205 transmits the object identifier read by the reading unit 1204 to the object identifier reception unit 1231 of the mediate server 1230 through the communication network 120 (step S2403).

The object identifier reception unit 1231 inputs the received object identifier to the data search unit 1233 (step S2404). The data search unit 1233 searches for and extracts, from the data storage unit 1232, a service code and data corresponding to the object identifier received from the object identifier reception unit 1231 (step S2405) and inputs the extracted service code and data to the data transmission unit 1234 (step S2406).

The data transmission unit 1234 transmits, through the communication network 120, the data extracted by the data search unit 1233 to the data reception unit 1209 of the server (application server 1208) indicated by the service code extracted by the data search unit 1233 (step S2407).

The data reception unit 1209 inputs the data received from the data transmission unit 1234 to the application program execution unit 1211 (step S2408).

The application program execution unit 1211 processes the data received from the data reception unit 1209 and inputs processing result information as information of the processing result to the processing result transmission unit 1212 (step S2409).

The processing result transmission unit 1212 transmits the processing result information received from the application program execution unit 1211 to the processing result reception unit 1206 of the client terminal 1203 through the communication network 120 (step S2410).

The processing result reception unit 1206 inputs, to the processing result display unit 1207, the processing result information received from the processing result transmission unit 1212 (step S2411). The processing result display unit 1207 displays the processing result information received from the processing result reception unit 1206 on a display device (not shown) externally connected to the client terminal 1203 or the display unit of the client terminal.

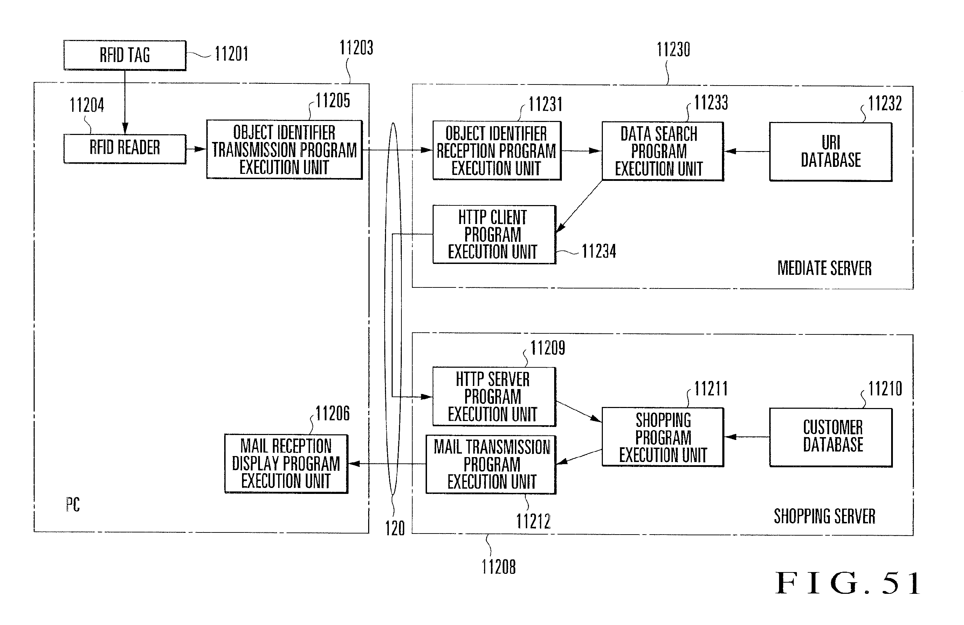

The 11th embodiment of the present invention will be described next by using a detailed example. Fig. 51 is a block diagram for explaining the arrangement of a detailed example of the 11th embodiment of the present invention.

A detailed example of the 11th embodiment of the present invention includes an RFID tag 11201, PC 11203, mediate server 11230, shopping server 11208, and communication network 120.

The RFID tag 11201 stores an object identifier. The PC 11203 includes an RFID reader 11204, object identifier transmission program execution unit 11205, and mail reception display program execution unit 11206. The RFID reader 11204 reads the object identifier stored in the RFID tag 11201. The object identifier transmission program execution unit 11205 implements the object identifier transmission unit 1205 and executes object identifier transmission program that causes the PC 11203 to transmit the object identifier read by the RFID reader 11004 to the mediate server 11230. The mail reception display program execution unit 11206 implements the processing result reception unit 1206 and processing result display unit 1207 and executes a mail reception display program that causes the PC 11203 to receive e-mail through the communication network 120 and display the received e-mail on the display unit (not shown) of the PC 11203.

The RFID tag 11201 includes a storage unit (not shown) to store an identifier or data and a wireless communication device (not shown). The RFID reader 11204 includes a wireless communication device (not shown) to read the identifier or data from the RFID tag 11201. Assume that the RFID tag 11201 has a function of storing an object identifier as a read-only unique identifier and transmitting only the object identifier to the RFID reader 11204. The RFID tag 11201 stores an object identifier "A514CZ". The RFID tag 11201 is implanted in, e.g., a paper card with a description "order card for liquor store A, 1 case of Sal Juice (350 ml)"

The mediate server 11230 includes an object identifier reception program execution unit 11231, URI database 11232, data search program execution unit 11233, and HTTP (HyperText Transfer Protocol)client program execution unit 11234. The object identifier reception program execution unit 11231 implements the object identifier reception unit 1231 and executes an object identifier reception program that causes the mediate server 11230 to receive the object identifier through the communication network 120. The URI database 11232 implements the data storage unit 1232 and stores object identifiers in correspondence with URI information containing the identifiers of connection protocols to servers, the network addresses of servers, program file paths on servers, and data to be transferred to the program files. The data search program execution unit 11233 implements the data search unit 1233 and executes a data search program that causes the mediate server 11230 to extract, from the URI database 11232, URI information corresponding to the object identifier received by the object identifier reception program execution unit 11231. The HTTP client program execution unit 11234 implements the data transmission unit 1234 and executes an HTTP client program that causes the mediate server 11230 to connect to the shopping server 11208 in accordance with the identifier of a connection protocol contained in the URI information extracted by the data search program execution unit 11233 to transmit, to the shopping server 11208, a program file path on the server and data to be transferred to the program file.

The identifier of the connection protocol to the server contained in the URI information indicates HTTP. The data to be transferred to the program file contains information representing goods ordered by the customer, information representing the volume ordered by the customer, customer's telephone number, and customer's password. In transmitting URI information by HTTP, the HTTP client program execution unit 11234 separately transmits the network address portion, the program file path portion, and the portion of data to be transferred to the program file.

The shopping server 11208 includes an HTTP server program execution unit 11209, customer database 11210, shopping program execution unit 11211, and mail transmission program execution unit 11212. The HTTP server program execution unit 11209 implements the data reception unit 1209 and executes an HTTP server program that causes the shopping server 11208 to receive the program file path on the server and data to be transferred to the program file, which are transmitted from the HTTP client program execution unit 11234 of the mediate server 11230. The customer database 11210 stores customers' telephone numbers, customers' passwords, and customers' e-mail addresses in correspondence with each other. The shopping program execution unit 11211 implements the application program execution unit 1211 and executes a shopping program that extracts, from the customer database 11210, a customer's e-mail address corresponding to the customer's telephone number and customer's password contained in the data to be transferred to the program file, which is received by the HTTP server program execution unit 11209. The mail transmission program execution unit 11212 implements the processing result transmission unit 1212 and executes a mail transmission program that causes the shopping server 11208 to transmit, to the customer's e-mail address extracted by the shopping program execution unit 11211, e-mail that contains information representing goods ordered by the customer and information representing the volume ordered by the customer, which are contained in the data to be transferred to the program file received by the HTTP server program execution unit 11209.

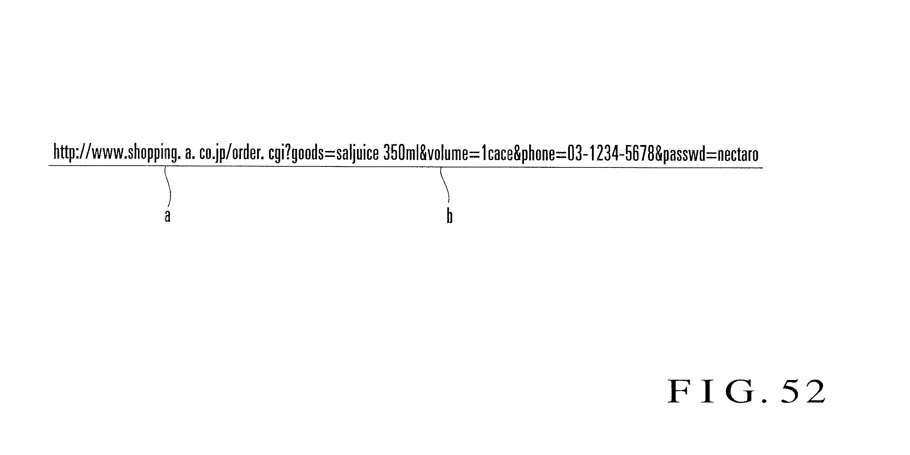

Fig. 52 shows a description example of URI information. According to the example shown in Fig. 52, URI information includes a portion corresponding to a service code and a portion corresponding to data. Referring to Fig. 52, a indicates a portion corresponding to a service code, and b indicates a portion corresponding to data. The portion corresponding to a service code includes "http" representing a connection protocol to be used, "www.shopping.a.co.jp" representing the network address of a server (shopping server 11208) that is executing a target application program (shopping program 11211), and "order.cgi" representing the file path of the application program. The portion corresponding to data includes "goods=SalJuice350ml" representing the goods ordered by the customer, "volume=1case" representing the volume ordered by the customer, "phone=03-1234-5678" representing the customer's telephone number, and "passwd=nectaro" representing the customer's password.

The PC 11203 and mediate server 11230 are connected through the communication network 120. The mediate server 11230 and shopping server 11208 are connected through the communication network 120. The shopping server 11208 and PC 11203 are connected through the communication network 120.

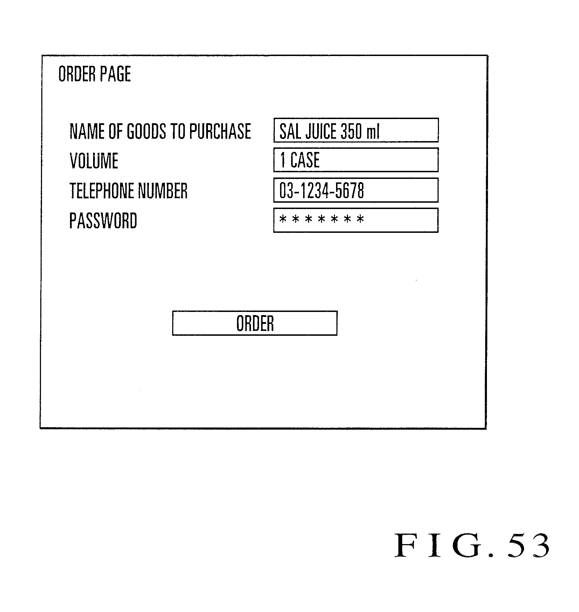

The shopping server 11208 normally works as an independent Web server site. Usually, the HTTP server program execution unit 11209 receives an order request by HTTP through the Web browser program of a customer's client terminal. Fig. 53 is an explanatory view showing an example of a window displayed on the display unit of a customer's client terminal when the shopping server 11208 receives an order request through the Web browser program of the customer's client terminal. The customer inputs the name of goods to be purchased, volume, telephone number, and password by operating the input unit of the client terminal in accordance with the window displayed on the display unit of the client terminal and clicks on the button of "order" by using, e.g., a mouse. The client terminal transmits the contents input by the customer to the HTTP server program execution unit 11209 of the shopping server 11208.

The HTTP server program execution unit 11209 inputs the received order request to the shopping program execution unit 11211. The shopping program execution unit 11211 interprets the order request received by the HTTP server program execution unit 11209 and checks whether the telephone number and password match the contents stored in the customer database 11210. If they match each other, the shopping program execution unit 11211 stores the name and volume of goods in the order request in the customer database 11210 together with the reception date. The shopping program execution unit 11211 stores, in the customer database 11210, the contents of order from the customer as one record containing the customer's telephone number, order date, goods name, and volume. After storing the order contents in the customer database 11210, the shopping program execution unit 11211 transmits, to the mail transmission program execution unit 11212, e-mail representing the received order contents to the customer's e-mail address registered in the customer database 11210. Hence, when the shopping server 11208 processes the order appropriately, e-mail is transmitted to the customer's e-mail address stored in the customer database 11210.

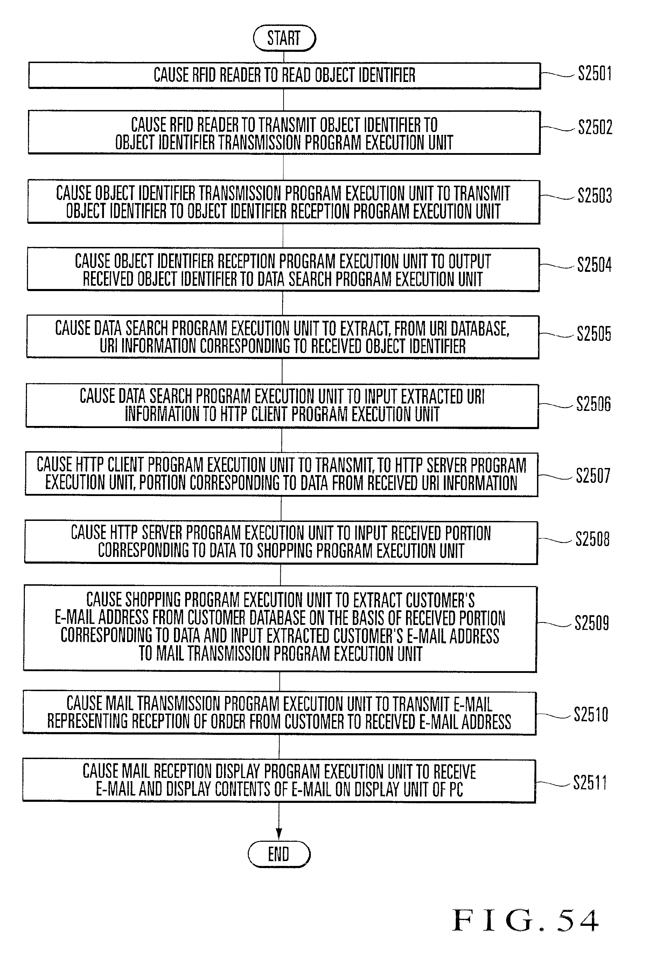

The operation of a detailed example of the 11th embodiment of the present invention will be described next with reference to the accompanying drawings. Fig. 54 is a flowchart for explaining the operation of a detailed example of the 10th embodiment of the present invention.

The user makes a paper card with a description "order card for liquor store A, 1 case of Sal Juice (350 ml)" contact the RFID reader 11204. The RFID reader 11204 reads the object identifier "A514CZ" stored in the RFID tag 11201 implanted in the paper card (step S2501). The RFID reader 11004 inputs the read object identifier "A514CZ" to the object identifier transmission program execution unit 11205 (step S2502).

The object identifier transmission program execution unit 11205 transmits the object identifier "A514CZ" read by the RFID reader 11204 to the object identifier reception program execution unit 11231 of the mediate server 11230 through the communication network 120 (step S2503).

The object identifier reception program execution unit 11231 outputs, to the data search program execution unit 11233, the object identifier "A514CZ" received from the object identifier transmission program execution unit 11205 (step S2504).

The data search program execution unit 11233 searches for and extracts, from the URI database 11232, URI information corresponding to the object identifier "A514CZ" received from the object identifier reception program execution unit 11231 (step S2505) and inputs the extracted URI information to the HTTP client program execution unit 11234 (step S2506).

The HTTP client program execution unit 11234 extracts a network address from the URI information extracted by the data search program execution unit 11233, connects, through the communication network 120, to the server (shopping server 11208) indicated by the network address by the connection protocol HTTP indicated by the URI information, and transmits, to the HTTP server program execution unit 11209, the file path of the shopping program execution unit 11211 and data to be transferred to the shopping program execution unit 11211, which are contained in the URI information (step S2507).

The HTTP server program execution unit 11209 causes the shopping program execution unit 11211 to activate the shopping program and inputs the received data to the shopping program execution unit 11211 on the basis of the file path received from the HTTP client program execution unit 11234 (step S2508).

The shopping program execution unit 11211 interprets each input field of the data (the portion corresponding to data in the URI information) received from the HTTP server program execution unit 11209. More specifically, the shopping program execution unit 11211 interprets that "goods=SalJuice350ml" indicates "Sal Juice 350 ml" as the name of goods ordered by the customer, "volume=1case" indicates "1 case" as the volume ordered by the customer, "phone=03-1234-5678" indicates the customer's telephone number "03-1234-5678", and "passwd=nectaro" indicates the customer's password "nectaro". The shopping program execution unit 11211 determines whether the combination of the customer's telephone number and password contained in the received data matches a combination of a telephone number and password stored in the customer database 11210. In this example, assume that the combination of the customer's telephone number and password input from the HTTP server program execution unit 11209 to the shopping program execution unit 11211 matches a combination of a customer's telephone number and password stored in the customer database 11210, and the name and volume of goods ordered by the customer are properly accepted. The shopping program execution unit 11211 stores the goods name and volume in the customer database 11210, extracts the customer's e-mail address (the e-mail address of the user of the PC 11203) stored in the customer database 11210 in correspondence with a telephone number "03-3454-1111", and inputs the received order contents and e-mail address to the mail transmission program execution unit 11212 (step S2509).

The mail transmission program execution unit 11212 transmits, by SMTP (Simple Mail Transer Protocol) through the communication network 120, e-mail representing the received order contents to the e-mail address received from the shopping program execution unit 11211. A mail server (not shown) is connected to the communication network 120. The mail transmission program execution unit 11212 transmits e-mail to the mail server (step S2510).

The mail reception display program 11206 of the PC 11203 receives the e-mail from the mail server by POP (Post Office Protocol) and displays the contents of the e-mail on the display unit of the PC 11203 (step S2511). The customer then knows that the ordered contents are accepted by the shopping server 11208.

As described above, according to this detailed example, because of the intervention of the mediate server 11230, the input operation on the order Web window necessary in utilizing the shopping server 11208 is substituted by the operation of making the RFID reader 11204 read the object identifier stored in the RFID tag 11201. Hence, great labor savings can be achieved in, e.g., a repetitive routinized order placing operation. In addition, the shopping server 11208 need not any special preparation such as program correction for the labor savings.

In the above-described detailed example, explicit input fields are filled with data. However, even implicit input fields can also be filled with data. This technique can also be used for, e.g., cookie information used in the Web technology. In this case, if cookie information corresponding to one card (with an RFID tag implanted) and object identifier is available, different PCs can connect to the shopping server 11208 on the basis of the single cookie information. Hence, cookie information used in a PC at home can also be used in a guest PC at, e.g., an Internet cafe.

According to this embodiment, if the user needs to transmit user data to an application program running on an existing application server, the routinized user data input operation can be simplified by causing the reading unit 1204 to read an object identifier stored in the recording medium 1201 with the object identifier being implanted instead of inputting or selecting the user data. This particularly helps a user who is unaccustomed to keyboard input in the input operation. If the recording medium 1201 is implanted in, e.g., a card printed in Braille, a visually handicapped person can complete the input operation without keyboard or mouse operation. The existing application server need not be modified, unlike the 10th embodiment, because the application server 1208 itself need not handle object identifiers at all.

### Conclusion

According to the above-described embodiments, since a plurality of application programs correspond to an object identifier, a plurality of applications can be processed on the basis of an object identifier, resulting in a simpler operation. Additionally, since an apparatus includes a client terminal and various kinds of servers, data processing is possible even when they are located in remote sites.

According to the above-described embodiments, a complex service can be provided even by using an object identifier with an arbitrary expression format. An object identifier capable of identifying correspondence with other information can use any expression format because there is a means for storing an object identifier having only an identification function in correspondence with both an application program and data. In addition, different content data can be provided for different combinations of object identifiers and application programs.

According to the above-described embodiments, a plurality of services can be assigned to one object identifier and easily selectively used. This is because data corresponding to an object identifier also corresponds to an application program so that changing the combination of the object identifier and application program enables providing different data. For example, a combination of data "music data" and a service "music data playback" can be assigned to one barcode. A set of "form communication message" and "e-mail send" different from the set of "music data" and "music data playback" can simultaneously be assigned to the same barcode. These sets can be executed selectively.

According to the above-described embodiments, addition of arbitrary services in arbitrary volumes, change of already running services, and change of correspondence to services can be done after issuing object identifiers. This is because object identifiers independently of services and data are used, and different data can be provided for different application programs even by using the same object identifier.

In the above-described embodiments, typical detailed examples have been described individually. In each detailed example, a portion corresponding to an application program and data can be a set of an arbitrary application program and data. Examples are an e-mail client program and setting contents, a music data playback and music data, a video playback program and a video content, an electrophotographic album program and electrophotograph, a stock chart display program and candlestick chart data by brand, a game program and game data, a fortune-telling program and personal data such as a date of birth, sex, and blood type, a business application and a license key, a pictorial book program and pictorial book data, an electronic book viewer and electronic book data, a driver program and setting data for a peripheral device connected to a computer, a vaccine program and vaccine data, a cooking recipe display program and a cooking recipe, a cooking program and cooking data, a help program and help data of a device or program, a banking transaction program and transaction contents, a prospectus display program and a prospectus, a statement-of-accounts display program and accounts data, a company guide display program and company guide data, a meeting document display program and a meeting document, a goods introduction program and goods contents, a receipt contents digitization program and receipt data, a ringing melody setting program and a ringing melody, a prescription display program and prescription data, an upgrade target program and binary data of an upgrade program, a facility reservation program for hotels and transportation/facilities/restaurants and reservation contents, a video recording program and program information, and an audio recording program and program information. According to the present invention, these different combinations of applications and data can be made to correspond to an arbitrary object identifier and simultaneously or selectively used.

The client terminal has been described as a PC. However, any other terminal having a function of connecting a communication network can be used, including a cellular phone, home server, DVD recorder, gaming device, kiosk terminal, and cash register.

The storage medium and reading unit have been described as an RFID tag and an RFID reader. However, any other combination of a medium capable of expressing a unique identifier and a reading device can be used, including a barcode and a barcode reader, a memory card and a memory card reader, and a printed product and a digital camera.

As a detailed example of the communication network, connection by the Internet have been mainly described. The "Internet" is a term for general protocols used on the Internet, including TCP, UDP, and HTTP or a unique protocol developed by a device maker. The detailed transmission method can be a public line (e.g., telephone line), Ethernet^{®}, indoor wire for lamplight, electric power line, radio channel, optical communication, RS-232C, satellite communication, and broadcast.

As the means for transmitting/receiving various kinds of information through a network, communication programs such as a "code transmission program", "code reception program", "data transmission program", "data reception program", "object identifier transmission program", "object identifier reception program", "server identifier transmission program", and "server identifier reception program" have been described in the detailed examples. Each of these communication programs communicates by using a communication network device such as a modem connected to a client terminal such as a PC where the communication program runs. If one client terminal executes a plurality of communication programs, they may be integrated to one program.

Each program execution unit (e.g., data search program execution unit 10111) in the detailed examples is implemented by a CPU arranged in, e.g., an application server.

Each data processing program installed in the client terminal, application server, transmission destination decision server, or mediate server may be recorded on a recording medium such as an optical disk or magnetic disk and provided to a computer included in the terminal or server. In this case, when the recording medium having the data processing program is connected to the interface of the computer, an arithmetic processing unit such as the MPU of the computer reads out the data processing program from the recording medium. The data processing program is transferred to and stored in the storage unit (e.g., hard disk) of the computer. Then, upon receiving an instruction from the user or administrator, the arithmetic processing unit of the computer reads out the data processing program from the storage unit and operates in accordance with it.

The term "device" in the data processing device of the present invention includes both of separate devices such as a terminal and a server. The recording medium recording a unique object identifier includes not only a general-purpose memory medium but also a paper sheet, metal, and other recording materials recording a unique object identifier. The recording medium may record not only one object identifier but two or more. For example, when a plurality of object identifiers corresponding to different application programs are recorded in one recording medium, a plurality of services can be provided by executing the plurality of application programs corresponding to one recording medium in parallel.

### Industrial Applicability

The present invention can be applied to a client terminal and a server used for a network service that is operated by a content provider, Internet service provider, or broadcaster. Detailed examples of the network service to which the present invention is applicable are introduction of various kinds of computer programs, music data distribution and playback, video data distribution and playback, electrophotograph distribution and reproduction, stock chart display, game data distribution and execution in a game program, fortune-telling data distribution and display, license management, pictorial book data distribution and display, electronic book, setup of PC peripheral devices, vaccine data distribution and application, cooking recipe distribution and display, cooking data distribution and execution for cooking appliances, help system of electrical apparatuses or programs, banking transactions, security prospectus distribution and display, statement-of-accounts distribution and display, company guide distribution and display, meeting document distribution and display, goods introduction, receipt data distribution and display, ringing melody setting, prescription display, upgrade of programs, reservation for use of hotels and transportation/facilities/restaurants, and setting of video/audio recording of AV devices.

## Claims

1. A data processing device **characterized by** comprising:
identifier reading means for receiving a signal of an object identifier uniquely assigned to an object; and
application program execution means for executing a plurality of application programs corresponding to the received object identifier.

2. A data processing device according to claim 1, **characterized by** further comprising data storage means for storing data corresponding to the object identifier and an application program.

3. A data processing device according to claim 2, **characterized by** further comprising a client terminal and an application server which are connected to a communication network,
said client terminal comprising at least said identifier reading means, and
said application server comprising at least said data storage means.

4. A data processing device according to claim 3, **characterized in that**
said client terminal comprises:
in addition to said identifier reading means for reading an object identifier recorded on a recording medium and indicating an identifier unique to each recording medium, and said application program execution means for executing the application program,
service code providing means for outputting a service code serving as information uniquely indicating an application program to process data extracted by said application server;
code transmission means for transmitting, to said application server, a set of the service code and object identifier read by said identifier reading means; and
data reception means for receiving the data extracted by said application server,
said application program execution means executes the application program to process the data received by said data reception means, and
said application server comprises:
in addition to said data storage means for storing data in correspondence with the set of the object identifier and service code,
code reception means for receiving the set of the object identifier and service code from said client terminal;
data search means for extracting, from said data storage means, data corresponding to the set of the object identifier and service code received by said code reception means; and
data transmission means for transmitting, to said client terminal, the data extracted by said data search means.

5. A data processing device according to claim 3, **characterized in that**
said client terminal comprises:
in addition to said identifier reading means for reading an object identifier recorded on a recording medium and indicating an identifier unique to each recording medium,
code transmission means for transmitting, to said application server, the object identifier read by said identifier reading means;
data reception means for receiving data and a service code serving as information uniquely indicating an application program to process the data, which are extracted by said application server; and
application program execution means for executing the application program indicated by the service code received by said data reception means to process the data, and
said application server comprises:
in addition to said data storage means for storing a set of the service code and data in correspondence with the object identifier,
code reception means for receiving the object identifier from said client terminal;
data search means for extracting, from said data storage means, the set of the service code and data corresponding to the set of the object identifier received by said code reception means; and
data transmission means for transmitting, to said client terminal, the service code and the data extracted by said data search means.

6. A data processing device according to claim 3, **characterized in that**
said client terminal comprises:
in addition to said identifier reading means for reading an object identifier recorded on a recording medium and indicating an identifier unique to each recording medium,
code transmission means for transmitting, to said application server, the object identifier read by said identifier reading means,
said application server comprises:
in addition to said data storage means for storing a set of data and a service code serving as information uniquely indicating an application program to process the data in correspondence with the object identifier,
code reception means for receiving the object identifier from said client terminal; and
data search means for extracting, from said data storage means, the set of the service code and data corresponding to the object identifier received by said code reception means, and
said application program execution means executes the application program indicated by the service code extracted by said data search means to process the data.

7. A data processing device according to claim 3, **characterized in that**
said client terminal comprises:
in addition to said identifier reading means for reading an object identifier recorded on a recording medium and indicating an identifier unique to each recording medium,
code transmission means for transmitting, to said application server, the object identifier read by said identifier reading means;
data reception means for receiving a plurality of sets of data and service codes each serving as information uniquely indicating an application program to process the data, which are extracted by said application server;
service selection means for making a user of said client terminal select one of the plurality of sets of the service codes and data received by said data reception means as a set containing a service code indicating an application program to which the data is to be input; and
application program execution means for executing the application program selected by said service selection means to process the data, and
said application server comprises:
in addition to said data storage means for storing the plurality of sets of the data and service codes each serving as information uniquely indicating the application program to process the data in correspondence with the object identifier,
code reception means for receiving the object identifier from said client terminal;
data search means for extracting, from said data storage means, the plurality of sets of the service codes and data corresponding to the object identifier received by said code reception means; and
data transmission means for transmitting, to said client terminal, the plurality of sets of the service codes and data extracted by said data search means.

8. A data processing device according to claim 3, **characterized in that**
said client terminal comprises:
in addition to said identifier reading means for reading an object identifier recorded on a recording medium and indicating an identifier unique to each recording medium,
data reception means for receiving a set of data, an object identifier, and a service code serving as information uniquely indicating an application program to process the data, which are extracted by said application server;
client terminal data storage means for storing the set of the data, object identifier, and service code received by said data reception means;
data investigation means for generating index information serving as information indicating sets of object identifiers, service codes, and data stored in said client terminal data storage means;
code transmission means for transmitting the index information to said application server;
data search means for extracting, from said client terminal data storage means, the set of the service code and data corresponding to the object identifier read by said identifier reading means; and
application program execution means for executing the application program indicated by the service code extracted by said data search means to process the data, and
said application server comprises:
in addition to server data storage means for storing sets of object identifiers, service codes, and data,
code reception means for receiving the index information from said code transmission means;
content comparison means for comparing the sets of the object identifiers, service codes, and data which are stored in said client terminal data storage means and indicated by the index information with the sets of the object identifiers, service codes, and data stored in said server data storage means and extracting, from said server data storage means, a set of an object identifier, service code, and data which is stored in said server data storage means but not in said client terminal data storage means; and
data transmission means for transmitting, to said data reception means, the set of the object identifier, service code, and data extracted by said content comparison means.

9. A data processing device according to claim 3, **characterized in that**
said application server comprises:
in addition to server data storage means for storing sets of data, object identifiers each recorded on a recording medium and indicating an identifier unique to each recording medium, and service codes each serving as information uniquely indicating an application program to process the data,
data investigation means for generating storage content information as at least some of the sets of the object identifiers, service codes, and data stored in said server data storage means; and
data transmission means for transmitting, to said client terminal, the storage content information generated by said data investigation means,
said client terminal comprises:
in addition to said identifier reading means for reading an object identifier recorded on a recording medium,
client terminal data storage means for storing sets of object identifiers, service codes, and data;
data reception means for receiving the storage content information from said data transmission means; and
data search means for extracting, from said client terminal data storage means, a set of a service code and data corresponding to the object identifier read by said identifier reading means, and
said application program execution means executes an application program indicated by the service code extracted by said data search means to process the data.

10. A data processing device according to claim 3, **characterized in that**
said application server comprises:
in addition to server data storage means for storing sets of data, object identifiers each recorded on a recording medium and indicating an identifier unique to each recording medium, and service codes each serving as information uniquely indicating an application program to process the data,
data investigation means for generating storage content information as at least some of the sets of the object identifiers, service codes, and data stored in said server data storage means; and
data transmission means for transmitting, to said client terminal, the storage content information generated by said data investigation means,
said client terminal comprises:
in addition to said identifier reading means for reading an object identifier recorded on a recording medium,
client terminal data storage means for storing sets of object identifiers, service codes, and data;
data reception means for receiving the storage content information from said data transmission means;
content comparison means for comparing the sets of the object identifiers, service codes, and data which are stored in said server data storage means and indicated by the storage content information received by said data reception means with the sets of the object identifiers, service codes, and data stored in said client terminal data storage means, extracting, from the storage content information, a set of an object identifier, service code, and data which is stored in said server data storage means but not in said client terminal data storage means, and storing the extracted set of the object identifier, service code, and data in said client terminal data storage means; and
data search means for extracting, from said client terminal data storage means, a set of a service code and data corresponding to the object identifier read by said identifier reading means, and
said application program execution means executes an application program indicated by the service code extracted by said data search means to process the data.

11. A data processing device according to claim 3, **characterized in that**
said client terminal comprises:
in addition to said identifier reading means for reading an object identifier recorded on a recording medium and indicating an identifier unique to each recording medium,
server decision means for deciding a server of a transmission destination of the object identifier read by said identifier reading means;
service code providing means for outputting, to said server decision means, a service code serving as information uniquely indicating an application program to process data;
code transmission means for transmitting the object identifier to the server of the transmission destination decided by said server decision means; and
data reception means for receiving data extracted by said application server,
said application program execution means executes the application program to process the data,
said application server comprises:
in addition to said data storage means for storing object identifiers and data in correspondence with each other,
code reception means for receiving the object identifier from said code transmission means;
data search means for extracting, from said data storage means, data corresponding to the object identifier received by said code reception means; and
data transmission means for transmitting, to said data reception means, the data extracted by said data search means, and
said server decision means stores at least one of a service code and an object identifier in correspondence with information representing the server of the transmission destination of the object identifier, and on the basis of the correspondence, decides the server of the transmission destination of the object identifier read by said identifier reading means.

12. A data processing device according to claim 3, **characterized in that**
said client terminal comprises:
in addition to said identifier reading means for reading an object identifier recorded on a recording medium and indicating an identifier unique to each recording medium,
server decision means for deciding a server of a transmission destination of the object identifier read by said identifier reading means;
service code providing means for outputting, to said server decision means, a service code serving as information uniquely indicating an application program to process data; and
code transmission means for transmitting the object identifier to the server of the transmission destination decided by said server decision means,
said application server comprises:
in addition to said data storage means for storing object identifiers and data in correspondence with each other,
code reception means for receiving the object identifier from said code transmission means;
data search means for extracting, from said data storage means, data corresponding to the object identifier received by said code reception means; and
application program execution means for executing the application program to process the data extracted by said data search means, and
said server decision means stores at least one of a service code and an object identifier in correspondence with information representing the server of the transmission destination of the object identifier, and on the basis of the correspondence, decides the server of the transmission destination of the object identifier read by said identifier reading means.

13. A data processing device according to claim 3, **characterized by** further comprising said client terminal, a transmission destination decision server, and said application server,
wherein said client terminal comprises:
in addition to said identifier reading means for reading an object identifier recorded on a recording medium and indicating an identifier unique to each recording medium,
server decision means for transmitting, to said transmission destination decision server, at least one of the object identifier read by said identifier reading means and a service code serving as information uniquely indicating an application program to process data, receiving, from said transmission destination decision server, a server identifier serving as information indicating a server of a transmission destination of the object identifier, and deciding the server of the transmission destination of the object identifier on the basis of the received server identifier;
code transmission means for transmitting the object identifier to the server of the transmission destination decided by said server decision means;
data reception means for receiving data extracted by said application server; and
application program execution means for executing the application program to process the data,
said transmission destination decision server comprises:
server identifier storage means for storing at least one of an object identifier and a service code in correspondence with the server identifier;
transmission destination decision server reception means for receiving at least one of the object identifier and service code transmitted from said server decision means;
server identifier search means for extracting, from said server identifier storage means, the server identifier corresponding to at least one of the object identifier and service code received by said transmission destination decision server reception means; and
server identifier transmission means for transmitting, to said server decision means, the server identifier extracted by said server identifier search means, and
said application server comprises:
in addition to said data storage means for storing object identifiers and data in correspondence with each other,
code reception means for receiving, from said code transmission means, the object identifier read by said identifier reading means;
data search means for extracting, from said data storage means, data corresponding to the object identifier received by said code reception means; and
data transmission means for transmitting, to said data reception means, the data extracted by said data search means.

14. A data processing device according to claim 3, **characterized by** further comprising said client terminal, a transmission destination decision server, and said application server,
wherein said client terminal comprises:
in addition to said identifier reading means for reading an object identifier recorded on a recording medium and indicating an identifier unique to each recording medium,
server decision means for transmitting, to said transmission destination decision server, at least one of the object identifier read by said identifier reading means and a service code serving as information uniquely indicating an application program to process data, receiving, from said transmission destination decision server, a server identifier indicating a server of a transmission destination of the object identifier, and deciding the server of the transmission destination of the object identifier on the basis of the received server identifier; and
code transmission means for transmitting the object identifier to the server of the transmission destination decided by said server decision means,
said transmission destination decision server comprises:
server identifier storage means for storing at least one of an object identifier and a service code in correspondence with the server identifier;
transmission destination decision server reception means for receiving at least one of the object identifier and service code transmitted from said server decision means;
server identifier search means for extracting, from said server identifier storage means, the server identifier corresponding to at least one of the object identifier and service code received by said transmission destination decision server reception means; and
server identifier transmission means for transmitting, to said server decision means, the server identifier extracted by said server identifier search means, and
said application server comprises:
in addition to said data storage means for storing object identifiers and data in correspondence with each other,
code reception means for receiving, from said code transmission means, the object identifier read by said identifier reading means; and
data search means for extracting, from said data storage means, data corresponding to the object identifier received by said code reception means, and
said application program execution means executes the application program to process the data extracted by said data search means.

15. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
client terminal object identifier transmission means for transmitting, to said mediate server, the object identifier read by said identifier reading means;
data reception means for receiving data extracted by said application server; and
application program execution means for executing an application program to process the data,
said mediate server comprises:
mediate server object identifier reception means for receiving the object identifier transmitted from said client terminal object identifier transmission means;
server identifier storage means for storing object identifiers and server identifiers each serving as information indicating a server of a transmission destination of the object identifier received by said mediate server object identifier reception means in correspondence with each other;
server identifier search means for extracting, from said server identifier storage means, a server identifier corresponding to the object identifier received by said mediate server object identifier reception means; and
mediate server object identifier transmission means for transmitting the object identifier received by said mediate server object identifier reception means to a server indicated by the server identifier extracted by said server identifier search means, and
said application server comprises:
in addition to said data storage means for storing object identifiers and data in correspondence with each other,
application server object identifier reception means for receiving the object identifier from said mediate server object identifier transmission means;
data search means for extracting, from said data storage means, data corresponding to the object identifier received by said application server object identifier reception means; and
data transmission means for transmitting, to said data reception means, the data extracted by said data search means.

16. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
client terminal object identifier transmission means for transmitting, to said mediate server, the object identifier read by said identifier reading means,
said mediate server comprises:
mediate server object identifier reception means for receiving the object identifier transmitted from said client terminal object identifier transmission means;
server identifier storage means for storing object identifiers and server identifiers each serving as information indicating a server of a transmission destination of the object identifier received by said mediate server object identifier reception means in correspondence with each other;
server identifier search means for extracting, from said server identifier storage means, a server identifier corresponding to the object identifier received by said mediate server object identifier reception means; and
mediate server object identifier transmission means for transmitting the object identifier received by said mediate server object identifier reception means to a server indicated by the server identifier extracted by said server identifier search means, and
said application server comprises:
in addition to said data storage means for storing object identifiers and data in correspondence with each other,
application server object identifier reception means for receiving the object identifier from said mediate server object identifier transmission means;
data search means for extracting, from said data storage means, data corresponding to the object identifier received by said application server object identifier reception means; and
application program execution means for executing an application program to process the data extracted by said data search means.

17. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
client terminal object identifier transmission means for transmitting, to said mediate server, the object identifier read by said identifier reading means;
data reception means for receiving data and a service code serving as information uniquely indicating an application program to process the data, which are extracted by said application server; and
application program execution means for executing the application program indicated by the service code to process the data,
said mediate server comprises:
mediate server object identifier reception means for receiving the object identifier transmitted from said client terminal object identifier transmission means;
server identifier storage means for storing object identifiers and server identifiers each serving as information indicating a server of a transmission destination of the object identifier received by said mediate server object identifier reception means in correspondence with each other;
server identifier search means for extracting, from said server identifier storage means, a server identifier corresponding to the object identifier received by said mediate server object identifier reception means; and
mediate server object identifier transmission means for transmitting the object identifier received by said mediate server object identifier reception means to a server indicated by the server identifier extracted by said server identifier search means, and
said application server comprises:
in addition to said data storage means for storing object identifiers, service codes, and data in correspondence with each other,
application server object identifier reception means for receiving the object identifier from said mediate server object identifier transmission means;
data search means for extracting, from said data storage means, data and a service code corresponding to the object identifier received by said application server object identifier reception means; and
data transmission means for transmitting, to said data reception means, the data and service code extracted by said data search means.

18. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
client terminal object identifier transmission means for transmitting, to said mediate server, the object identifier read by said identifier reading means,
said mediate server comprises:
mediate server object identifier reception means for receiving the object identifier transmitted from said client terminal object identifier transmission means;
server identifier storage means for storing object identifiers and server identifiers each serving as information indicating a server of a transmission destination of the object identifier received by said mediate server object identifier reception means in correspondence with each other;
server identifier search means for extracting, from said server identifier storage means, a server identifier corresponding to the object identifier received by said mediate server object identifier reception means; and
mediate server object identifier transmission means for transmitting the object identifier received by said mediate server object identifier reception means to a server indicated by the server identifier extracted by said server identifier search means, and
said application server comprises:
in addition to said data storage means for storing object identifiers, data, and service codes each serving as information uniquely indicating an application program to process the data in correspondence with each other,
application server object identifier reception means for receiving the object identifier from said mediate server object identifier transmission means;
data search means for extracting, from said data storage means, data and a service code corresponding to the object identifier received by said application server object identifier reception means; and
application program execution means for executing the application program indicated by the service code extracted by said data storage means to process the data extracted by said data search means.

19. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
object identifier transmission means for transmitting, to said application server, the object identifier read by said identifier reading means,
said application server comprises:
object identifier reception means for receiving the object identifier transmitted from said object identifier transmission means;
code transmission means for transmitting, to said mediate server, the object identifier received by said object identifier reception means;
data reception means for receiving, from said mediate server, data and a service code serving as information uniquely indicating an application program to process the data; and
application program execution means for executing an application program indicated by the service code received by said data reception means to process the data received by said data reception means, and
said mediate server comprises:
data storage means for storing object identifiers, service codes, and data in correspondence with each other;
code reception means for receiving the object identifier from said code transmission means;
data search means for extracting, from said data storage means, a service code and data corresponding to the object identifier received by said code reception means; and
data transmission means for transmitting, to said data reception means, the service code and data extracted by said data search means.

20. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
object identifier transmission means for transmitting, to said application server, the object identifier read by said identifier reading means;
client terminal data reception means for receiving, from said application server, data and a service code serving as information uniquely indicating an application program to process the data; and
application program execution means for executing an application program indicated by the service code received by said client terminal data reception means to process the data received by said client terminal data reception means,
said application server comprises:
object identifier reception means for receiving the object identifier transmitted from said object identifier transmission means;
code transmission means for transmitting, to said mediate server, the object identifier received by said object identifier reception means;
data reception means for receiving a service code and data from said mediate server; and
application server data transmission means for transmitting, to said client terminal data reception means, the service code and data received by said data reception means, and
said mediate server comprises:
data storage means for storing object identifiers, service codes, and data in correspondence with each other;
code reception means for receiving the object identifier from said code transmission means;
data search means for extracting, from said data storage means, a service code and data corresponding to the object identifier received by said code reception means; and
data transmission means for transmitting, to said data reception means, the service code and data extracted by said data search means.

21. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
object identifier transmission means for transmitting, to said application server, the object identifier read by said identifier reading means,
said application server comprises:
object identifier reception means for receiving the object identifier transmitted from said object identifier transmission means;
code transmission means for storing object identifiers and service codes each serving as information uniquely indicating an application program to process data in correspondence with each other and transmitting, to said mediate server, the object identifier received by said object identifier reception means and a service code corresponding to the object identifier;
data reception means for receiving data from said mediate server; and
application program execution means for executing an application program to process the data received by said data reception means, and
said mediate server comprises:
data storage means for storing object identifiers, service codes, and data in correspondence with each other;
code reception means for receiving the object identifier and service code from said code transmission means;
data search means for extracting, from said data storage means, data corresponding to the object identifier and service code received by said code reception means; and
data transmission means for transmitting, to said data reception means, the data extracted by said data search means.

22. A data processing device according to claim 3, **characterized by** further comprising said client terminal, a mediate server, and said application server,
wherein said client terminal comprises:
in addition to said identifier reading means for reading an object identifier recorded on a recording medium and indicating an identifier unique to each recording medium,
object identifier transmission means for transmitting, to said application server, the object identifier read by said identifier reading means;
client terminal data reception means for receiving data from said application server; and
application program execution means for executing an application program to process the data received by said client terminal data reception means,
said application server comprises:
object identifier reception means for receiving the object identifier transmitted from said object identifier transmission means;
code transmission means for storing object identifiers and service codes each serving as information uniquely indicating an application program to process data in correspondence with each other and transmitting, to said mediate server, the object identifier received by said object identifier reception means and a service code corresponding to the object identifier;
data reception means for receiving data from said mediate server; and
application server data transmission means for transmitting, to said client terminal data reception means, the data received by said data reception means, and
said mediate server comprises:
data storage means for storing object identifiers, service codes, and data in correspondence with each other;
code reception means for receiving the object identifier and service code from said code transmission means;
data search means for extracting, from said data storage means, data corresponding to the object identifier and service code received by said code reception means; and
data transmission means for transmitting, to said data reception means, the data extracted by said data search means.

23. A data processing device according to claim 3, **characterized in that**
said client terminal, said application server, and a mediate server are connected through a communication network,
said client terminal comprises:
in addition to said identifier reading means for reading an object identifier recorded on a recording medium and indicating an identifier unique to each recording medium,
object identifier transmission means for transmitting, to said mediate server, the object identifier read by said identifier reading means,
said mediate server comprises:
data storage means for storing object identifiers, data, and service codes each serving as information uniquely indicating an application program to process the data in correspondence with each other;
object identifier reception means for receiving the object identifier from said object identifier transmission means;
data search means for extracting, from said data storage means, a service code and data corresponding to the object identifier received by said object identifier reception means; and
data transmission means for transmitting, to said application server, the service code and data extracted by said data search means, and
said application server comprises:
data reception means for receiving the service code and data from said data transmission means; and
application program execution means for executing an application program indicated by the service code received by said data reception means to process the data received by said data reception means.

24. A data processing method **characterized by** comprising the steps of:
receiving a signal of an object identifier uniquely assigned to an object; and
executing a plurality of application programs corresponding to the received object identifier.

25. A data processing method according to claim 24, **characterized by** further comprising the step of reading an object identifier recorded on a recording medium and indicating an identifier unique to each recording medium,
wherein the step of executing the plurality of application programs comprises executing the application programs on the basis of the read object identifier.

26. A data processing method according to claim 24, **characterized in that** the application program execution step comprises
receiving a service code serving as information uniquely indicating an application program to process data, and
processing data corresponding to the object identifier in correspondence with a set of an object identifier and service code.

27. A data processing method according to claim 24, **characterized by** further comprising data storage means for storing data in correspondence with object identifiers and application programs,
wherein the method further comprises the steps of:
extracting, from the data storage means, data corresponding to the object identifier; and
inputting the extracted data to the application program.

28. A data processing method according to claim 24, **characterized by** further comprising a client terminal, a server, and a communication line arranged between the client terminal and the server,
wherein the client terminal comprises the step of reading at least the object identifier, and
the server comprises the step of storing service codes each serving as information uniquely indicating an application program and data corresponding to the object identifiers in correspondence with each other.

29. A data processing program **characterized by** causing a computer to execute:
processing of receiving a signal of an object identifier uniquely assigned to an object; and
executing a plurality of application programs corresponding to the received object identifier.

30. A data processing program **characterized by** causing a computer to execute:
processing of reading an object identifier recorded on a recording medium and indicating an identifier unique to each recording medium;
processing of transmitting, to another computer, the object identifier and a service code serving as information uniquely indicating an application program to process data;
processing of receiving data from the other computer; and
processing of inputting the received data to an application program indicated by the service code.
